(19) Europäisches Patentamt
European Patent Office
Office européen des brevets

(11) EP 3 957 697 A1

(12) # EUROPÄISCHE PATENTANMELDUNG

(43) Veröffentlichungstag:
**23.02.2022 Patentblatt 2022/08**

(21) Anmeldenummer: **21192047.5**

(22) Anmeldetag: **19.08.2021**

(51) Internationale Patentklassifikation (IPC):
***C09J 7/25*** *(2018.01)* ***C09J 7/26*** *(2018.01)*
***C09J 7/38*** *(2018.01)*

(52) Gemeinsame Patentklassifikation (CPC):
**C09J 7/25; C09J 7/26; C09J 7/385; C09J 7/387;**
C09J 2301/412; C09J 2475/006

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **19.08.2020 DE 102020210505**
**19.08.2020 DE 102020210503**

(71) Anmelder: **tesa SE**
**22848 Norderstedt (DE)**

(72) Erfinder:
- **CZERWONATIS, Franziska**
**22393 Hamburg (DE)**
- **LOHMANN, Franciska**
**22523 Hamburg (DE)**

(74) Vertreter: **tesa SE**
**Hugo-Kirchberg-Straße 1**
**22848 Norderstedt (DE)**

(54) **KLEBEBAND MIT POLYURETHANTRÄGER**

(57) Die vorliegende Erfindung betrifft ein Klebeband umfassend mindestens einen Träger einer Dicke von 20 bis 250 µm, vorzugsweise 50 bis 150 µm, der mindestens eine Schicht (i) auf Basis von, vorzugsweise unvernetztem, thermoplastischem Polyurethan enthält, die mittels Extrusion hergestellt worden ist, wobei das Polyurethan auf aromatischem Polyisocyanat, wie insbesondere aromatischem Diisocyanat basiert, oder (ii) auf Basis von, vorzugsweise unvernetztem, Polyurethan enthält, die aus einer Dispersion hergestellt worden ist, wobei auf dem Träger mindestens einseitig, vorzugsweise beidseitig, eine Haftklebemasseschicht angeordnet ist. Die Erfindung betrifft außerdem Verfahren zur Herstellung des Klebebands sowie dessen Verwendung zur Verklebung von Bauteilen in elektrischen, elektronischen, optischen oder feinmechanischen Geräten, wie insbesondere von Fenstern oder Linsen in Gehäusen feinmechanischer, optischer und/oder elektronischer Geräte.

Figur 1:

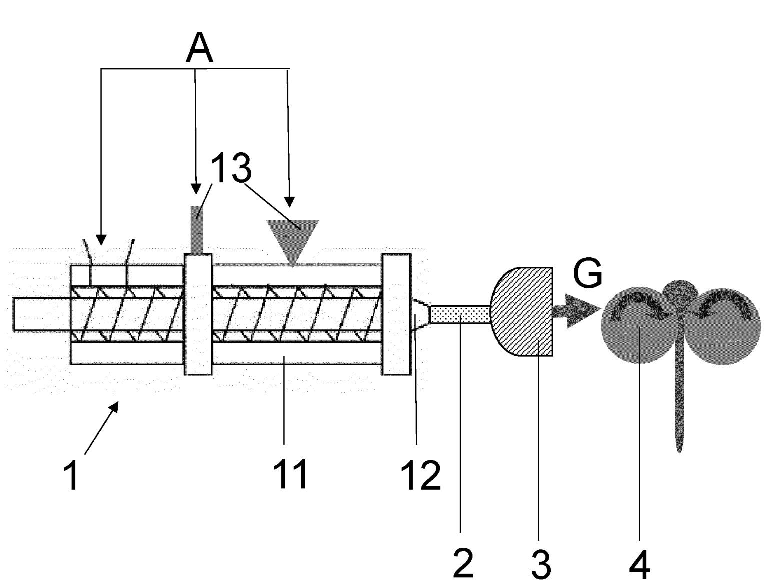


EP 3 957 697 A1

**Beschreibung**

**Klebeband mit Polyurethanträger**

Die vorliegende Erfindung betrifft ein Klebeband, das einen Träger auf Polyurethanbasis enthält, Verfahren zur Herstellung des Klebebands sowie dessen Verwendung zur Verklebung von Bauteilen in elektrischen, elektronischen, optischen oder feinmechanischen Geräten.

DE 10 2012 223 670 A1 beschreibt einen Haftklebfolienstreifen aus mindestens zwei, insbesondere drei Schichten, der sich durch dehnendes Verstrecken im Wesentlichen in der Verklebungsebene rückstands- und zerstörungsfrei wieder ablösen lässt, mit einem Träger, auf dem zumindest einseitig eine erste, außenliegende Klebemassenschicht vorhanden ist, wobei die Klebemassenschicht aus einer Klebmasse besteht, die auf Basis von Vinylaromatenblockcopolymeren und Klebharzen aufgebaut ist, wobei zu mindestens 75 % (bezogen auf den Gesamtharzanteil) ein Harz gewählt wird mit einem DACP (diacetone alcohol cloud point) von größer -20 °C, bevorzugt größer 0 °C, und der Träger mindestens eine Schicht aufweist, die aus einem Polyurethan besteht mit einer Reißdehnung von mindestens 100 % und einem Rückstellvermögen von über 50 %.

DE 10 2015 206 076 A1 beschreibt einen Haftklebstreifen, der sich durch dehnendes Verstrecken im Wesentlichen in der Verklebungsebene rückstands- und zerstörungsfrei wieder ablösen lässt, aus einer oder mehreren Klebemassenschichten, die allesamt aus einer Haftklebemasse bestehen, die mit Mikroballons geschäumt ist, und gegebenenfalls aus einer oder mehreren Zwischenträgerschichten, dadurch gekennzeichnet, dass der Haftklebestreifen ausschließlich aus den genannten Klebemassenschichten und gegebenenfalls vorhandenen Zwischenträgerschichten besteht und die eine äußere obere und eine äußere untere Fläche des Haftklebestreifens von der oder den genannten Klebemassenschichten gebildet werden.

EP 30 75 772 A1 beschreibt einen Haftklebstreifen, der sich durch dehnendes Verstrecken im Wesentlichen in der Verklebungsebene rückstands- und zerstörungsfrei wieder ablösen lässt, umfassend eine Klebemassenschicht, wobei die Klebemassenschicht aus einer Haftklebemasse besteht, die auf Basis von Vinylaromatenblockcopolymeren und Klebharzen aufgebaut ist, wobei zu mindestens 75 Gew.-% (bezogen auf den Gesamtharzanteil) ein Harz gewählt wird mit einem DACP (diacetone alcohol cloud point) von größer -20 °C, bevorzugt größer 0 °C, und einer Erweichungstemperatur (Ring & Ball) von größer gleich 70 °C, vorzugsweise größer gleich 100 °C, und wobei die Haftklebemasse geschäumt ist.

EP 3623400 A1 beschreibt einen Polyurethanschaum, erhältlich durch mechanisches Schäumen eines Ausgangsgemisches aus einer Polyurethan-Dispersion, wobei das Polyurethan aus mindestens einer Polyisocyanatkomponente und mindestens einer Polyolkomponente zusammengesetzt ist, und mindestens eines Tensids, dadurch gekennzeichnet, dass die Polyolkomponente oder mindestens eine der Polyolkomponenten mindestens ein Comonomer mit Flammschutzwirkung enthaltend zwei Hydroxygruppen aufweist.

WO 2015 135134 A1 beschreibt ein durch dehnendes Verstrecken ablösbares Klebeband, umfassend einen Träger mit einer ersten Oberfläche und einer zweiten Oberfläche, wobei der Träger aus vernetztem thermoplastischem Polyurethan hergestellt ist, und Haftklebstoff, der auf mindestens einer der ersten und zweiten Oberflächen angeordnet ist, wobei der Haftklebstoff aus einem Acrylcopolymer gebildet ist, das ein Polyurethan mit endständiger funktioneller Gruppe umfasst, wobei das Klebeband eine Dicke im Bereich zwischen 0,05 und 0,10 mm und eine Dehnbarkeit in Längsrichtung zwischen 850% und 2200% aufweist, wobei das Klebeband fest mit einem Substrat verbunden werden kann und danach von diesem entfernt werden kann, nachdem es in einem Winkel von 90 ° oder mehr Grad von der Oberfläche des Substrats gestreckt wurde, ohne dass der Träger vor dem Entfernen des Klebebandes vom Substrat bricht und ohne wesentliche Rückstände des Haftklebstoffs auf dem Substrat zu hinterlassen.

WO 2020 035761 A1 beschreibt einen Oberflächenfilm enthaltend eine Basisschicht, wobei die Basisschicht einen thermoplastischen Polyurethanfilm umfasst, der ein Reaktionsprodukt eines Reaktionsgemisches enthält, das ein Diisocyanat, ein Polyesterpolyol mit einer Schmelztemperatur von mindestens etwa 30 ° C und einen Diolkettenverlängerer enthält.

KR 101680827 B1 beschreibt ein Verfahren zur Herstellung einer schockresistenten Schaumstruktur, umfassend die Schritte:

Herstellen einer Schaumzusammensetzung, in der vorexpandierte Teilchen und eine Bindemittelzusammensetzung gemischt werden, Aufbringen der Schaumzusammensetzung auf ein Substrat, Durchführen einer vorläufigen Wärmebehandlung an der aufgebrachten Schaumzusammensetzung, um einen Vorschaum zu bilden, und Umwandeln des Vorschaums durch Wärmebehandlung in eine hitzebeständige Schaumstruktur aus schockresistenten Partikeln, wobei die vorexpandierten Partikel expandiert werden.

US 2017121573 A1 beschreibt eine Klebstoffformulierung, umfassend 50 bis 99% Klebstoffkomponente, 0 bis 3% Vernetzer, 0 bis 3% Antioxidans und 0,1 bis 10% expandierbare Mikrokugeln, die in der Formulierung verteilt sind.

DE 10 2016 209 707 A1 betrifft einen Haftklebestreifen aus drei Schichten, umfassend (a) eine innenliegende Schicht F aus einem Folienträger, (b) eine Schicht SK1 aus einer selbstklebenden Masse, die auf einer der Oberflächen

der Folienträgerschicht F angeordnet ist und die auf einer geschäumten Acrylatmasse basiert, und (c) eine Schicht SK2 aus einer selbstklebenden Masse, die auf der der Schicht SK1 gegenüberliegenden Oberfläche der Folienträgerschicht F angeordnet ist und die auf einer geschäumten Acrylatmasse basiert.

Ausgehend vom Stand der Technik besteht somit die Aufgabe, die der vorliegenden Erfindung zugrunde liegt, insbesondere darin, ein Klebeband bereitzustellen, das eine hohe Schockresistenz (Schlagzähigkeit) sowie eine gute Wiederablösbarkeit aufweist und ferner im Stretching-Test nur geringfügig gedehnt wird.

Die Aufgabe wird durch ein Klebeband gemäß Anspruch 1 gelöst, d.h. durch ein Klebeband umfassend mindestens einen Träger einer Dicke von 20 bis 250 µm, vorzugsweise von 50 bis 150 µm, der mindestens eine Schicht

(i) auf Basis von, vorzugsweise unvernetztem, thermoplastischem Polyurethan enthält, die mittels Extrusion hergestellt worden ist, wobei das Polyurethan auf aromatischem Polyisocyanat, wie insbesondere aromatischem Diisocyanat basiert, oder

(ii) auf Basis von, vorzugsweise unvernetztem, Polyurethan enthält, die aus einer Dispersion hergestellt worden ist,

wobei auf dem Träger mindestens einseitig, vorzugsweise beidseitig, eine Haftklebemasseschicht angeordnet ist. Das Klebeband kann daher ein einseitiges Klebeband oder ein doppelseitiges Klebeband sein, vorzugsweise ist es doppelseitig.

In einer bevorzugten Ausführungsform sind die Haftklebemasseschichten direkt auf dem Träger angeordnet und somit mit dem Träger in Kontakt.

In einer weiteren bevorzugten Ausführungsform sind die auf dem Träger angeordneten Haftklebemasseschichten selbst wiederum mit einer Funktionsschicht beschichtet. Die Haftklebmasseschichten befinden sich dabei jeweils außen, so dass sich ein ein- oder doppelseitiges Klebeband ergibt. Die Funktionsschicht ist dementsprechend jeweils dem erfindungsgemäßen Träger auf Basis von Polyurethan zugewandt. Die Funktionsschicht kann unterschiedliche Funktionen ausüben. Beispielsweise kann es sich um eine zusätzliche Trägerschicht handeln, die die Funktion aufweist, dass sie eine Migration zwischen Haftklebemassenschicht und Trägerschicht oder umgekehrt verhindert, beispielsweise gegen eine Klebharzmigration sperrt. Weiterhin kann eine zusätzliche Trägerschicht eine solche Funktion aufweisen, dass sie den Prozess des Stanzens von beispielsweise filigranen Formteilen mit dünnen Stegbreiten verbessert. Bei einer solchen zusätzlichen Trägerschicht kann es sich zum Beispiel um eine PET-Folie handeln, die ausreichend Steifigkeit und Festigkeit aufweist, damit sich die gestanzten Formteile, beispielsweise während des Stanzprozesses oder während des Applikationsprozesses, nicht verstrecken oder verformen. Die erfindungsgemäße Funktionsschicht hat typischerweise eine Dicke von 5 bis 100 µm, vorzugsweise 10 bis 50 µm. Das Klebeband weist typischerweise eine Schlagzähigkeit in z-Richtung gemäß dem DuPont-Test in z-Richtung und dem Droptower-Test von jeweils mindestens 1,00 J, eine gute Wiederablösbarkeit (d.h. im Wesentlichen keine Reißer und höchstens leichte Klebstoffrückstände, die mit Ethanol leicht entfernbar sind, was in unserem Test einem Werte von mindestens 4 entspricht) und eine Stretching-Distanz von höchstens 0,15 mm im Stretching-Test auf.

Die Erfindung betrifft außerdem ein Verfahren zur Herstellung eines Klebebands, bei dem ein wie vorstehend definierter Träger auf Basis von, vorzugsweise unvernetztem, thermoplastischem Polyurethan, das auf aromatischem Polyisocyanat basiert,

(a) auf einen temporären Träger extrudiert wird und mindestens einseitig, vorzugsweise beidseitig, mit einer Haftklebemasse kombiniert wird, oder

(b) auf eine Haftklebemasseschicht extrudiert wird, wobei vorzugsweise der Träger auf der der Haftklebemasseschicht gegenüber liegenden Seite mit einer weiteren Haftklebemasse kombiniert wird,

so dass sich ein Klebeband ergibt.

Das Verfahren schließt auch Ausführungsformen ein, bei denen der Träger ein- oder beidseitig mit einer Haftklebemasseschicht kombiniert wird, die selbst wiederum mit einer Funktionsschicht beschichtet ist. Die Haftklebmasseschichten befinden sich dabei jeweils außen, so dass sich ein ein- oder doppelseitiges Klebeband ergibt. Die Funktionsschicht ist dementsprechend jeweils dem erfindungsgemäßen Träger auf Basis von Polyurethan zugewandt.

Ebenso schließt das Verfahren Ausführungsformen ein, bei denen der Träger auf eine Haftklebemasseschicht extrudiert wird, die selbst wiederum mit einer Funktionsschicht beschichtet ist. Die Haftklebmasseschicht befindet sich dabei außen, so dass sich ein einseitiges Klebeband ergibt. Die Funktionsschicht ist dementsprechend dem erfindungsgemäßen Träger auf Basis von Polyurethan zugewandt. Falls der Träger auf der der Haftklebemasseschicht gegenüber liegenden Seite mit einer weiteren Haftklebemasse kombiniert wird, kann auch diese selbst wiederum mit einer Funktionsschicht beschichtet sein; die Haftklebmasseschicht befindet sich dabei außen, so dass sich ein doppelseitiges Klebeband ergibt. Die Funktionsschicht ist dementsprechend dem erfindungsgemäßen Träger auf Basis von Polyurethan

zugewandt.

Die Funktionsschicht ist dabei vorzugsweise so definiert wie vorstehend als Bestandteil des erfindungsgemäßen Klebebands beschrieben.

Ferner betrifft die Erfindung ein Verfahren zur Herstellung eines Klebebands, bei dem eine Dispersion auf Basis von, vorzugsweise unvernetztem, Polyurethan

(a) auf einen temporären Träger beschichtet und getrocknet wird und der sich ergebende wie vorstehend definierte Träger mindestens einseitig, vorzugsweise beidseitig, mit einer Haftklebemasse kombiniert wird, oder

(b) auf eine Haftklebemasseschicht beschichtet und getrocknet wird, so dass sich ein Träger ergibt, der wie vorstehend definiert ist, wobei vorzugsweise der Träger auf der der Haftklebemasseschicht gegenüber liegenden Seite mit einer weiteren Haftklebemasse kombiniert wird,

so dass sich ein Klebeband ergibt.

Das Verfahren schließt auch Ausführungsformen ein, bei denen der sich ergebende Träger ein- oder beidseitig mit einer Haftklebemasseschicht kombiniert wird, die selbst wiederum mit einer Funktionsschicht beschichtet ist. Die Haftklebmasseschichten befinden sich dabei jeweils außen, so dass sich ein ein- oder doppelseitiges Klebeband ergibt. Die Funktionsschicht ist dementsprechend jeweils dem erfindungsgemäßen Träger auf Basis von Polyurethan zugewandt.

Ebenso schließt das Verfahren Ausführungsformen ein, bei denen die Dispersion auf Basis von Polyurethan auf eine Haftklebemasseschicht beschichtet und getrocknet wird, die selbst wiederum mit einer Funktionsschicht beschichtet ist. Die Haftklebmasseschicht befindet sich dabei außen, so dass sich ein einseitiges Klebeband ergibt. Die Funktionsschicht ist dementsprechend dem sich ergebenden erfindungsgemäßen Träger auf Basis von Polyurethan zugewandt. Falls der sich ergebende Träger auf der der Haftklebemasseschicht gegenüber liegenden Seite mit einer weiteren Haftklebemasse kombiniert wird, kann auch diese selbst wiederum mit einer Funktionsschicht beschichtet sein; die Haftklebmasseschicht befindet sich dabei außen, so dass sich ein doppelseitiges Klebeband ergibt. Die Funktionsschicht ist dementsprechend dem erfindungsgemäßen Träger auf Basis von Polyurethan zugewandt.

Die Funktionsschicht ist dabei vorzugsweise so definiert wie vorstehend als Bestandteil des erfindungsgemäßen Klebebands beschrieben.

Bevorzugte Ausführungsformen der Klebebänder und der Verfahren zu deren Herstellung finden sich in den abhängigen Ansprüchen. Die bevorzugten Ausführungsformen der Klebebänder sind zudem auch bevorzugte Ausführungsformen der Verfahren zu deren Herstellung.

Die Erfindung betrifft außerdem die Verwendung eines erfindungsgemäßen Klebebands zur Verklebung von Bauteilen in elektronischen, optischen oder feinmechanischen Geräten, und insbesondere zur Verklebung von Fenstern oder Linsen in Gehäusen feinmechanischer, optischer und/oder elektronischer Geräte.

Typische Konfektionierformen der erfindungsgemäßen Klebebänder sind Klebebandrollen - die Klebebänder, insbesondere in Bahnform, können in Form von Rollen, also in Form von archimedischen Spiralen auf sich selbst aufgerollt, hergestellt werden - sowie Klebestreifen, wie sie zum Beispiel in Form von Stanzlingen erhalten werden.

Vorzugsweise weisen alle Schichten im Wesentlichen die Form eines Quaders auf. Weiter vorzugsweise sind alle Schichten vollflächig miteinander verbunden.

Der allgemeine Ausdruck "Klebeband", synonym auch "Klebestreifen" genannt, umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten.

Die Klebebänder weisen somit eine Längsausdehnung (x-Richtung) und eine Breitenausdehnung (y-Richtung) auf. Die Klebebänder weisen auch eine senkrecht zu beiden Ausdehnungen verlaufende Dicke (z-Richtung) auf, wobei die Breitenausdehnung und Längsausdehnung um ein Vielfaches größer sind als die Dicke. Die Dicke ist über die gesamte durch Länge und Breite bestimmte Flächenausdehnung der Klebebänder möglichst gleich, vorzugsweise exakt gleich.

Die erfindungsgemäßen Klebebänder liegen insbesondere in Bahnform vor. Unter einer Bahn wird ein Objekt verstanden, dessen Länge (Erstreckung in x-Richtung) um ein Vielfaches größer ist als die Breite (Erstreckung in y-Richtung) und die Breite entlang der gesamten Länge in etwa vorzugsweise genau gleichbleibend ausgebildet ist.

In doppelseitigen Klebebändern sind die beiden Haftklebemasseschichten hinsichtlich ihrer Zusammensetzung vorzugsweise identisch. Alternativ können sie sich hinsichtlich ihrer Zusammensetzung auch unterscheiden. Außerdem weisen in doppelseitigen Klebebändern die beiden Haftklebemasseschichten vorzugsweise die gleiche Dicke auf. Alternativ können sie sich hinsichtlich ihrer Dicke auch unterscheiden.

Vorteilhaft können die äußeren, frei liegenden Flächen der Klebemasseschichten der erfindungsgemäßen Klebebänder mit antiadhäsiven Materialien ausgerüstet sein wie ein Trennpapier oder eine Trennfolie, auch Liner genannt. Bei einem Liner kann es sich auch um mindestens einseitig, vorzugsweise beidseitig, antiadhäsiv beschichtetes

Material handeln, wie beispielsweise beidseitig silikonisiertes Material. Ein Liner, bzw. allgemeiner formuliert ein temporärer Träger, ist nicht Bestandteil eines Klebebands, sondern nur ein Hilfsmittel zu dessen Herstellung, Lagerung und/oder für die Weiterverarbeitung durch Stanzen. Darüber hinaus ist ein Liner im Gegensatz zu einem permanenten Träger nicht fest mit einer Klebstoffschicht verbunden, sondern fungiert vielmehr als temporärer Träger, d.h. als Träger, der von der Klebstoffschicht abziehbar ist. "Permanente Träger" werden in der vorliegenden Anmeldung synonym auch einfach "Träger" genannt.

Da die erfindungsgemäßen Klebebänder Haftklebemassen enthalten, werden die erfindungsgemäßen Klebebänder auch als Haftklebebänder bezeichnet.

Erfindungsgemäße Träger:

Das (thermoplastische) Polyurethan der Träger der erfindungsgemäßen Klebebänder ist vorzugsweise unvernetzt. Im Sinne der vorliegenden Anmeldung ist mit unvernetztem Polyurethan ein solches Polyurethan gemeint, das nicht kovalent vernetzt ist, d.h. nicht chemisch vernetzt ist. In einem unvernetzten Polyurethan im Sinne der vorliegenden Anmeldung können allerdings unabhängig davon andere Vernetzungsarten vorliegen, wie zum Beispiel koordinative Vernetzungen, Wasserstoffbrückenbindungen, Verschlaufungen und/oder physikalische Vernetzungen über Kristallite, sofern es sich um ein semikristallines Polyurethan handelt. In einer bevorzugten Ausführungsform ist auf dem unvernetzten Träger mindestens einseitig, vorzugsweise beidseitig, eine Haftklebemasseschicht angeordnet, die aus einer Haftklebemasse auf Basis von Vinylaromatenblockcopolymer, wie insbesondere Styrolblockcopolymer, besteht. Ebenso bevorzugt ist auf dem unvernetzten Träger mindestens einseitig, vorzugsweise beidseitig, eine Haftklebemasseschicht angeordnet, die aus einer Haftklebemasse auf Polyacrylat-Basis besteht. In einer weiteren bevorzugten Ausführungsform ist auf dem unvernetzten Träger mindestens einseitig, vorzugsweise beidseitig, eine Haftklebemasseschicht angeordnet, die aus einer Haftklebemasse besteht, die auf einem Blend aus (i) Polyacrylat und (ii) mit dem Polyacrylat im Wesentlichen nicht mischbarem Vinylaromatenblockcopolymer, wie insbesondere Styrolblockcopolymer, basiert, wobei vorzugsweise der Blend zu 50 bis 90 Gew.-%, bevorzugt 65 bis 80 Gew.-%, aus dem Polyacrylat besteht und zu 10 bis 50 Gew.-%, bevorzugt 20 bis 35 Gew.-%, Vinylaromatenblockcopolymer besteht.

In einer alternativen Ausführungsform ist das (thermoplastische) Polyurethan der Träger vernetzt, d.h. kovalent vernetzt. Dies führt insbesondere zu einer verbesserten Wärmescherfestigkeit der Klebebänder. Die Vernetzung erfolgt vorzugsweise mit mehrfunktionellen Isocynatverbindungen. In einer bevorzugten Ausführungsform ist auf dem vernetzten Träger mindestens einseitig, vorzugsweise beidseitig, eine Haftklebemasseschicht angeordnet, die aus einer Haftklebemasse auf Basis von Vinylaromatenblockcopolymer, wie insbesondere Styrolblockcopolymer, besteht. Ebenso bevorzugt ist auf dem vernetzten Träger mindestens einseitig, vorzugsweise beidseitig, eine Haftklebemasseschicht angeordnet, die aus einer Haftklebemasse auf Polyacrylat-Basis besteht. In einer weiteren bevorzugten Ausführungsform ist auf dem vernetzten Träger mindestens einseitig, vorzugsweise beidseitig, eine Haftklebemasseschicht angeordnet, die aus einer Haftklebemasse besteht, die auf einem Blend aus (i) Polyacrylat und (ii) mit dem Polyacrylat im Wesentlichen nicht mischbarem Vinylaromatenblockcopolymer, wie insbesondere Styrolblockcopolymer, basiert, wobei vorzugsweise der Blend zu 50 bis 90 Gew.-%, bevorzugt 65 bis 80 Gew.-%, aus dem Polyacrylat besteht und zu 10 bis 50 Gew.-%, bevorzugt 20 bis 35 Gew.-%, Vinylaromatenblockcopolymer besteht.

In einer bevorzugten Ausführungsform besteht der Träger aus der mindestens einen Schicht auf Basis von Polyurethan (die mittels Extrusion oder aus Dispersion hergestellt worden ist), besonders bevorzugt besteht der Träger aus genau einer solchen Schicht.

a) Träger auf Basis von thermoplastischem Polyurethan, hergestellt mittels Extrusion:

Wie vorstehend beschrieben, umfasst das Klebeband in einer Ausführungsform einen Träger einer Dicke von 20 bis 250 $\mu$m, vorzugsweise 50 bis 150 $\mu$m, der mindestens eine Schicht auf Basis von, vorzugsweise unvernetztem, thermoplastischem Polyurethan enthält, die mittels Extrusion hergestellt worden ist, wobei das Polyurethan auf aromatischem Polyisocyanat, wie insbesondere aromatischem Diisocyanat, basiert.

In der vorliegenden Anmeldung ist mit einem Polyurethan auf Basis von aromatischem Polyisocyanat typischerweise ein Polyurethan gemeint, bei dessen Herstellung die eingesetzte Isocyanatkomponente zu mindestens 50 Gew.-%, vorzugsweise mindestens 90 Gew.-% aus aromatischem Polyisocyanat besteht. Besonders bevorzugt besteht die eingesetzte Isocyanatkomponente im Wesentlichen aus aromatischem Polyisocyanat. Ein Polyisocyanat ist gemäß der vorliegenden Anmeldung eine Isocyanatverbindung mit mindestens zwei NCO-Gruppen. Insbesondere weist sie genau zwei NCO-Gruppen auf, d.h. ist ein Diisocyanat.

Mit einer Schicht auf Basis von thermoplastischem Polyurethan ist zudem typischerweise eine Schicht gemeint, deren Anteil an thermoplastischem Polyurethan mindestens 50 Gew.-% beträgt. Vorzugsweise beträgt der Anteil an thermoplastischem Polyurethan in der Schicht mindestens 90 Gew.-%, insbesondere besteht die Schicht im Wesentlichen aus thermoplastischem Polyurethan.

Der mittels Extrusion hergestellte Träger auf Basis von thermoplastischem Polyurethan enthält, jeweils bezogen auf die gesamte Masse des Trägers, vorzugsweise (insgesamt) weniger als 0,3 Gew.-%, bevorzugter weniger als 0,1 Gew.-% Prozesshilfsmittel wie Wachse, Gleitmittel und/oder Antiblockmittel (zum Beispiel $SiO_2$-Partikel), wobei der Träger insbesondere frei von Prozesshilfsmitteln ist. Mit den vorstehenden Gewichtsanteilen Prozesshilfsmittel ist jeweils die Gesamtmenge an Prozesshilfsmittel im Träger gemeint, bezogen auf die gesamte Masse des Trägers. In einer weiteren bevorzugten Ausführungsform sind im Träger auf Basis von (i) thermoplastischem Polymer weniger als 0,1 Gew.-% Wachse, weniger als 0,1 Gew.-% Gleitmittel und/oder weniger als 0,1 Gew.-% Antiblockmittel enthalten, jeweils bezogen auf die gesamte Masse des Trägers. Alterungsschutzmittel gelten gemäß der vorliegenden Anmeldung nicht als Prozesshilfsmittel.

Die Schicht des Trägers auf Basis von thermoplastischem Polyurethan weist zudem vorzugsweise eine Shore-Härte A von höchstens 87, bevorzugter höchstens 85 und insbesondere von weniger als 70 auf. Beispielsweise beträgt die Shore-Härte zwischen 55 und 70. In einer alternativ bevorzugten Ausführungsform beträgt die Shore-Härte zwischen 70 und 85.

Das thermoplastische Polyurethan der mindestens einen Trägerschicht ist vorzugsweise Polyester-basiert (kann aber auch Polyether-basiert sein, wie zum Beispiel auf Poly-THF als Polyol basieren). Das thermoplastische Polyurethan auf Polyesterbasis bzw. Polyetherbasis ist typischerweise thermoplastisches Polyurethan auf Basis von aliphatischem Polyester bzw. aliphatischem Polyether. Die Glasübergangstemperatur ($T_g$) der weichen Molekülkette des thermoplastischen Polyurethans liegt vorzugsweise zwischen -20 °C und 40 °C und die Glasübergangstemperatur der harten Molekülkette des thermoplastischen Polyurethans liegt vorzugsweise zwischen 60 bis 110 °C. Das thermoplastische Polyurethan hat typischerweise eine Reißfestigkeit von über 20, vorzugsweise über 35 MPa und die Shore-Härte A beträgt vorzugsweise zwischen 55 und 85, wie insbesondere zwischen 55 und 70. In einer alternativ bevorzugten Ausführungsform beträgt die Shore-Härte zwischen 70 und 85.

Das thermoplastische Polyurethan ist vorzugsweise ein Reaktionsprodukt eines Reaktionsgemisches, das mindestens ein Diisocyanat, mindestens ein Polyesterpolyol (oder Polyetherpolyol) und gegebenenfalls mindestens einen Kettenverlängerer enthält, wobei das Polyesterpolyol (oder Polyetherpolyol) typischerweise eine Schmelztemperatur von mindestens 30 °C hat, wie zum Beispiel mindestens 100 °C oder mindestens 200 °C. Die Wahl einer geeigneten Schmelztemperatur kann dazu beitragen, den Kristallinitätsgrad der Schicht zu erhöhen. Der Kristallinitätsgrad kann durch Differentialscanningkalorimetrie (DSC) bestimmt werden und wird als Bruchteil der Kristallinität im thermoplastischen Polyurethanfilm ausgedrückt.

Der Anteil an Diisocyanat in dem Reaktionsgemisch beträgt vorzugsweise 0,5 bis 47 Gew.-%, bevorzugter 1 bis 40 Gew.-% und insbesondere 10 bis 25 Gew.-%. Die Menge des Diisocyanats im Reaktionsgemisch kann auch als Isocyanatindex ausgedrückt werden. Unter einem Isocyanatindex kann allgemein verstanden werden, dass er sich auf das Verhältnis der äquivalenten Menge der verwendeten funktionellen Isocyanatgruppen zur äquivalenten Menge der funktionellen Hydroxygruppen bezieht. Der Isocyanatindex des Reaktionsgemischs liegt vorzugsweise in einem Bereich von 0,99 bis 1,20, wie 1,00 bis 1,10.

Vorzugsweise handelt es sich beim Diisocyanat um ein Diisocyanat mit der Struktur aus Formel I

$$0=C=N-R-N=C=0 \qquad \text{(Formel I)},$$

worin R ausgewählt ist aus substituiertem oder unsubstituiertem ($C_1$-$C_{40}$)-Alkylen, ($C_2$-$C_{40}$)-Alkenylen, ($C_4$-$C_{20}$)-Arylen, ($C_4$-$C_{20}$)-Arylen-($C_1$-$C_{40}$)-Alkylen-($C_4$-$C_{20}$)-Arylen, ($C_4$-$C_{20}$)-Cycloalkylen und ($C_4$-$C_{20}$)-Aralkylen. In weiteren Beispielen wird das Diisocyanat ausgewählt aus Dicyclohexylmethan-4,4'-diisocyanat, Isophorondiisocyanat, Hexamethylendiisocyanat, 1,4-Phenylendiisocyanat, 1,3-Phenylendiisocyanat, m-Xylylendiisocyanat, Toluylen-2,4-diisocyanat, Toluol-2,4-diisocyanat, Toluylen-2,6-diisocyanat, Poly(hexamethylendiisocyanat), 1,4-Cyclohexylendiisocyanat, 4-Chlor-6-methyl-1,3-phenylendiisocyanat, Hexamethylendiisocyanat, Diphenylmethan-4,4'-diisocyanat, 1,4-Diisocyanatobutan, 1,8-Diisocyanatooctan, 2,6-Toluoldiisocyanat, 2,5-Toluoldiisocyanat, 2,4-Toluoldiisocyanat, m-Phenylendiisocyanat, p-Phenylendiisocyanat, Methylenbis(o-chlorphenyldiisocyanat), Methylendiphenylen-4,4'-diisocyanat, (4,4'-Diisocyanato-3,3',5,5'-tetraethyl)diphenylmethan, 4,4'-Diisocyanato-3,3'- Dimethoxy-biphenyl(o-dianisidindiisocyanat), 5-Chlor-2,4-toluoldiisocyanat, 1-Chlormethyl-2,4-diisocyanatobenzol, Tetramethyl-m-xylylendiisocyanat, 1,6-Diisocyanatohexan, 1,12-Diisocyanatododecan, 2-Methyl-1,5-diisocyanatopentan, Methylendicyclohexylen-4,4'-diisocyanat, 3-Isocyanatomethyl-3,5,5-trimethylcyclohexylisocyanat, 2,2,4-Trimethylhexyldiisocyanat oder einer Mischung davon, wobei erfindungsgemäß das Diisocyanat typischerweise zu mindestens 50 Gew.-%, vorzugsweise mindestens 90 Gew.-% aus aromatischem Polyisocyanat besteht. Besonders bevorzugte Diisocyanate sind Diphenylmethan-4,4'-diisocyanat (MDI), Hexandiisocyanat (HDI), Isophorondiisocyanat (IPDI) und Hexamethylendiisocyanat (HMDI) eingesetzt, wie insbesondere MDI.

Der Anteil an Polyesterpolyol (oder Polyetherpolyol) im Reaktionsgemisch liegt vorzugsweise im Bereich von 43 Gew.-% bis 70 Gew.-%, vorzugsweise 50 Gew.-% bis 60 Gew.-%.

Das Polyesterpolyol kann eine beliebige geeignete Anzahl an Hydroxylgruppen enthalten. Beispielsweise kann

das Polyesterpolyol vier Hydroxylgruppen oder drei Hydroxylgruppen enthalten. Das Polyesterpolyol kann sogar zwei Hydroxylgruppen enthalten, so dass das Polyesterpolyol ein Polyesterdiol ist. Im Allgemeinen kann das Polyesterpolyol ein Produkt einer Kondensationsreaktion wie einer Polykondensationsreaktion sein. Das Polyesterpolyol wird jedoch typischerweise nicht über ein Ringöffnungspolymerisationsreaktionsprodukt hergestellt.

In Beispielen, in denen Polyesterpolyol gemäß einer Kondensationsreaktion hergestellt wird, kann die Reaktion zwischen einer oder mehreren Carbonsäuren und einem oder mehreren Polyolen stattfinden. Ein Beispiel einer geeigneten Carbonsäure umfasst eine Carbonsäure gemäß Formel II mit der Struktur:

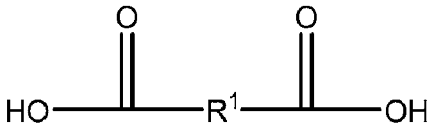

(Formel II)

In der Formel II wird $R^1$ ausgewählt aus substituiertem oder unsubstituiertem ($C_1$-$C_{40}$)-Alkylen, ($C_2$-$C_{40}$)-Alkylen, ($C_2$-$C_{40}$)-Alkenylen, ($C_4$-$C_{20}$)-Arylen, ($C_4$-$C_{20}$)-Cycloalkylen und ($C_4$-$C_{20}$)-Aralkylen. Beispiele für geeignete Carbonsäuren umfassen Glykolsäure (2-Hydroxyethansäure), Milchsäure (2-Hydroxypropansäure), Bernsteinsäure (Butandisäure), 3-Hydoxybutansäure, 3-Hydroxypentansäure, Terephthalsäure (Benzol-1,4-Dicarbonsäure), Naphthalindicarbonsäure, 4-Hydroxybenzoesäure, 6-Hydroxynaphtalan-2-carbonsäure, Oxalsäure, Malonsäure (Propandisäure), Adipinsäure (Hexandisäure), Pimelsäure (Heptandisäure), Ethonsäure, Suberinsäure (Octandisäure), Azelainsäure (Nonandisäure), Sebacinsäure (Decandisäure), Glutarsäure (Pentandisäure), Dodecandisäure, Brassylsäure, Thapsinsäure, Maleinsäure, Fumarsäure, Glutaconsäure, 2-Decensäure, Muconsäure, Glutinsäure, Citraconsäure, Mesaconsäure, Itaconsäure, Äpfelsäure (2-Hydroxybutandisäure), Asparaginsäure (2-Aminobutandisäure), Glutaminsäure (2-Aminopentandisäure), Weinsäure (2,3-Dihydroxybutandisäure), Diaminopimelinsäure, Saccharinsäure,, Mesoxalsäure, Oxalessigsäure, Acetonicarbonsäure (3-Oxopentandisäure), Arabinarinsäure, Phthalsäure, Isophtalsäure, 2,6-Naphtalendicarbonsäure oder eine Mischung davon. Besonders bevorzugt ist Adipinsäure.

Ein Beispiel eines geeigneten Polyols umfasst ein Polyol gemäß Formel III mit der Struktur:

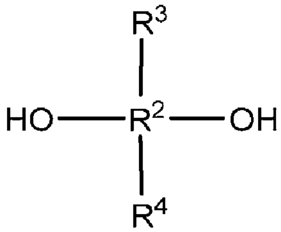

(Formel III)

In der Formel III wird $R^2$ ausgewählt aus substituiertem oder unsubstituiertem ($C_1$-$C_{40}$)-Alkylen, ($C_2$-$C_{40}$)-Alkenylen, ($C_4$-$C_{20}$)-Arylen, ($C_1$-$C_{40}$)-Acylen, ($C_4$-$C_{20}$)-Cycloalkylen, ($C_4$-$C_{20}$)Aralkylen und ($C_1$-$C_{40}$)-Alkoxylen, und $R^3$ und $R^4$ werden unabhängig voneinander ausgewählt aus -H, -OH, substituiertem oder unsubstituiertem ($C_1$-$C_{40}$)-Alkyl, ($C_2$-$C_{40}$)-Alkenyl, ($C_4$-$C_{20}$)-Aryl, ($C_1$-$C_{20}$)-Acyl, ($C_4$-$C_{20}$)-Cycloalkyl, ($C_4$-$C_{20}$)Aralkyl und ($C_1$-$C_{40}$)-Alkoxy. Besonders bevorzugt wird als Polyol Ethylneglykol, Butandiol, Hexandiol, Neopentylglykol oder eine Mischung davon eingesetzt.

Falls ein Kettenverlängerer eingesetzt wird, liegt er im Reaktionsgemisch vorzugsweise zu 1 bis 13 Gew.-% vor, insbesondere zu 2 bis 10 Gew.-%.

Der Diolkettenverlängerer hat typischerweise ein gewichtsmittleres Molekulargewicht von weniger als etwa 250 Dalton. Beispielsweise kann ein gewichtsmittleres Molekulargewicht des Diolkettenverlängerers in einem Bereich von 30 Dalton bis 250 Dalton liegen, vorzugsweise 50 Dalton bis 150 Dalton. Der Diolkettenverlängerer kann eine beliebige geeignete Anzahl von Kohlenstoffen enthalten. Zum Beispiel kann der Diolkettenverlängerer eine zahlenmittlere Anzahl von 2 Kohlenstoffen bis 20 Kohlenstoffen, vorzugsweise 3 Kohlenstoffen bis 10 Kohlenstoffen aufweisen. Solche Diolkettenverlängerer können zur Stärkung der TPU-basierten Schicht beitragen ("TPU" bzw. "PU" bedeuten in der vorliegenden Anmeldung "thermoplastisches Polyurethan" bzw. "Polyurethan"). Dies kann daran liegen, dass die relativ kurzen Ketten steifer sein können als ein längerkettiges Diol. Die kurzkettigen Diole können beispielsweise steifer sein, weil das kurzkettige Diol hinsichtlich der Rotation um die einzelnen Bindungen entlang der Kette stärker eingeschränkt ist. Beispiele für geeignete Diolkettenverlängerer umfassen Ethylenglykol, Diethylenglykol, Triethylenglykol, Tetraethylenglykol, Propylenglykol, Dipropylenglykol, Tripropylenglykol, 1,3-Propandiol, 1,3-Butandiol, 1,4-Butandiol, Neopentylglykol, 1,6-Hexandiol, 1,4-Cyclohexan-dimethanol oder eine Mischung davon. Besonders bevorzugt wird als Diolkettenverlängerer Butandiol eingesetzt.

Besonders bevorzugte Polyesterpolyole sind entsprechend Polyalkylenadipate.

Die TPU-basierte Trägerschicht, die mittels Extrusion hergestellt worden ist, ist vorzugsweise frei von Additiven wie Antiblockmitteln und Wachsen. Zudem weist das thermoplastische Polyurethan vorzugsweise keine kristalline Überstruktur auf (eine kristalline Überstruktur manifestiert sich in einem DSC-Peak > 210 °C).

Die TPU-basierte Trägerschicht ist in einer bevorzugten Ausführungsform geschäumt. Vorzugsweise erfolgt die Schäumung mit Mikroballons. Alternativ können auch chemische und/oder physikalische Treibmittel eingesetzt werden. Die nachstehenden Angaben zur Schäumung betreffend den Träger auf Basis von, vorzugsweise unvernetztem, (ii) Polyurethan, das aus einer Dispersion hergestellt worden ist, gelten analog für den (i) mittels Extrusion hergestellten TPU-basierten Träger.

Die Trägerschicht kann undurchsichtig, optisch klar oder transparent sein.

Zur Folienproduktion findet herkömmlich hauptsächlich der Blasfolien-Prozess von mehreren Schichten Anwendung. Hier werden eine PE-Schicht, d.h. Polyethylen-Schicht, und die eigentliche TPU-Schicht im Blasfolienprozess als coextrudierte Folie hergestellt (d.h. die PE-Schicht fungiert als Stützträger, der dem Extrudat die notwendige mechanische Stabilität gibt). Der PE-Stützträger wird in der Anwendung also vor der Herstellung des Klebebandes entfernt, d.h. stellt einen temporären Träger dar. Zur Herstellung einer entsprechenden Blasfolie sind aber zahlreiche Additive wie so genannte Antiblockmittel (z.B. Silikat-Partikel) und Gleitwachse notwendig, um ein Verblocken der PU Folie beim Zusammenlegen der Blase im Blasfolienprozess zu vermeiden. Das Problem ist hierbei, dass TPUs nach dem Aufschmelzen noch etwa 1h klebrig sind. Beide Tatsachen (kristalline Überstruktur und Additive, vor allem Silikat-Partikel) führen zu einer negativen Beeinflussung der mechanischen Eigenschaften. Sowohl die Silikatpartikel in der Folie (= Fehlstellen) als auch die kristalline Überstruktur (= harte nicht flexible Domänen) führen zu einer höheren Reißerneigung. Die Wachse führen zusätzlich zu Problemen mit Klebkraftreduktion (durch Migration der Wachse an die PSA-Oberfläche, d.h. die Oberfläche der Haftklebemasse) sowie zu Schwierigkeiten der Verankerung der PSA auf der Folie. Vorteilhaft für eine geringe Reißerneigung ist zusätzlich ein hohes Molekulargewicht des Polyurethan-Polymers (Erhöhung der Zähigkeit der Folie).

<u>b) Träger auf Basis von Polyurethan, hergestellt aus Dispersion:</u>

In einer alternativen Ausführungsform umfasst das Klebeband mindestens einen Träger einer Dicke von 20 bis 250 µm, vorzugsweise 50 bis 150 µm, der mindestens eine Schicht auf Basis von, vorzugsweise unvernetztem, Polyurethan enthält, die aus einer, vorzugsweise anionisch stabilisierten, Dispersion hergestellt worden ist. Das Polyurethan ist typischerweise thermoplastisch. Mit einer solchen Schicht auf Basis von Polyurethan ist typischerweise eine Schicht gemeint, deren Anteil an Polyurethan mindestens 50 Gew.-% beträgt. Vorzugsweise beträgt der Anteil an Polyurethan in der Schicht mindestens 90 Gew.-%.

Ebenso vorzugsweise sind im Träger auf Basis von Polyurethan weniger als 0,1 Gew.-% Wachse, weniger als 0,1 Gew.-% Gleitmittel und/oder weniger als 0,1 Gew.-% Antiblockmittel enthalten, jeweils bezogen auf die gesamte Masse des Trägers.

Vorzugsweise weist die Schicht auf Basis von Polyurethan zudem ein Modul bei 100% Dehnung von höchstens 1,8 MPa, bevorzugt höchstens 1,5 MPa auf.

Das Polyurethan (der eingesetzten PU-Dispersion) ist insbesondere aus mindestens einer Polyisocyanatkomponente und mindestens einer Polyolkomponente zusammengesetzt, d.h. das Reaktionsprodukt aus zumindest den genannten Komponenten.

Als Polyurethan-Dispersionen im Sinne der vorliegenden Erfindung können insbesondere die folgenden Dispersionen, optional in Kombination, zum Einsatz kommen:

a) anionisch stabilisierte aliphatische Polyester-Polyurethan-Dispersionen (Dispersionen auf Basis von Polyester und aliphatischem anionischem Isocyanat-Polyurethan). Hierzu gehören die folgenden Produkte, die von der Covestro AG vertrieben werden: Impranil® LP RSC 1380, DL 1537 XP, DL 1554 XP.

b) anionisch stabilisierte aliphatische Polyether-Polyurethane-Dispersionen. Zu diesen zählen die folgenden Produkte, die von der Covestro AG vertrieben werden: Impranil® 25 LP DSB 1069.

c) anionisch stabilisierte aliphatische Polycarbonat-Polyester-Polyurethan-Dispersionen. Zu diesen zählen die folgenden Produkte, die von der Covestro AG vertrieben werden: Impranil® DLU.

d) anionisch stabilisierte Polycarbonat-Polyurethan-Dispersionen. Zu diesen zählen die folgenden Produkte, die von der Covestro AG vertrieben werden: Impranil® DL 2288 XP.

Hierbei handelt es sich um Polyurethan-Dispersionen mit einem hohen Feststoffanteil (ungefähr 30 bis 70 Gew.-%, vorzugsweise 50 bis 60 Gew.-%). Alle vorstehend unter a) bis d) genannten Produkte sind frei von organischen Co-Lösungsmitteln.

Besonders bevorzugt ist dabei das Polyurethan aliphatisches Polyester-Polyurethan oder aliphatisches Polyether-Polyurethan, d.h. das Polyurethan basiert in diesem Fall auf aliphatischem Polyester oder aliphatischem Polyether.

Die Polyurethan-Dispersionen der vorliegenden Erfindung sind wässrig. Vorzugsweise sind sie frei von organischen Lösungsmitteln, sie können aber optional organische Lösungsmittel enthalten.

Die mindestens eine Polyisocyanatkomponente ist vorzugsweise ein Diisocyanat. Zum Einsatz kommen können aromatische Diisocyanate wie Toluoldiisocyanat (TDI) (besonders bevorzugt), p-Phenylendiisocyanat (PPDI), 4,4'-Diphenylmethandiisocyanat (MDI), p,p'-Bisphenyldiisocyanat (BPDI), oder insbesondere aliphatische Diisocyanate, wie Isophorondiisocyanat (IPDI), 1,6-Hexamethylenediisocynat (HDI), oder 4,4'-Diisocyanatodicyclohexylmethan (H12MDI). Ebenso kommen Diisocyanate mit Substituenten in Form von Halo-, Nitro-, Cyano-, Alkyl-, Alkoxy-, Haloalkyl-, Hydroxyl-, Carboxy-, Amido-, Amino- oder deren Kombinationen in Frage.

Insgesamt können alle an sich bekannten aliphatischen, cycloaliphatischen, araliphatischen und vorzugsweise die aromatischen mehrwertigen Isocyanate zum Einsatz kommen.

Im Einzelnen seien beispielhaft genannt: Alkylendiisocyanate mit 4 bis 12 Kohlenstoffatomen im Alkylenrest, wie 1,12-Dodecan-diisocyanat, 2-Ethyl-tetramethylen-1,4-diisocyanat, 2-Methyl-pentamethylen-1,5-diisocyanat, Tetramethylen-1,4-diisocyanat, und vorzugsweise Hexamethylen-1,6-diisocyanat; cycloaliphatische Diisocyanate wie Cyclohexan-1,3-diisocyanat und Cyclohexan-1,4-diisocyanat und beliebige Gemische dieser Isomeren, 1-Isocyanato-3,3,5-trimethyl-5-isocyanatomethylcyclohexan (Isophorondiisocyanat), 2,4- und 2,6 Hexahydrotoluylendiisocyanat sowie beliebige Gemische dieser Isomeren, 4,4'-, 2,4'- und 2,2'-Dicyclohexylmethandiisocyanat sowie beliebige Gemische dieser Isomeren, und vorzugsweise aromatische Di- und Polyisocyanate, wie beispielsweise 2,4- und 2,6-Toluylen-diisocyanat und die entsprechenden Isomerengemische, 4,4'-, 2,4'- und 2,2'-Diphenylmethandiisocyanat und die entsprechenden Isomerengemische, Mischungen aus 4,4'- und 2,4'- Diphenylmethandiisocyanaten, Polyphenylpolymethylenpolyisocyanate, Mischungen aus 4,4'-, 2,4'- und 2,2'-Diphenylmethandiisocyanaten und Polyphenylpolymethylenpolyisocyanaten (Roh-MDI) und Mischungen aus Roh-MDI und Toluylendiisocyanaten. Die organischen Di- und Polyisocyanate können einzeln oder in Form ihrer Mischungen eingesetzt werden.

Vorzugsweise weist die Polyisocyanatkomponente ein zahlenmittleres Molekulargewicht von 60 bis 50.000 g/mol, insbesondere von 400 bis 10.000 g/mol, bevorzugt von 400 bis 6.000 g/mol, auf.

Häufig werden auch sogenannte modifizierte mehrwertige Isocyanate, d. h. Produkte, die durch chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat-, Uretdion- und/oder Urethangruppen enthaltende Di- und/oder Polyisocyanate. Im Einzelnen kommen beispielsweise in Betracht: Urethangruppen enthaltende organische, vorzugsweise aromatische Polyisocyanate mit NCO-Gehalten von 33,6 bis 15 Gew.-%, vorzugsweise von 31 bis 21 Gew.-%, bezogen auf das Gesamtgewicht. Beispiele sind niedermolekulare Diolen, Triolen, Dialkylenglycolen, Trialkylenglycolen oder Polyoxyalkylenglycolen mit zahlenmittleren Molekulargewichten bis 6.000 g/mol, insbesondere bis 1.500 g/mol, modifiziertes Roh-MDI oder 2,4- bzw. 2,6-Toluylen-diisocyanat. Beispiele für geeignete Di- bzw. Polyoxyalkylenglycole sind Diethylen-, Dipropylen-, Polyoxyethylen-, Polyoxypropylen und Polyoxypropylenpolyoxyethylenglycole, -triole und/oder -tetrole. Geeignet sind auch NCO-Gruppen enthaltende Prepolymere mit NCO-Gehalten von 25 bis 3,5 Gew.-%, vorzugsweise von 21 bis 14 Gew.-%, bezogen auf das Gesamtgewicht, hergestellt aus Polyester- und/oder vorzugsweise Polyetherpolyolen und 4,4'-Diphenylmethandiisocyanat, Mischungen aus 2,4'- und 4,4'-Diphenylmethan-diisocyanat, 2,4- und/oder 2,6-Toluylendiisocyanat oder Roh-MDI. Bewährt haben sich ferner flüssige, Carbodiimidgruppen und/oder Isocyanuratringe enthaltende Polyisocyanate mit NCO-Gehalten von 33,6 bis 15 Gew.-%, vorzugsweise 31 bis 21 Gew.-%, bezogen auf das Gesamtgewicht, beispielsweise auf Basis von 4,4'-, 2,4'- und/oder 2,2'-Diphenylmethandiisocyanat und/oder 2,4- und/oder 2,6-Toluylen-diisocyanat.

Die modifizierten Polyisocyanate können miteinander oder mit unmodifizierten organischen Polyisocyanaten wie beispielsweise 2,4'-, 4,4'-Diphenylmethandiisocyanat, Roh-MDI, 2,4- und/oder 2,6-Toluylen-diisocyanat gemischt werden.

Besonders bewährt als Isocyanate haben sich Diphenylmethandiisocyanat-Isomerengemische oder Roh-MDI und insbesondere Roh-MDI mit einem Diphenylmethandiisocyanat-Isomerengehalt von 30 bis 55 Gew.-% sowie urethangruppenhaltige Polyisocyanatgemische auf Basis von Diphenylmethan-diisocyanat mit einem NCO-Gehalt von 15 bis 33 Gew.-%.

Bevorzugte Gewichtsanteile der Polyisocyanatkomponente betragen von 10 bis 40 Gew.-%, insbesondere 13 bis 35 Gew.-% und besonders bevorzugt 15 bis 30 Gew.-%.

Erfindungsgemäß sind als Polyolkomponente nicht nur Polymere mit mindestens zwei Hydroxygruppen gemeint, sondern allgemein Verbindungen mit mindestens zwei gegenüber Isocyanaten aktiven Wasserstoffatomen.

Vorzugsweise ist die Polyolkomponente ein Diol, ein Polyetherdiol, ein Polyesterdiol, ein Polycarbonatdiol, ein Polycaprolactonpolyol oder ein Polyacrylatpolyol, wobei Polyetherdiol, Polyesterdiol und Polycarbonatdiol besonders bevorzugt sind, insbesondere Glycol, Propandiol, Butandiol, Pentandiol, Hexandiol, Cylohexandiol, Cyclohexyldimethanol, Oktandiol, Neopentylglycol, Diethylenglycol, Triethylenglycol, Trimethylpentandiol, Benzoldimethanol, Benzoldiol, Methylbenzoldiol, Bisphenol-A, Poly(butandiol-Co-Adipat)-glycol, Poly(hexandiol-Co-Adipat)-glycol, Poly(ethandiol-Co-Adipat)-glycol, Polytetramethylenglycol, Polypropylenglycol, Polyethylenglycol, oder eine Mischung daraus.

Die Hauptfunktion der Polyolkomponente besteht darin, mit der Polyisocyanatkomponente zu dem Polyurethanpolymer zu reagieren. Zusätzlich dient die Polyolkomponente jedoch auch als physikalischer Konditionierer, da die Elastizität des Polyurethans von dem Molekulargewicht der Polyolkomponente abhängig ist. Allgemein gilt, dass das resultierende Polyurethan umso weicher ist, je höher das Molekulargewicht der Polyolkomponente ist.

Vorzugsweise weist die Polyolkomponente ein zahlenmittleres Molekulargewicht von 60 bis 50.000 g/mol, insbesondere von 400 bis 10.000 g/mol, bevorzugt von 400 bis 6.000 g/mol, auf.

Zur Einstellung der Eigenschaften des herzustellenden Polyurethanträgers kann es vorteilhaft sein, dass das Ausgangsgemisch des Weiteren mindestens eine weitere Dispersion, typischerweise ausgewählt aus der Gruppe bestehend aus Polyurethan-Dispersionen, Polyurethan-Dispersionen, deren Polyolkomponente ein Comonomer mit Flammschutzwirkung aufweisen, Synthesekautschuk-Dispersionen, Naturkautschuk-Dispersionen und Polyacrylat-Dispersionen, enthält. Hierüber lässt sich u.a. die Stabilität des Polyurethanträgers verbessern.

Polyacrylat-Dispersionen enthalten wasserunlösliches Polyacrylat, das typischerweise mittels eines Emulgators in Wasser dispergiert ist. Sie enthalten beispielsweise etwa 30 bis 60 Gew.-% Polyacrylat und etwa 3 Gew.-% Emulgator. Beim Polyacrylat handelt es sich erfindungsgemäß um ein wasserunlösliches Polyacrylat, Polymethacrylat, Mischungen daraus oder Copolymeren mit anderen Monomeren. Beim Emulgator kann es sich um einen ionischen, nicht-ionischen oder sterischen Emulgator handeln. Dieser ist normalerweise nicht fest in die Polymerketten eingebaut. Acrylat-Dispersionen können weitere Additive, wie Filmbildner oder Co-Lösemittel, Entschäumer, Flammschutzmittel und/oder Benetzungsmittel enthalten.

Acrylatdispersionen werden typischerweise durch die Emulsionspolymerisation geeigneter Monomere erhalten. Hierzu werden diese mittels eines Emulgators fein in Wasser verteilt. Zur Emulsion der Monomere in Wasser wird ein wasserlöslicher Radikalinitiator gegeben. Da sich die aus diesem gebildeten Radikale bevorzugt im Wasser lösen, ist deren Konzentration in den Monomertröpfchen gering, so dass die Polymerisation dort sehr gleichmäßig ablaufen kann. Nach Beendigung der Polymerisation kann die Dispersion direkt verwendet werden, oft wird sie aber mit Additiven wie Entschäumern, Filmbildnern und/oder Benetzungsmitteln versetzt, um die Eigenschaften noch weiter zu verbessern.

Optional kann die Reaktion der OH-Gruppen der Polyolkomponente mit den Isocyanatgruppen katalysiert werden. Als Katalysator kommen insbesondere in Betracht:
Organische Metallverbindungen, vorzugsweise organische Zinnverbindungen, wie Zinn(II)salze von organischen Carbonsäuren, beispielsweise Zinn(II)acetat, Zinn(II)octoat, Zinn(II)ethylhexanoat, Zinn(II)laurat und die Dialkylzinn(IV)salze von organischen Carbonsäuren, beispielsweise Dibutylzinndiacetat, Dibutylzinndilaurat, Dibutylzinnmaleat, Dioctylzinndiacetat sowie tertiäre Amine wie Triethylamin, Tributylamin, Dimethylcyclohexylamin, Dimethylbenzylamin, N-Methylimidazol, N-Methyl-, N-Ethyl-, N-Cyclohexylmorpholin, N,N,N',N'-Tetramethylethylendiamin, N,N,N',N'-Tetramethylbutylendiamin, N,N,N',N'-Tetramethylhexylen-1,6-diamin, Pentamethyldiethylentriamin, Tetramethyldiaminoethylether, Bis- (dimethylaminopropyl)harnstoff, Dimethylpiperazin, 1,2-Dimethylimidazol, 1-Azabicyclo-[3.3.0]-octan, 1,4-Diazabicyclo-[2.2.2]-octan, außerdem Alkanolaminverbindungen wie Triethanolamin, Trisisopropanolamin, N-Methyl- und N-Ethyldiethanolamin und Dimethylethanolamin.

Als Katalysatoren kommen weiter in Betracht : Tris- (dialkylamino)-s-hexahydrotriazine, insbesondere Tris-(N,N-dimethylamino)-s-hexahydrotriazin, Tetraalkylammoniumsalze wie beispielsweise N,N,N-Trimethyl-N-(2-hydroxypropyl)formiat, N,N,N-Trimethyl-N-(2-hydroxypropyl)-2-ethylhexanoat, Tetraalkylammoniumhydroxide wie Tetramethylammoniumhydroxid, Alkalihydroxide wie Natriumhydroxid, Alkalialkoholate wie Natriummethylat und Kaliumisopropylat, sowie Alkali- oder Erdalkalisalze von Fettsäuren mit 1 bis 20 C-Atomen und gegebenenfalls seitenständigen OH-Gruppen.

Vorzugsweise werden tertiäre Amine, Zinnverbindungen, Alkali- und Erdalkalicarboxylate, quarternäre Ammoniumsalze, s-Hexahydrotriazine und Tris-(dialkylaminomethyl)phenole eingesetzt.

Es werden vorzugsweise 0,001 bis 5 Gew. -%, insbesondere 0,002 bis 2 Gew.-% Katalysator bzw. Katalysatorkombination, bezogen auf das Gesamtgewicht des Ausgangsgemisches, verwendet.

Das Polyurethan kann optional eine aktiven Wasserstoff enthaltende Komponente umfassen, die eine hydrophile Gruppe bilden kann, und zwar vorzugsweise von 1 bis 15 Gew.-%, insbesondere von 3 bis 10 Gew.-% und besonders bevorzugt von 4 bis 7 Gew.-%. "Aktiver Wasserstoff" bedeutet dabei, dass das Wasserstoffatom der Komponente in der Weise instabil ist, dass es leicht mit anderen Verbindungen eine chemische Reaktion, z.B. eine Substitutionsreaktion, eingehen kann, so dass sich eine hydrophile Gruppe bilden kann. Diese Komponente bewirkt, dass das Polyurethan effizient in Wasser dispergiert werden kann. Als hydrophile Gruppe kommen insbesondere in Frage: -COO-, $-SO_3^-$, $-NR_3^+$, oder $-(CH_2CH_2O)_n-$. Die eine aktiven Wasserstoff enthaltende Komponente kann beispielsweise sein: Dimethylolpropionsäure (DMPA), Dimethylolbuttersäure (DMBA), Poly(ethylenoxid)glycol, Bis(hydroxylethyl)amine, oder Natrium-3-bis(hydroxyethyl)aminopropansulfonat.

Die eine aktiven Wasserstoff enthaltende Komponente ist, wie vorstehend beschrieben, optional. Zum Zwecke der Dispergierung enthält die Polyurethan-Dispersion alternativ oder zusätzlich häufig mindestens ein Tensid.

Als besonders geeignete Tenside, die auch als Schaumstabilisator wirken, seien insbesondere Stokal® STA (Ammoniumstearat) und Stokal® SR (Succinamat) der Bozzetto Group genannt.

Es kommen jedoch auch weitere Tenside in Betracht, die insbesondere ausgewählt sein können aus der Gruppe, bestehend aus Ethersulfaten, Fettalkoholsulfaten, Sarcosinaten, organischen Aminoxiden, Sulfonaten, Betainen, Amiden organischer Säuren, Sulfosuccinaten, Sulfonsäuren, Alkanolamiden, ethoxylierten Fettalkoholen, Sorbinaten und deren Kombinationen.

Als weitere optionale Komponente kann das Ausgangsgemisch ein Verdickungsmittel enthalten. Hier kann z.B. Borchi® Gel 0625 verwendet werden. Weiterhin sind als Verdickungsmittel Polyetherurethanlösungen wie beispielsweise Ortegol PV301 der Evonik Industries geeignet. Ein Verdickungsmittel stellt insbesondere Stabilität beim Trocknen sicher.

Das Ausgangsgemisch kann weitere Additive wie Stabilisatoren oder Lichtschutzmittel enthalten. Auch Lösungsmittel können als weitere Additive zugesetzt werden, wobei der Anteil des Lösungsmittels bis zu 50 Gew. -%, bezogen auf die gesamte Menge des fertigen Ausgangsgemisches, betragen kann. Geeignet sind zur Herstellung von Polyurethanwerkstoffen gebräuchliche Lösungsmittel wie niedrig siedende Kohlenwasserstoffe mit Siedepunkten unter 100 °C, vorzugsweise unter 50 °C, aber auch andere Lösungsmittel wie beispielsweise Paraffine, halogenierte Kohlenwasserstoffe, halogenierte Paraffine, Ether, Ketone, Carbonsäurealkylester, Alkylcarbonate oder zusätzliche flüssige Flammschutzmittel wie Alkylphosphate wie beispielsweise Triethylphosphat oder Tributylphosphat, halogenierte Alkylphosphate wie beispielsweise Tris-(2-chlorpropyl)phosphat oder Tris-(1,3-dichlorpropyl)phosphat, Arylphosphate wie beispielsweise Diphenylkresylphosphat, Phosphonate wie beispielsweise Diethylethanphosphonat. Einsetzbar sind ebenfalls Gemische aus den genannten Lösungsmitteln.

Weitere optionale Additive sind Zellregler der an sich bekannten Art wie Paraffine oder Fettalkohole oder Dimethylpolysiloxane, Flammschutzmittel, Pigmente oder Farbstoffe, Stabilisatoren gegen Alterungs- und Witterungseinflüsse, Weichmacher, fungistatisch und bakteriostatisch wirkende Substanzen, Füllstoffe wie Bariumsulfat, Bentonit, Kaolin, Glaspulver, Glaskugeln, Glasfasern, Calciumcarbonat, Kieselgur, Quarzsand, Fluorpolymere, Thermoplasten, Mikrokugeln, expandierbarer Graphit, Ruß oder Schlämmkreide oder Kombinationen davon.

Ebenso können in einer bevorzugten Ausführungsform expandierbare Mikroballons zugegeben werden, die beim Trocknen der Trägermasse expandiert werden. Alternativ können vorexpandierte Mikroballons zugegeben werden. Die nachstehenden Ausführungen zu den Mikroballons, wie sie in bevorzugten erfindungsgemäßen Haftklebemasseschichten eingesetzt werden, gelten hier analog. Es können auf diesem Weg durch Mikroballons geschäumte Träger auf Polyurethanbasis, d.h. Polyurethanschäume, hergestellt werden.

Die vorliegende Erfindung umfasst auch ein Verfahren zur Herstellung eines Trägers auf Basis von (ii) Polyurethan, der aus einer Dispersion hergestellt worden ist, bei dem die Schäumung mittels Frothing erzielt worden ist. Das Verfahren umfasst typischerweise die folgenden Schritte:

a) Vorlegen einer wie vorstehend beschriebenen Polyurethan-Dispersion und mindestens eines Tensids sowie optional weiterer Komponenten, wie insbesondere weiterer Dispersionen, unter Bildung eines Ausgangsgemisches,

b) mechanisches Schäumen des Ausgangsgemisches unter Bildung einer feuchten Polyurethanschaummasse, optional unter Zugabe weiterer Komponenten, wie insbesondere Füllstoffe und/oder weiterer Additive,

c) Auftragen der feuchten Polyurethanschaummasse auf eine Oberfläche (typischerweise eines temporären Trägers, wie insbesondere eines Liners, oder einer Haftklebemasseschicht),

d) Trocken der feuchten Polyurethanschaummasse unter Erhalt des Polyurethanschaums.

Die Herstellung der Polyurethan-Dispersion kann dabei auf die nachfolgend beschriebene Weise erfolgen: Die mindestens eine Polyolkomponente sowie optional die aktiven Wasserstoff enthaltende Komponente sowie Lösungsmittel (z.B. Aceton oder N-Methylpyrrolidon) werden in einen Behälter unter Stickstoffatmosphäre gegeben und - beispielsweise mit einem Flügelrührer - gerührt. Wenn die Komponenten gut durchmischt sind, wird die mindestens eine Polyisocyanatkomponente zugegeben und der Behälter für vier bis sechs Stunden auf ungefähr 40 bis 90°C erhitzt und anschließend abgekühlt. Wenn der Behälter auf 30° C bis 50° C abgekühlt ist, wird eine basische Lösung wie z.B. Triethylamin unter Rühren zugegeben und das Gemisch für fünfzehn bis zwanzig Minuten neutralisiert. Die Mischung wird dann in Wasser gegeben, optional kann an dieser Stelle ein Kettenverlängerer zugesetzt werden. Man erhält die erfindungsgemäße Polyurethan-Dispersion.

Zur Bildung des Polyurethanschaums wird die Ausgangsmischung, also die wie vorstehend oder auf andere Weise hergestellte Polyurethan-Dispersion zusammen mit dem mindestens einen Tensid, sowie optional einem Lösungsmittel und/oder den weiteren optionalen Bestandteilen mechanisch aufgeschlagen und geschäumt. Optional kann nach dem Aufschlagen ein Verdickungsmittel zugegeben werden.

Alternativ wird nicht zunächst eine Polyurethan-Dispersion hergestellt. Stattdessen kommt eine Präpolymer-Dispersion zum Einsatz, und das Präpolymer polymerisiert beim mechanischen Aufschlagen/Schäumen zum Polyurethan.

Es ist möglich, zusätzlich oder alternativ ein physikalisches Treibmittel zuzugeben. So kann die Ausgangsmischung beispielsweise in Anwesenheit eines Gases wie Luft, Stickstoff oder eines Edelgases wie zum Beispiele Helium, Neon, oder Argon geschäumt werden. Treibmittel können einzeln oder als Mischung verschiedener Treibmittel zum Einsatz kommen. Treibmittel können aus einer großen Anzahl Materialien ausgewählt werden, die folgendes umfasst: Kohlenwasserstoffe, Ether und Esters und Ähnliches. Typische physikalische Treibmittel weisen einen Siedepunkt im Bereich von -50° C bis +100°C, und vorzugsweise von -50°C bis +50°C auf. Bevorzugte physikalische Treibmittel umfassen Kohlenwasserstoffe wie n-Pentan, Isopentan, und Cyclopentan, Methylenchlorid, oder beliebige Kombinationen der vorstehend genannten Verbindungen. Solche Treibmittel können bevorzugt in Mengen von 5 Gew.-% bis 50 Gew.-% des Reaktionsgemisches, insbesondere von 10 Gew.-% bis 30 Gew.-% des Reaktionsgemisches eingesetzt werden.

Ebenso ist es möglich, zusätzlich oder alternativ ein chemisches Treibmittel zuzugeben. Chemische Treibmittel sind Substanzen, die erst während des Verarbeitungsprozesses aufgrund einer chemischen Reaktion - meist eingeleitet durch Wärmezufuhr - Gas abspalten und dadurch die Erzeugung einer Schaumstruktur im Polymer ermöglichen. Ursache für die Gasabspaltung kann entweder die thermische Zersetzung des Treibmittels oder eine chemische Reaktion verschiedener im Treibmittel enthaltener Substanzen sein. Das entstehende Gas ist zumeist $N_2$, $CO_2$ oder CO.

Geschäumte Träger aus Basis von Polyurethan weisen vorzugsweise eine Dichte von 250 kg/$m^3$ bis 500 kg/$m^3$, besonders bevorzugt 350 bis 450 kg/$m^3$ auf.

Optional kann über die Schaumschicht eine Folie aufgebracht werden. Die Folie kann, wenn sie gespannt ist, die Dicke der Schaumschicht begrenzen. Die Folie kann aber auch nur als Abdeckung fungieren.

In einer weiteren bevorzugten Ausführungsform kann der Schaum mittels einer Klinge oder eines Messers auf den temporären Träger, wie insbesondere Liner, bzw. die Haftklebemasseschicht aufgebracht werden, wodurch eine gleichmäßige Dicke der Schaumschicht erreicht wird, bevor diese in den Trockenofen gebracht bzw. gefahren wird. Alternativ können auch Walzen vorgesehen sein, um die Dicke der Schaumschicht einzustellen.

Nach Aufbringen der Schaumschicht auf den Träger und optionaler Abdeckung mit einer Folie erfolgt die Trocknung, vorzugsweise in einem Trockenofen. Bevorzugte Temperaturen zum Trocknen betragen von 50°C bis 180°C, vorzugsweise von 50 °C bis 120 °C, insbesondere von 70°C bis 115°C, ganz besonders bevorzugt von 100°C bis 115°C. Vorzugsweise beträgt die Temperatur mindestens 50°C, insbesondere mindestens 60°C, bevorzugt mindestens 70°C, insbesondere mindestens 80°C, ganz besonders bevorzugt mindestens 90°C, insbesondere mindestens 100°C, insbesondere mindestens 110°C, sehr bevorzugt mindestens 120°C, insbesondere mindestens 130°C. Weiterhin beträgt die Temperatur vorzugsweise höchstens 180°C, insbesondere höchstens 170°C, besonders bevorzugt höchstens 160°C, insbesondere höchstens 150°C.

Vorzugsweise erfolgt das Trocknen in Schritt d) der oben angegebenen Verfahrensfolge in mindestens zwei Stufen, wobei die Temperatur der Trocknung von einem Schritt zum nächsten erhöht wird. Anders als bei Verwendung von hohen Ausgangstemperaturen (z.B. 120°C) beim Trocknen ermöglicht eine gestufte Erhöhung der Trocknungstemperatur ein gleichmäßiges Trocknen, was zu einer gleichmäßigen Verteilung der Zellgrößen führt. Bei geringerer Temperatur erfolgt zunächst eine relativ gleichmäßige Vortrocknung des gesamten Schaums und im weiteren Schritt bei höherer Temperatur die Entfernung der Restfeuchte.

Es kann jedoch auch wünschenswert sein, eine über den Querschnitt variierende Zellgröße zu erreichen. In diesem Fall sollte gleich mit einer hohen Trocknungstemperatur gearbeitet werden. Das sorgt dafür, dass der Schaum an der Oberfläche schnell trocknet, im Inneren hingegen lange Zeit feucht bleibt, wodurch sich die über den Querschnitt unterschiedliche Zellgrößenverteilung ergibt.

Besonders bevorzugt erfolgt das Trocknen in Schritt d) in zwei Stufen, wobei die Temperatur der Trocknung im 1. Schritt von 50°C bis 100°C, vorzugsweise 70°C bis 90°C, insbesondere 80°C, und die Temperatur der Trocknung im 2. Schritt von 105°C bis 180°C, vorzugsweise 110°C bis 150°C, insbesondere 120°C, beträgt.

Vorzugsweise ist die PU-basierte Trägerschicht aus Dispersion frei von Additiven wie Antiblockmittel und Wachsen. Ebenso vorzugsweise weist das Polyurethan keine kristalline Überstruktur auf.

Die PU-basierte Trägerschicht aus Dispersion oder das Klebeband, das diese Schicht enthält, ist zudem üblicherweise einer Temperierung bei mindestens 150 °C unterzogen worden, um die Zugfestigkeit zu optimieren.

Erfindungsgemäße Haftklebemassen:

In den erfindungsgemäßen Klebebändern ist auf dem mindestens einen Träger mindestens einseitig, vorzugsweise beidseitig, eine Haftklebemasseschicht angeordnet. In der vorliegenden Anmeldung werden die Begriffe "Haftklebemasse" und "Selbstklebemasse" bzw. "haftklebend" und "selbstklebend" synonym verwendet.

Unter einer "Haftklebmasse" wird erfindungsgemäß, wie allgemein üblich, ein Stoff verstanden, der - insbesondere bei Raumtemperatur - dauerhaft klebrig sowie klebfähig ist. Charakteristisch für einen Haftklebstoff ist, dass er durch Druck auf ein Substrat aufgebracht werden kann und dort haften bleibt, wobei der aufzuwendende Druck und die Einwirkdauer dieses Drucks nicht näher definiert werden. In manchen Fällen, abhängig von der genauen Art des Haftklebstoffs, der Temperatur und der Luftfeuchtigkeit sowie dem Substrat, reicht die Einwirkung eines kurzfristigen, minimalen Drucks, der über eine leichte Berührung für einen kurzen Moment nicht hinausgeht, um den Haftungseffekt zu erzielen, in anderen Fällen kann auch eine längerfristige Einwirkdauer eines hohen Drucks notwendig sein.

Haftklebstoffe haben besondere, charakteristische viskoelastische Eigenschaften, die zu der dauerhaften Klebrigkeit und Klebfähigkeit führen. Kennzeichnend für sie ist, dass, wenn sie mechanisch deformiert werden, es sowohl zu viskosen Fließprozessen als auch zum Aufbau elastischer Rückstellkräfte kommt. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad des Haftklebstoffes als auch von der Geschwindigkeit und Dauer der Deformation sowie von der Temperatur.

Der anteilige viskose Fluss ist zur Erzielung von Adhäsion notwendig. Nur die viskosen Anteile, hervorgerufen durch Makromoleküle mit relativ großer Beweglichkeit, ermöglichen eine gute Benetzung und ein gutes Anfließen auf das zu verklebende Substrat. Ein hoher Anteil an viskosem Fluss führt zu einer hohen Haftklebrigkeit (auch als Tack oder Oberflächenklebrigkeit bezeichnet) und damit oft auch zu einer hohen Klebkraft. Stark vernetzte Systeme, kristalline oder glasartig erstarrte Polymere sind mangels fließfähiger Anteile in der Regel nicht oder zumindest nur wenig haftklebrig.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

Zur genaueren Beschreibung und Quantifizierung des Maßes an elastischem und viskosem Anteil sowie des Verhältnisses der Anteile zueinander können die mittels Dynamisch Mechanischer Analyse (DMA) ermittelbaren Größen Speichermodul (G’) und Verlustmodul (G") herangezogen werden. G’ ist ein Maß für den elastischen Anteil, G" ein Maß für den viskosen Anteil eines Stoffes. Beide Größen sind abhängig von der Deformationsfrequenz und der Temperatur.

Die Größen können mit Hilfe eines Rheometers ermittelt werden. Das zu untersuchende Material wird dabei zum Beispiel in einer Platte-Platte-Anordnung einer sinusförmig oszillierenden Scherbeanspruchung ausgesetzt. Bei schubspannungsgesteuerten Geräten werden die Deformation als Funktion der Zeit und der zeitliche Versatz dieser Deformation gegenüber dem Einbringen der Schubspannung gemessen. Dieser zeitliche Versatz wird als Phasenwinkel $\delta$ bezeichnet.

Der Speichermodul G’ ist wie folgt definiert: G’ = $(\tau/\gamma)$ •cos($\delta$) ($\tau$ = Schubspannung, $\gamma$ = Deformation, $\delta$ = Phasenwinkel = Phasenverschiebung zwischen Schubspannungs- und Deformationsvektor). Die Definition des Verlustmoduls G" lautet: G" = $(\tau/\gamma)$ •sin($\delta$) ($\tau$ = Schubspannung, $\gamma$ = Deformation, $\delta$ = Phasenwinkel = Phasenverschiebung zwischen Schubspannungs- und Deformationsvektor).

Ein Stoff gilt im Allgemeinen als haftklebrig und wird im Sinne der Erfindung als haftklebrig definiert, wenn bei Raumtemperatur, hier definitionsgemäß bei 23°C, im Deformationsfrequenzbereich von $10^0$ bis $10^1$ rad/sec G’ zumindest zum Teil im Bereich von $10^3$ bis $10^7$ Pa liegt und wenn G" ebenfalls zumindest zum Teil in diesem Bereich liegt. "Zum Teil" heißt, dass zumindest ein Abschnitt der G’-Kurve innerhalb des Fensters liegt, das durch den Deformationsfrequenzbereich von einschließlich 10° bis einschließlich $10^1$ rad/sec (Abszisse) sowie den Bereich der G’-Werte von einschließlich $10^3$ bis einschließlich $10^7$ Pa (Ordinate) aufgespannt wird. Für G" gilt dies entsprechend.

Die Haftklebemasseschichten der erfindungsgemäßen Klebebänder können auf Polymeren unterschiedlicher chemischer Struktur basieren. Beispielsweise können sie auf Acrylat(co)polymer, Silikon(co)polymer, Nitrilkautschuk, d.h. Acrylnitril-Butadien-Kautschuk, chemisch oder physikalisch vernetztem Synthesekautschuk oder einer Mischung (Blend) davon basieren.

Die Haftklebemasseschichten der erfindungsgemäßen Klebebänder basieren vorzugsweise auf Vinylaromatenblockcopolymer, Polyacrylat oder einem Blend aus Polyacrylat und, typischerweise mit dem Polyacrylat im Wesentlichen nicht mischbarem, Vinylaromatenblockcopolymer. Ein solcher Blend besteht vorzugsweise zu 50 bis 90 Gew.-%, bevorzugt 65 bis 80 Gew.-%, aus Polyacrylat und zu 10 bis 50 Gew.-%, bevorzugt 20 bis 35 Gew.-%, aus Vinylaromatenblockcopolymer (wobei sich die beiden Gewichtsanteile zu 100 Gew.-% addieren).

Mit einer Haftklebemasse auf Basis eines Polymers oder einer Polymermischung (d.h. eines Polymerblends) ist in der vorliegenden Anmeldung typischerweise gemeint, dass das Polymer bzw. die Polymermischung mindestens 50 Gew.-% aller Polymerkomponenten der Haftklebemasse darstellen, bevorzugt sind mindestens 90 Gew.-%. In einer besonders bevorzugten Ausführungsform stellt das Polymer bzw. die Polymermischung das einzige Polymer der Klebemasse dar. Eventuell in der Klebemasse enthaltene Klebharze gelten in diesem Zusammenhang nicht als Polymere.

In der vorliegenden Anmeldung werden die Begriffe "Acrylat" und "Polyacrylat" synonym verwendet. Darunter ist jeweils ein Polymer zu verstehen, das aus einer Polymerisation von (Meth)Acrylsäure, einem Ester davon oder Mischungen der vorgenannten Monomere, und gegebenenfalls weiteren copolymerisierbaren Monomeren, hervorgegangen ist. Der Begriff (Meth)Acrylsäure umfasst außerdem sowohl Acrylsäure, als auch Methacrylsäure. Typischerweise handelt es sich bei den Polyacrylaten um Copolymere.

Im erfindungsgemäßen Sinne für die Haftklebemassen auf Polyacrylatbasis verwendbar sind acrylatbasierende

Klebemassen auf Lösemittelbasis, auf wässriger Basis oder auch als Hotmeltsystem, beispielsweise eine Masse auf Acrylathotmelt-Basis, wobei diese einen K-Wert von mindestens 20 aufweisen kann, insbesondere größer 30, erhältlich durch Aufkonzentrieren einer Lösung einer solchen Masse zu einem als Hotmelt verarbeitbaren System. Das Aufkonzentrieren kann in entsprechend ausgerüsteten Kesseln oder Extrudern stattfinden, insbesondere beim damit einhergehenden Entgasen ist ein Entgasungsextruder bevorzugt. Eine derartige Klebemasse ist in der DE 43 13 008 A1 dargelegt, auf deren Inhalt hiermit Bezug genommen wird und deren Inhalt Teil dieser Offenbarung und Erfindung wird. Die Klebemasse auf Acrylathotmelt-Basis kann chemisch vernetzt sein.

Eine Klebemasse, die sich ebenfalls als geeignet zeigt, ist eine niedrigmolekulare Acrylatschmelzhaftklebemasse wie zum Beispiel acResin® UV von BASF und Acrylatdispersionshaftklebmassen wie zum Beispiel unter dem Handelsnamen Acronal® von der BASF erhältlich.

In einer weiteren Ausführungsform werden in Haftklebemassen Copolymerisate aus (Meth)acrylsäure und deren Estern mit 1 bis 25 C-Atomen, Malein-, Fumar- und/oder Itaconsäure und/oder deren Estern, substituierten (Meth)acrylamiden, Maleinsäureanhydrid und anderen Vinylverbindungen wie Vinylestern, insbesondere Vinylacetat, Vinylalkoholen und/oder Vinylethern eingesetzt. Der Restlösungsmittel-Gehalt sollte unter 1 Gew.-% betragen.

Eine andere bevorzugte Ausführungsform ist eine Haftklebemasse, die ein Polyacrylatpolymerisat, enthält. Dabei handelt es sich um ein Polymerisat, welches durch radikalische Polymerisation von Acrylmonomeren, worunter auch Methylacrylmonomere verstanden werden, und gegebenenfalls weiteren, copolymerisierbaren Monomeren erhältlich ist.

Erfindungsgemäß kann es sich um ein mit Epoxidgruppen vernetzbares Polyacrylat handeln. Entsprechend werden als Monomere oder Comonomere bevorzugt funktionelle, mit Epoxidgruppen vernetzungsfähige Monomere eingesetzt, hier kommen insbesondere Monomere mit Säuregruppen (besonders Carbonsäure-, Sulfonsäure oder Phosphonsäuregruppen) und/oder Hydroxygruppen und/oder Säureanhydridgruppen und/oder Epoxidgruppen und/oder Amingruppen zur Anwendung; bevorzugt sind carbonsäuregruppenhaltige Monomere. Es ist insbesondere vorteilhaft, wenn das Polyacrylat einpolymerisierte Acrylsäure und/oder Methacrylsäure aufweist. Weitere Monomere, die als Comonomere für das Polyacrylat verwendet werden können, sind zum Beispiel Acrylsäure- und/oder Methacrylsäureester mit bis zu 30 C-Atomen, Vinylester von bis zu 20 C-Atome enthaltenden Carbonsäuren, Vinylaromaten mit bis zu 20 C-Atomen, ethylenisch ungesättigte Nitrile, Vinylhalogenide, Vinylether von 1 bis 10 C-Atome enthaltenden Alkoholen, aliphatische Kohlenwasserstoffe mit 2 bis 8 C-Atomen und 1 oder 2 Doppelbindungen oder Mischungen dieser Monomeren.

Bevorzugt wird ein Polyacrylat eingesetzt, das auf die folgende Monomerzusammensetzung zurückgeführt werden kann:

i) Acrylsäureester und/oder Methacrylsäureester der folgenden Formel

$$CH_2=C(R^1)(COOR^2)$$

wobei $R^1$ = H oder $CH_3$ und $R^2$ = H oder lineare, verzweigte oder ringförmige, gesättigte oder ungesättigte Alkylreste mit 1 bis 30, insbesondere mit 4 bis 18 Kohlenstoffatomen darstellt,

ii) olefinisch ungesättigte Monomere mit funktionellen Gruppen der für eine Reaktivität mit Epoxidgruppen bereits definierten Art,

iii) optional weitere Acrylate und/oder Methacrylate und/oder olefinisch ungesättigte Monomere, die mit der Komponente (i) copolymerisierbar sind.

Weiter vorzugsweise werden zur Anwendung des Polyacrylats als Haftkleber die Anteile der entsprechenden Komponenten (i), (ii), und (iii) derart gewählt, dass das Polymerisationsprodukt insbesondere eine Glastemperatur kleiner gleich 15 °C (ermittelt mit DSC (Differential Scanning Calorimetry) gemäß DIN 53 765 bei einer Aufheizrate von 10 K/min) aufweist.

Es ist zur Herstellung von Haftklebemassen sehr vorteilhaft, die Monomere der Komponente (i) mit einem Anteil von 45 bis 99 Gew.-%, die Monomere der Komponente (ii) mit einem Anteil von 1 bis 15 Gew.-% und die Monomere der Komponente (iii) mit einem Anteil von 0 bis 40 Gew.-% zu wählen (die Angaben sind bezogen auf die Monomermischung für das "Basispolymer", also ohne Zusätze eventueller Additive zu dem fertigen Polymer wie Harze).

Die Monomere der Komponente (i) sind insbesondere weichmachende und/oder unpolare Monomere. Vorzugsweise werden für die Monomere (i) Acrylmonomere eingesetzt, die Acryl- und Methacrylsäureester mit Alkylgruppen, bestehend aus 4 bis 18 C-Atomen, bevorzugt 4 bis 9 C-Atomen, umfassen. Beispiele für derartige Monomere sind n-Butylacrylat, n-Butylmethacrylat, n-Pentylacrylat, n-Pentylmethacrylat, n-Amylacrylat, n-Hexylacrylat, Hexylmethacrylat, n-Heptylacrylat, n-Octylacrylat, n-Octylmethacrylat, n-Nonylacrylat, Isobutylacrylat, Isooctylacrylat, Isooctylmethacrylat

und deren verzweigten Isomere wie zum Beispiel 2-Ethylhexylacrylat oder 2-Ethylhexylmethacrylat.

Bevorzugt werden für die Komponente (ii) Monomere mit solchen funktionellen Gruppen eingesetzt, die aus der folgenden Aufzählung ausgewählt sind:

Hydroxy-, Carboxy-, Sulfonsäure- oder Phosphonsäuregruppen, Säureanhydride, Epoxide, Amine.

Besonders bevorzugte Beispiele für Monomere der Komponente (ii) sind Acrylsäure, Methacrylsäure, Itaconsäure, Maleinsäure, Fumarsäure, Crotonsäure, Aconitsäure, Dimethylacrylsäure, β-Acryloyloxypropionsäure, Trichloracrylsäure, Vinylessigsäure, Vinylphosphonsäure, Itasconsäure, Maleinsäureanhydrid, Hydroxyethylacrylat, Hydroxypropylacrylat, Hydroxyethylmethacrylat, Hydroxypropylmethacrylat, 6-Hydroxyhexylmethacrylat, Allylalkohol, Glycidylacrylat, Glycidylmethacrylat.

Beispielhaft genannte Monomere für die Komponente (iii) sind: Methylacrylat, Ethylacrylat, Propylacrylat, Methylmethacrylat, Ethylmethacrylat, Benzylacrylat, Benzylmethacrylat, sek.-Butylacrylat, tert. Butylacrylat, Phenylacrylat, Phenylmethacrylat, Isobornylacrylat, Isobornylmethacrylat, t-Butylphenylacrylat, t-Butylaphenylmethacrylat, Dodecylmethacrylat, Isodecylacrylat, Laurylacrylat, n-Undecylacrylat, Stearylacrylat, Tridecylacrylat, Behenylacrylat, Cyclohexylmethacrylat, Cyclopentylmethacrylat, Phenoxyethylacrlylat, Phenoxyethylmethacrylat, 2-Butoxyethylmethacrylat, 2-Butoxyethylacrylat, 3,3,5-Trimethylcyclohexylacrylat, 3,5-Dimethyladamantylacrylat, 4-Cumylphenylmethacrylat, Cyanoethylacrylat, Cyanoethylmethacrylat, 4-Biphenylacrylat, 4-Biphenylmethacrylat, 2-Naphthylacrylat, 2-Naphthylmethacrylat, Tetrahydrofufurylacrylat, Diethylaminoethylacrylat, Diethylaminoethylmethacrylat, Dimethylaminoethylacrylat, Dimethylaminoethylmethacrylat, 2-Butoxyethylacrylat, 2-Butoxyethylmethacrylat, 3-Methoxyacrylsäuremethylester, 3-Methoxybutylacrylat, Phenoxyethylacrlylat, Phenoxyethylmethacrylat, 2-Phenoxyethylmethacrylat, Butyldiglykolmethacrylat, Ethylenglycolacrylat, Ethylenglycolmonomethylacrylat, Methoxy Polyethylenglykolmethacrylat 350, Methoxy Polyethylenglykolmethacrylat 500, Propylenglycolmonomethacrylat, Butoxydiethylenglykolmethacrylat, Ethoxytriethylenglykolmethacrylat, Octafluoropentylacrylat, Octafluoropentylmethacrylat, 2,2,2-Trifluoroethylmethacrylat, 1,1,1,3,3,3 Hexafluoroisopropylacrylat, 1,1,1,3,3,3-Hexafluoroisopropylmethacrylat, 2,2,3,3,3-Pentafluoropropylmethacrylat, 2,2,3,4,4,4-Hexafluorobutylmethacrylat, 2,2,3,3,4,4,4-Heptafluorobutylacrylat, 2,2,3,3,4,4,4-Heptafluorobutylmethacrylat, 2,2,3,3,4,4,5,5,6,6,7,7,8,8,8-Pentadecafluorooctylmethacrylat, Dimethylaminopropylacrylamid, Dimethylaminopropylmethacrylamid, N-(1-Methyl-undecyl)-acrylamid, N-(n-Butoxymethyl)acrylamid, N-(Butoxymethyl)methacrylamid, N-(Ethoxymethyl)-acrylamid, N-(n-Octadecyl)acrylamid, weiterhin N,N-Dialkyl-substituierte Amide wie beispielsweise N,N-Dimethylacrylamid, N,N-Dimethylmethacrylamid, N- Benzylacrylamide, N-Isopropylacrylamid, N- tert. Butylacrylamid, N-tert. Octylacrylamid, N-Methylolacrylamid, N-Methylolmethacrylamid, Acrylnitril, Methacrylnitril, Vinylether wie Vinylmethylether, Ethylvinylether, Vinylisobutylether, Vinylester wie Vinylacetat, Vinylchlorid, Vinylhalogenide, Vinylidenchlorid, Vinylidenhalogenide, Vinylpyridin, 4-Vinylpyridin, N-Vinylphthalimid, N-Vinyllactam, N-Vinylpyrrolidon, Styrol, α- und p-Methylstyrol, α-Butylstyrol, 4-n-Butylstyrol, 4-n-Decylstyrol, 3,4-Dimethoxystyrol, Makromonomere wie 2-Polystyrolethylmethacrylat (Molekulargewicht $M_w$ von 4000 bis 13000 g/mol), Poly(Methylmethacrylat)ethylmethacrylat ($M_w$ von 2000 bis 8000 g/mol).

Monomere der Komponente (iii) können vorteilhaft auch derart gewählt werden, dass sie funktionelle Gruppen enthalten, die eine nachfolgende strahlenchemische Vernetzung (beispielsweise durch Elektronenstrahlen, UV) unterstützen. Geeignete copolymerisierbare Photoinitiatoren sind zum Beispiel Benzoinacrylat und acrylatfunktionalisierte Benzophenonderivate. Monomere, die eine Vernetzung durch Elektronenbestrahlung unterstützen, sind zum Beispiel Tetrahydrofufurylacrylat, N-tert-Butylacrylamid und Allylacrylat, wobei diese Aufzählung nicht abschließend ist.

Weiterhin sind Gegenstand der Zusammensetzung der Haftklebemasse auf Polyacrylatbasis (oder auf Basis eines Acrylatblends) häufig Vernetzer auf Epoxid-Basis. Als epoxidgruppenhaltige Substanzen werden insbesondere multifunktionelle Epoxide eingesetzt, also solche, die mindestens zwei Epoxideinheiten pro Molekül aufweisen (also mindestens bifunktional sind). Dies können sowohl aromatische, als auch aliphatische Verbindungen sein. Vernetzer auf Epoxidbasis können auch in oligomerer oder polymerer Form eingesetzt werden.

Die Mischung aus Acrylaten kann ihrerseits weiter vorzugsweise die folgende Zusammensetzung aufweisen:

(I) 90 bis 99 Gew.-% n-Butylacrylat und/oder 2-Ethylhexylacrylat,

(II) 1 bis 10 Gew.-% eines ethylenisch ungesättigten Monomers mit einer Säure- oder Säureanhydridfunktion,

wobei sich bevorzugt (I) und (II) zu 100 Gew.-% addieren.

Bevorzugt bildet das Monomer (I) eine Mischung aus 2-Ethylhexylacrylat und n-Butylacrylat, weiter vorzugsweise zu gleichen Teilen.

Als Monomer (II) kommen vorteilhaft in Betracht zum Beispiel Acrylsäure, Methacrylsäure, Itaconsäure, Maleinsäure, Fumarsäure und/oder Maleinsäureanhydrid.

Bevorzugt sind Acrylsäure oder Methacrylsäure, gegebenenfalls die Mischung aus beiden.

Zur Erzielung haftklebriger Eigenschaften sollte sich die Klebmasse bei der Verarbeitungstemperatur oberhalb ihrer Glastemperatur befinden, um viskoelastische Eigenschaften zu haben. Die Glasübergangstemperatur der Haftklebemasseformulierung (Polymer-Klebrigmachermischung) liegt daher bevorzugt unterhalb von +15 °C (ermittelt mit DSC (Differential Scanning Calorimetry) gemäß DIN 53 765 bei einer Aufheizrate von 10 K/min).

Die Glasübergangstemperatur der Acrylatcopolymere lässt sich gemäß der Gleichung von Fox aus den Glasübergangstemperaturen der Homopolymere und ihren relativen Mengenverhältnissen abschätzen).

Zur Erzielung von Polymeren, beispielsweise Haftklebemassen oder Heißsiegelmassen, mit gewünschten Glasübergangstemperaturen wird die mengenmäßige Zusammensetzung der Monomermischung vorteilhaft derart gewählt, dass sich nach einer Gleichung (G1) in Analogie zur Fox-Gleichung (vergleiche T.G. Fox, Bull. Am. Phys. Soc. 1956, 1, 123) der gewünschte $T_G$-Wert für das Polymer ergibt.

$$\frac{1}{T_G} = \sum_n \frac{w_n}{T_{G,n}}$$

n = Laufzahl über die eingesetzten Monomere,
$w_n$ = Massenanteil des jeweiligen Monomers n (Gew.-%) und
$T_{G,n}$ = jeweilige Glasübergangstemperatur des Homopolymers aus den jeweiligen Monomeren n in K.

Analog kann die Gleichung G1 auch zur Bestimmung und Vorhersage der Glasübergangstemperatur von Polymergemischen angewendet werden. Dann gilt, sofern es sich um homogene Mischungen handelt,

n = Laufzahl über die eingesetzten Polymere,
$w_n$ = Massenanteil des jeweiligen Polymeren n (Gew.-%) und
$T_{G,n}$ = jeweilige Glasübergangstemperatur des Polymeren n in K.

Durch den eventuellen Zusatz von Klebrigmachern, d.h. Klebharzen, erhöht sich die Glasübergangstemperatur zwangsläufig, je nach Zugabemenge, Verträglichkeit und Erweichungstemperatur um ca. 5 bis 40 K. Es sind daher Acrylatcopolymere mit einer Glasübergangstemperatur von höchstens 0 °C bevorzugt.

In einer weiteren vorteilhaften Ausführung der Erfindung ist der Klebemasse eine zweite, mit der Polyacrylatkomponente typischerweise im Wesentlichen nicht mischbare Polymerkomponente auf Elastomerbasis (im Folgenden Elastomerkomponente genannt), insbesondere ein oder mehrere Synthesekautschuke wie Vinylaromatenblockcoplymere (z.B. Styrolblockcopolymere), zugemischt.

Vorzugsweise umfasst die Klebemasse dann zumindest die folgenden beiden Komponenten:

(P) eine erste Polymerkomponente auf Polyacrylatbasis,
(E) eine zweite, mit der Polyacrylatkomponente typischerweise im Wesentlichen nicht mischbare Polymerkomponente auf Elastomerbasis, insbesondere eines Synthesekautschuks (im folgenden Elastomerkomponente genannt).

Die Polyacrylatkomponente P liegt insbesondere zu 50 Gew.-% bis 90 Gew.-%, bevorzugt 65 Gew.-% bis 80 Gew.-% vor, und die Elastomerkomponente (E) liegt insbesondere zu 10 Gew.-% bis 50 Gew.-%, bevorzugt 20 Gew.-% bis 35 Gew.-% aus, bezogen auf die Summe von Polyacrylatkomponente (P) und Elastomerkomponente (E) als 100 Gew.-%. Die Gesamtzusammensetzung der Klebemasse kann sich insbesondere auf diese beiden Komponenten beschränken, es können aber auch weitere Komponenten wie Additive und dergleichen hinzukommen (siehe hierzu auch weiter unten).

Die zweite Polymerkomponente (Elastomerkomponente (E)) ist erfindungsgemäß mit der ersten Polymerkomponente (Polyacrylatkomponente (P)) typischerweise im Wesentlichen nicht mischbar, so dass die Klebemasse in der Klebemassenschicht in zumindest zwei separaten Phasen vorliegt. Insbesondere bildet die eine Phase eine Matrix und die andere Phase eine Vielzahl in der Matrix angeordneter Domänen aus.

Homogene Gemische sind auf molekularer Ebene vermischte Stoffe, homogene Systeme dementsprechend einphasige Systeme. Die zugrunde liegenden Stoffe werden im Rahmen dieser Schrift in synonymer Weise als miteinander "homogen vermischbar", "verträglich" und "kompatibel" bezeichnet. Dementsprechend sind zwei oder mehr Komponenten synonym "nicht homogen vermischbar", "nicht verträglich" und "nicht kompatibel", wenn sie nach inniger Vermengung kein homogenes System, sondern zumindest zwei Phasen ausbilden. Als synonym "teilweise homogen mischbar", "teilweise verträglich", "teilverträglich" und "teilweise kompatibel" werden Komponenten angesehen, die bei inniger Vermengung miteinander (zum Beispiel durch Scherung, in der Schmelze oder in Lösung und anschließendem Eliminieren des Lösungsmittels) zumindest zwei Phasen ausbilden, die jeweils reich an einer der Komponenten sind, wobei aber eine oder beide der Phasen jeweils einen mehr oder weniger großen Teil der anderen Komponenten homogen eingemischt aufweisen kann.

Die Polyacrylatkomponente (P) stellt für sich bevorzugt eine homogene Phasen dar. Die Elastomerkomponente

(E) kann in sich homogen vorliegen, oder in sich selbst Mehrphasigkeit aufweisen, wie es von mikrophasenseparierenden Blockcopolymeren bekannt ist. Polyacrylat- und Elastomerkomponente sind vorliegend so gewählt, dass sie - nach inniger Vermengung - bei 23 °C (also der üblichen Anwendungstemperatur für Klebemassen) im Wesentlichen nicht mischbar sind. "Im Wesentlichen nicht mischbar" bedeutet, dass die Komponenten entweder gar nicht homogen miteinander mischbar sind, so dass keine der Phasen einen Anteil der zweiten Komponente homogen eingemischt aufweist, oder dass die Komponenten nur so wenig teilverträglich sind - dass also eine oder beide Komponenten nur einen so geringen Anteil der jeweils anderen Komponente homogen aufnehmen kann -, dass die Teilverträglichkeit für die Erfindung unwesentlich ist, also die erfindungsgemäße Lehre nicht schädlich ist. Die entsprechenden Komponenten werden im Sinne dieser Schrift dann als "im Wesentlichen frei" von der jeweils anderen Komponente angesehen.

Die erfindungsgemäß eingesetzte Klebemasse liegt dementsprechend zumindest bei Raumtemperatur (23 °C), in zumindest zweiphasiger Morphologie vor. Sehr bevorzugt sind die Polyacrylatkomponente (P) und die Elastomerkomponente (E) in einem Temperaturbereich von 0 °C bis 50 °C, noch mehr bevorzugt von - 30 °C bis 80 °C im Wesentlichen nicht homogen mischbar.

Komponenten sind im Sinne dieser Schrift insbesondere dann als "im Wesentlichen nicht miteinander mischbar" definiert, wenn sich die Ausbildung zumindest zweier beständiger Phasen physikalisch und/oder chemisch nachweisen lässt, wobei die eine Phase reich an der einen Komponente - der Polyacrylatkomponente (P) - und die zweite Phase reich an der anderen Komponente - der Elastomerkomponente (E) - ist. Ein geeignetes Analysesystem für eine Phasentrennung ist beispielweise die Raster-Elektronenmikroskopie. Phasenseparation kann sich aber beispielweise auch dadurch erkennen lassen, dass die unterschiedlichen Phasen zwei voneinander unabhängige Glasübergangstemperaturen bei der dynamischen Differenzkalometrie (DDK) aufweisen. Phasentrennung liegt erfindungsgemäß dann vor, wenn sie sich zumindest durch eine der Analysenmethoden eindeutig zeigen lässt.

Die Phasentrennung kann insbesondere derart realisiert sein, dass es diskrete Bereiche ("Domänen"), die reich an einer Komponente sind (im Wesentlichen aus einer der Komponente gebildet und frei von der anderen Komponente), in einer kontinuierlichen Matrix, die reich an der anderen Komponente ist (im Wesentlichen aus der anderen Komponente gebildet und frei von der ersten Komponente), gibt.

Die Phasentrennung für die erfindungsgemäß eingesetzten Klebemassen findet insbesondere derart statt, dass die Elastomerkomponente (E) dispergiert in einer kontinuierlichen Matrix der Polyacrylatkomponente (P) vorliegt. Die durch die Elastomerkomponente (E) gebildeten Bereiche (Domänen) liegen bevorzugt im Wesentlichen kugelförmig vor. Die durch die Elastomerkomponente (E) gebildeten Bereiche (Domänen) können auch von der Kugelform abweichen, insbesondere verzerrt wie zum Beispiel in Beschichtungsrichtung elongiert und orientiert vorliegen. Die Größe der Elastomer-Domänen liegt in ihrer größten Ausdehnung typischerweise - aber nicht zwingend - zwischen 0,5 μm und 150 μm, insbesondere zwischen 1 μm und 30 μm. Andere Domänenformen sind ebenfalls möglich, so zum Beispiel schichtförmige oder stäbchenförmige, wobei auch diese in ihrer Gestalt von idealen Strukturen abweichen können und zum Beispiel gebogen oder verzerrt sein können.

Die Polyacrylatkomponente (P) und die Elastomerkomponente (E) bestehen jeweils aus einer Basispolymerkomponente, die ein Homopolymer, ein Copolymer oder eine Mischung aus Polymeren (Homopolymeren und/oder Copolymeren) sein kann, und gegebenenfalls Zusätzen (Cokomponenten, Additiven). Vereinfachend wird die Basispolymerkomponente im Folgenden als "Basispolymer" bezeichnet, ohne dass hierdurch Polymermischungen für die jeweilige Basispolymerkomponente ausgenommen werden sollen; entsprechend wird unter "Polyacrylat-Basispolymer" die Basispolymerkomponente der Polyacrylatkomponente und unter "Elastomer-Basispolymer" die Basispolymerkomponente der Elastomerkomponente der Klebmasse verstanden.

Die Polyacrylatkomponente (P) und/oder die Elastomerkomponente (E) können jeweils als 100-%-Systeme, das heißt ausschließlich auf ihre jeweilige Basispolymerkomponente beruhend und ohne weitere Beimischung von (Kleb-)Harzen, Additiven oder dergleichen, vorliegen. In weiterer bevorzugter Weise sind einer oder beider dieser beiden Komponenten neben der Basispolymerkomponente weitere Komponenten beigemischt wie beispielweise (Kleb-)Harze.

In einer vorteilhaften Ausführung der Erfindung sind die Polyacrylatkomponente (P) und die Elastomerkomponente (E) ausschließlich aus ihrer jeweiligen Basispolymerkomponente zusammengesetzt, so dass keine weiteren polymeren Komponenten vorhanden sind, insbesondere keine Harze anwesend sind. In einer Weiterentwicklung umfasst die gesamte Klebemasse außer den beiden Basispolymerkomponenten keine weiteren Bestandteile.

Der polyacrylatbasierenden Klebemasse beziehungsweise der Polyacrylatkomponente (P) sind insbesondere vorteilhaft ein oder mehrere Vernetzer für eine chemischen und/oder eine physikalische Vernetzung zugemischt. Da prinzipiell auch strahlenchemische Vernetzung der Polyacrylatkomponente (P) möglich ist, sind Vernetzer aber nicht zwingend vorhanden.

Vernetzer sind solche - insbesondere bi- oder polyfunktionelle, meist niedermolekulare - Verbindungen, die unter den gewählten Vernetzungsbedingungen mit geeigneten - insbesondere funktionellen - Gruppen der zu vernetzenden Polymere reagieren können, somit zwei oder mehrere Polymere oder Polymerstellen miteinander verknüpfen ("Brücken" bilden) und somit ein Netzwerk aus dem zu vernetzenden Polymer beziehungsweise den zu vernetzenden Polymeren schaffen. Hierdurch kommt es in der Regel zur Kohäsionserhöhung. Der Vernetzungsgrad hängt von der

Zahl der gebildeten Brücken ab.

Als Vernetzer sind vorliegend prinzipiell alle dem Fachmann bekannten Vernetzer-Systeme für die Ausbildung insbesondere kovalenter, koordinativer oder assoziativer Bindungssysteme mit entsprechend ausgestatteten (Meth)acrylat-Monomeren geeignet, je nach Natur der gewählten Polymere und ihrer funktionellen Gruppen. Beispiele für chemische Vernetzungssysteme sind di- oder mehrfachfunktionale Isocyanate oder di- oder mehrfachfunktionale Epoxide oder di- oder mehrfachfunktionale Hydroxide oder di- oder mehrfachfunktionale Amine oder di- oder mehrfachfunktionale Säureanhydride. Kombinationen verschiedener Vernetzer sind ebenso denkbar.

Als weitere geeignete Vernetzer seien Chelat-Bildner genannt, die in Kombination mit Säurefunktionalitäten in Polymerketten Komplexe bilden, die als Vernetzungspunkte wirken.

Zur effektiven Vernetzung ist es insbesondere von Vorteil, wenn zumindest ein Teil der Polyacrylate funktionelle Gruppen aufweisen, mit denen die jeweiligen Vernetzer zur Reaktion kommen können. Bevorzugt werden hierfür Monomere mit funktionellen Gruppen eingesetzt, die ausgewählt sind aus der Gruppe umfassend: Hydroxy-, Carboxy-, Sulfonsäure- oder Phosphonsäuregruppen, Säureanhydride, Epoxide, Amine.

Besonders bevorzugte Beispiele für Monomere für Polyacrylate sind Acrylsäure, Methacrylsäure, Itaconsäure, Maleinsäure, Fumarsäure, Crotonsäure, Aconitsäure, Dimethylacrylsäure, β-Acryloyloxypropionsäure, Trichloracrylsäure, Vinylessigsäure, Vinylphosphonsäure, Maleinsäureanhydrid, Hydroxyethylacrylat, Hydroxypropylacrylat, Hydroxyethylmethacrylat, Hydroxypropylmethacrylat, 6-Hydroxyhexylmethacrylat, Allylalkohol, Glycidylacrylat, Glycidylmethacrylat.

Als besonders vorteilhaft hat es sich erwiesen, als Vernetzer 0,03 bis 0,2 Gewichtsteile, insbesondere 0,04 bis 0,15 Gewichtsteile N,N,N',N'-tetrakis(2,3-epoxypropyl)-m-xylen-a,a'-diamin (Tetraglycidyl-meta-Xylendiamin; CAS 63738-22-7), bezogen auf 100 Gewichtsteile Polyacrylat-Basispolymer, einzusetzen.

Alternativ oder zusätzlich kann es vorteilhaft sein, die Klebemasse strahlenchemisch zu vernetzen. Hierzu bieten sich als Strahlung ultraviolettes Licht (vor allem, wenn der Formulierung geeignete Photoinitiatoren zugesetzt sind oder zumindest ein Polymer in der Acrylatkomponente Comonomere mit Einheiten photoinitiierender Funktionalität enthält) und/oder Elektronenstrahlen an.

Für die strahleninduzierte Vernetzung kann es von Vorteil sein, wenn ein Teil der eingesetzten Monomere funktionelle Gruppen enthalten, die eine nachfolgende strahlenchemische Vernetzung unterstützen. Geeignete copolymerisierbare Photoinitiatoren sind zum Beispiel Benzoinacrylat und acrylatfunktionalisierte Benzophenonderivate. Monomere, die eine Vernetzung durch Elektronenbestrahlung unterstützen, sind zum Beispiel Tetrahydrofurfurylacrylat, N-tert-Butylacrylamid und Allylacrylat.

Für die chemische und/oder physikalische und/oder strahleninduzierte Vernetzung wird insbesondere auf den einschlägigen Stand der Technik verwiesen.

Zur Erzielung gewünschter Eigenschaften der Haftklebemasse, beispielsweise um eine hinreichende Kohäsion der Haftklebemassen zu erreichen, werden die Haftklebemassen in der Regel vernetzt, das heißt, die einzelnen Makromoleküle werden durch Brückenbindungen miteinander verknüpft. Die Vernetzung kann auf unterschiedliche Weisen geschehen, so gibt es physikalische, chemische oder thermische Vernetzungsmethoden.

Als Vernetzung von Polymeren wird insbesondere eine Reaktion bezeichnet, bei der viele zunächst lineare oder verzweigte Makromoleküle durch Brückenbildung zwischen den einzelnen Makromolekülen zu einem mehr oder weniger verzweigten Netzwerk verknüpft werden. Die Brückenbildung erfolgt dabei insbesondere, indem geeignete chemische Moleküle - sogenannte Vernetzer oder Vernetzersubstanzen - mit den Makromolekülen reagieren, zum Beispiel mit bestimmten funktionellen Gruppen der Makromoleküle, die für das jeweilige Vernetzermolekül besonders angreifbar sind. Die Stellen des Vernetzermoleküls, die an den Makromolekülen angreifen, werden in der Regel als "reaktive Zentren" bezeichnet. Vernetzermoleküle können zwei Makromoleküle miteinander verknüpfen - indem ein- und dasselbe Vernetzermolekül mit zwei unterschiedlichen Makromolekülen reagiert, also insbesondere mindestens zwei reaktive Zentren besitzt-, oder Vernetzermoleküle können auch mehr als zwei reaktive Zentren aufweisen, so dass ein einziges Vernetzermolekül dann auch drei oder mehr Makromoleküle miteinander verknüpfen kann. Als Nebenreaktion kann es zu intramolekularen Reaktionen kommen, wenn ein- und dasselbe Vernetzermolekül mit mindestens zwei seiner reaktiven Zentren an ein- und demselben Makromolekül angreift. Im Sinne einer effektiven Vernetzung des Polymers sind solche Nebenreaktionen in der Regel unerwünscht.

Es kann unterschieden werden zwischen verschiedenen Typen von Vernetzern, nämlich

1.) kovalenten Vernetzern, nämlich solchen, die an den zu verknüpfenden Makromolekülen kovalent angreifen und somit eine kovalente chemische Bindung zwischen ihrem entsprechenden reaktiven Zentrum und der Angriffsstelle - insbesondere der funktionellen Gruppe - am Makromolekül ausbilden. Grundsätzlich kommen hierfür alle denkbaren kovalente Bindungen ausbildenden chemischen Reaktionen in Frage.

2.) koordinativen Vernetzern, nämlich solchen, die an den zu verknüpfenden Makromolekülen koordinativ angreifen und somit eine koordinative Bindung zwischen ihrem entsprechenden reaktiven Zentrum und der Angriffsstelle -

insbesondere der funktionellen Gruppe - am Makromolekül ausbilden. Grundsätzlich kommen hierfür alle denkbaren koordinative Bindungen ausbildenden chemischen Reaktionen in Frage.

Spezielle Ausführungsform der Haftklebemassen:

Die Klebemassen der erfindungsgemäßen Klebebänder sind gemäß einer besonders bevorzugten Ausführungsform der Erfindung - im Folgenden als "spezielle Ausführungsform" bezeichnet - vernetzbare Klebemassen, die insbesondere bestehen aus

(a) zumindest einer ersten Basiskomponente mit

(a1) als erster Polymerkomponente eine Basispolymerkomponente (im Folgenden auch kurz als Basispolymer bezeichnet) aus einem Homopolymer, einem Copolymer oder einer homogenen Mischung aus mehreren Homopolymeren, mehreren Copolymeren oder einem oder mehreren Homopolymeren mit einem oder mehreren Copolymeren, wobei zumindest eines der Homopolymere oder zumindest eines der Copolymere, insbesondere alle der Polymere der Basispolymerkomponente für die Vernetzung funktionelle Gruppen aufweisen,

(a2) gegebenenfalls weitere mit der Basispolymerkomponente homogen mischbare oder in dieser lösliche Bestandteile, wie Harze oder Additive, Monomerreste, kurzkettige Polymerisationsprodukte (Nebenprodukte), Verunreinigungen etc.;

(b) optional einer zweiten Komponente mit

(b1) als weitere Polymerkomponente mit dem Basispolymer im Wesentlichen nicht homogen mischbare Polymere, insbesondere solche ohne vernetzungsfähige Gruppen,
(b2) gegebenenfalls weitere mit dem Basispolymer im Wesentlichen nicht homogen mischbare und in diesem nicht lösliche Bestandteile, wie bestimmte Harze oder Additive, wobei die Komponente (f) insbesondere ganz oder teilweise mit der optional vorhandenen weiteren Polymerkomponente (b) homogen mischbar ist;

(c) Vernetzern, nämlich

(c1) zumindest einen kovalenten Vernetzer,

(c2) zumindest einen koordinativen Vernetzer,

und

(d) gegebenenfalls Lösemittel oder Lösemittelreste.

Die erste Basiskomponente (a) kann dabei insbesondere eine Polyacrylatkomponente (P) und die zweite Komponente (b) insbesondere eine Elastomerkomponente (E) im Sinne der obigen Ausführungen sein.
Als Polymere für die Basispolymerkomponente (a1) für die spezielle Ausführungsform kommen insbesondere solche Polymere und Polymermischungen in Frage, die sich durch sowohl durch kovalente als auch durch koordinative Vernetzer vernetzen lassen. Dies sind insbesondere Polymere, die für die Vernetzung freie Säuregruppen aufweisen.
Als bevorzugte Basispolymere lassen sich Acrylat-Copolymere einsetzen, insbesondere solche Polymere (Copolymere, Polymermischungen), die zu mindestens 50 Gew.-% auf Acrylmonomere zurückzuführen sind. Als Comonomere für die Einführung der vernetzungsfähigen Gruppen werden dabei freie Säuregruppen aufweisende copolymerisierbare Monomere gewählt, besonders bevorzugt wird Acrylsäure eingesetzt. Säuregruppen enthaltende Monomere, wie beispielsweise Acrylsäure, haben die Eigenschaft, die haftklebrigen Eigenschaften der Haftklebemasse zu beeinflussen. Wird Acrylsäure verwendet, wird diese bevorzugt in einem Anteil von bis zu maximal 12,5 Gew.-%, bezogen auf die Gesamtheit der Monomere der Basispolymerkomponente, verwendet. Dabei wird - in Abhängigkeit der jeweils eingesetzten Vernetzermengen - bevorzugt zumindest so viel Acrylsäure einpolymerisiert, dass genug Säuregruppen zugegen sind, dass es zu einer im Wesentlichen vollständigen Umsetzung der Vernetzer kommen kann.
Die Polyacrylatkomponente (a) der vorteilhaften Haftklebemasse der speziellen Ausführungsform stellt für sich bevorzugt eine homogene Phase dar. Die Elastomerkomponente (b) kann in sich homogen vorliegen oder in sich selbst Mehrphasigkeit aufweisen, wie es von mikrophasenseparierenden Blockcopolymeren bekannt ist. Polyacrylat- und Elastomerkomponente sind vorliegend so gewählt, dass sie - nach inniger Vermengung - bei 23 °C (also der üblichen Anwendungstemperatur für Klebemassen) im Wesentlichen nicht mischbar sind. "Im Wesentlichen nicht mischbar"

bedeutet, dass die Komponenten entweder gar nicht homogen miteinander mischbar sind, so dass keine der Phasen einen Anteil der zweiten Komponente homogen eingemischt aufweist, oder dass die Komponenten nur so wenig teilverträglich sind - dass also eine oder beide Komponenten nur einen so geringen Anteil der jeweils anderen Komponente homogen aufnehmen kann - , dass die Teilverträglichkeit für die Erfindung unwesentlich ist, also die erfindungsgemäße Lehre nicht schädlich ist. Die entsprechenden Komponenten werden im Sinne dieser Schrift dann als "im Wesentlichen frei" von der jeweils anderen Komponente angesehen.

Die vorteilhafte Klebemasse der speziellen Ausführungsform liegt dementsprechend zumindest bei Raumtemperatur (23 °C), in zumindest zweiphasiger Morphologie vor. Sehr bevorzugt sind die Polyacrylatkomponente und die Elastomerkomponente in einem Temperaturbereich von 0 °C bis 50 °C, noch mehr bevorzugt von - 30 °C bis 80 °C im Wesentlichen nicht homogen mischbar.

Die Polyacrylatkomponente und/oder die Elastomerkomponente können jeweils als 100-%-Systeme, das heißt ausschließlich auf ihre jeweilige Polymerkomponente ((a1) beziehungsweise (b1)) beruhend und ohne weitere Beimischung von Harzen, Additiven oder dergleichen, vorliegen. In weiterer bevorzugter Weise sind einer oder beider dieser beiden Komponenten neben der Basispolymerkomponente weitere Komponenten beigemischt, wie beispielweise Harze.

In einer vorteilhaften Realisierung der speziellen Ausführungsform sind die Polyacrylatkomponente und die Elastomerkomponente ausschließlich aus ihrer jeweiligen Polymerkomponente ((a1) beziehungsweise (b1)) zusammengesetzt, so dass keine weiteren polymeren Komponenten vorhanden sind, insbesondere keine Harze anwesend sind. In einer Weiterentwicklung umfasst der Polymeranteil der gesamte Klebemasse außer den beiden Polymerkomponenten (a1) und (b1) keine weiteren Bestandteile (unbeschadet Vernetzer im Sinne der Komponente (c) und gegebenenfalls vorhandene Lösemittel(reste) (d)).

Die Polyacrylatkomponente (a) der vorteilhaften Klebemasse der speziellen Ausführungsform umfasst insbesondere eines oder mehrere Polymere auf Polyacrylatbasis, die die Basispolymerkomponente (a1) darstellen.

Polymere auf Polyacrylatbasis sind insbesondere solche Polymere, die zumindest überwiegend - insbesondere zu mehr als 60 Gew.-% - auf Acrylsäureestern und/oder Methacrylsäure, sowie gegebenenfalls deren freien Säuren, als Monomere (im Folgenden als "Acrylmonomere" bezeichnet) zurückzuführen sind. Polyacrylate sind bevorzugt durch freie radikalische Polymerisation erhältlich. Polyacrylate können gegebenenfalls weitere Bausteine auf Basis weiterer, nicht-acrylischer copolymerisierbarer Monomer enthalten.

Bei den Polyacrylaten kann es sich um Homopolymere und/oder insbesondere um Copolymere handeln. Die Bezeichnung "Copolymer" umfasst im Sinne dieser Erfindung sowohl solche Copolymere, in denen die bei der Polymerisation eingesetzten Comonomere rein statistisch eingebaut sind, als auch solche, bei denen Gradienten in der Comonomerzusammensetzung und/oder lokale Anreicherungen einzelner Comonomersorten sowie ganze Blöcke eines Monomers in den Polymerketten vorkommen. Auch alternierende Comonomerabfolgen sind denkbar.

Die Polyacrylate können beispielsweise von linearer, verzweigter, sternförmiger oder gepfropfter Struktur sein, und es kann sich um Homopolymere oder Copolymere handeln.

Vorteilhaft liegt die mittlere Molmasse (Gewichtsmittel MW) zumindest eines der Polyacrylate des Polyacrylat-Basispolymers, bei mehreren vorhandenen Polyacrylaten vorteilhaft des überwiegenden Gewichtsteils der Polyacrylate, insbesondere aller vorhandenen Poylacrylate im Bereich von 250 000 g/mol bis 10 000 000 g/mol, bevorzugt im Bereich von 500 000 g/mol bis 5 000 000 g/mol.

In sehr bevorzugter Vorgehensweise sind die Vernetzer der Komponente (c) der speziellen Ausführumngsform in die Basiskomponente homogen einmischbar, gegebenenfalls nach vorheriger Lösung in geeigneten Lösemitteln.

Als kovalente Vernetzer (Komponente (c1)) für die spezielle Ausführungsform werden bevorzugt Glycidylamine eingesetzt. Als erfindungsgemäß besonders bevorzugte Vertreter seien exemplarisch N,N,N',N'-Tetrakis(2,3-epoxypropyl)cyclohexan-1,3-dimethylamin und N,N,N',N'-tetrakis(2,3-epoxypropyl)-m-xylen-a,a'-diamin genannt.

Vorteilhaft können weiterhin mehrfachfunktionelle Epoxide, insbesondere Epoxycyclohexylcarboxylate als kovalente Vernetzer eingesetzt werden. Insbesondere 2,2-Bis(hydroxymethyl)-1,3-propandiol oder (3,4-Epoxycyclohexan)methyl-3,4-epoxycyclohexyl-carboxylat seinen hier exemplarisch genannt.

Weiterhin können erfindungsgemäß multifunktionelle Azeridine eingesetzt. Hierzu sei beispielsweise Trimethylolpropantris(2-methyl-1-aziridinepropionat) genannt.

Als kovalente Vernetzer können weiter bevorzugt Isocyanate eingesetzt werden, insbesondere multifunktionelle Isocyanatverbindungen. Als multifunktionelle Isocyanatverbindung können beispielsweise Tolylendiisocyanat (TDI), 2,4-Tolylendiisocyanatdimer, Naphthylen-1,5-diisocyanat (NDI), o-Tolylendiisocyanat (TODI), Diphenylmethandiisocyanat (MDI), Triphenylmethantriisocyanat, Tris-(pisocyanatphenyl)thiophosphit, Polymethylenpolyphenylisocyanat eingesetzt werden. Sie können allein oder in einer Kombination von zwei oder mehr Arten davon verwendet werden.

In der speziellen Ausführungsform wird erfindungsgemäß zumindest ein kovalenter Vernetzer eingesetzt, es können aber auch zwei oder mehrere kovalente Vernetzer zum Einsatz kommen, etwa beispielsweise die zwei vorgenannten Diamin-Verbindungen in Kombination miteinander.

Als koordinative Vernetzer (Komponente (c2)) für die spezielle Ausführungsform kommen insbesondere Chelatverbindungen, insbesondere mehrwertige Metallchelatverbindungen in Frage. Unter dem Begriff "mehrwertige Metallchelatverbindung" werden solche Verbindungen verstanden, bei der ein mehrwertiges Metall koordinativ an eine oder mehrere organische Verbindungen gebunden ist. Als mehrwertiges Metallatom können Al(III), Zr(IV), Co(II), Cu(I), Cu(II), Fe(II), Fe(III), Ni(II), V(II), V(III), V(IV), V(V), Zn(II), In(III), Ca(II), Mg(II), Mn(II), Y(III), Ce(II), Ce(IV), St(II), Ba(II), Mo(II), Mo(IV), Mo(VI), La(III), Sn(II) Sn(IV), Ti(IV) und dergleichen eingesetzt werden. Von diesen sind Al(III), Zr(IV) und Ti(IV) bevorzugt.

Als Liganden der koordinativen Vernetzer der speziellen Ausführungsform können grundsätzlich alle bekannten Liganden diesen. Die für die koordinative Bindung der organischen Verbindung genutzten Atome können aber insbesondere solche Atome sein, die feie Elektronenpaare aufweisen, wie beispielweise Sauerstoffatome, Schwefelatome, Stickstoffatome und dergleichen. Als organische Verbindung können beispielsweise Alkylester, Alkoholverbindungen, Carbonsäureverbindungen, Etherverbindungen, Ketonverbindungen und dergleichen genutzt werden. Insbesondere seien Titanchelatverbindungen wie Titandipropoxidbis(acetylacetonat),

Titandibutoxidbis(octylenglycholat), Titandipropoxid-bis(ethylacetoacetat), Titandipropoxid-bis(lactat), Titandipropoxidbis(triethanolaminat), Titandi-n-butoxidbis(triethanolaminat), Titantri-n-butoxidmonostearat, Butyltitanatdimer, Poly(titanacetylacetonat) und dergleichen; Aluminiumchelat- Verbindungen wie Aluminiumdiisopropoxidmonoethylacetat, Aluminiumdi-n-butoxidmonomethylacetoacetat, Aluminiumdi-i-butoxidmonomethylacetoacetat, Aluminiumdi-n-butoxidmonoethylacetoacetat, Aluminiumdisec-butoxidmonoethylacetoacetat, Aluminiumtriacetylacetonat, Aluminiumtriethylacetoacetonat, Aluminiummonoacetylacetonat-bis(ethylaceto-acetonat) und dergleichen und Zirkoniumchelatverbindungen wie Zirkoniumtetraacetylacetonat und dergleichen veranschaulichend aufgeführt. Von diesen sind Aluminiumtriacetylacetonat und Aluminiumdipropoxid bevorzugt. Sie können allein oder in einer Kombination von zwei oder mehr Arten davon verwendet werden.

Kovalente Vernetzer (c1) werden in der speziellen Ausführungsform bevorzugt in einer Gesamtmenge von 0,015 bis 0,04, bevorzugt 0,02 bis 0,035 Gewichtsteile, bezogen auf 100 Gewichtsteile der Basispolymerkomponente (a1) eingesetzt, sehr bevorzugt in einer Menge von 0,03 Gew.%.

Koordinative Vernetzer (c2) werden in der speziellen Ausführungsform bevorzugt in einer Menge von 0,03 bis 0,15, bevorzugt 0,04 bis 0,1 Gewichtsteile bezogen auf 100 Gewichtsteile der Basispolymerkomponente (a1) eingesetzt.

Weiter vorzugsweise werden kovalente Vernetzer und koordinative Vernetzer in der speziellen Ausführungsform derart eingesetzt, dass die koordinativen Vernetzer im molaren Überschuss, bezogen auf die kovalenten Vernetzer, vorliegen. Bevorzugt werden die Vernetzer in den vorstehend genannten Mengen Bereichen eingesetzt, und zwar derart, dass das molare Verhältnis von kovalenten Vernetzern zu koordinativen Vernetzern - also das Verhältnis der eingesetzten Stoffmenge $n_{kov}$ der kovalenten Vernetzer zur eingesetzten Stoffmenge $n_{koord}$ der koordinativen Vernetzer- im Bereich von 1 : 1,3 bis 1 : 4,5 liegt, dementsprechend $1{,}3 \leq n_{koord}/n_{kov} \leq 4{,}5$. Sehr bevorzugt ist ein molares Verhältnis von kovalenten Vernetzern zu koordinativen Vernetzern von 1 : 2 bis 1 : 4.

Elastomerkomponente der Haftklebemassen (insbesondere der speziellen Ausführungsform):

Wie vorstehend ausgeführt kann die erfindungsgemäß eingesetzte Haftklebemasse, auch in Form ihrer speziellen Ausführungsform, mit der Polyacrylatkomponente bzw. dem Basispolymer im Wesentlichen nicht homogen mischbare Polymere, insbesondere eine Elastomerkomponente umfassen. Die mit der Polyacrylatkomponente im Wesentlichen nicht verträgliche Elastomerkomponente umfasst ihrerseits vorteilhaft einen oder unabhängig voneinander gewählt mehrere Synthesekautschuke als Basispolymerkomponente.

Bevorzugt wird als Synthesekautschuk mindestens ein Vinylaromatenblockcopolymer in Form eines Blockcopolymers mit einem Aufbau A-B, A-B-A, $(A\text{-}B)_n$, $(A\text{-}B)_nX$, $(A\text{-}B\text{-}A)_nX$, oder $A\text{-}B\text{-}X(A'\text{-}B')_n$ verwendet, worin

- die Blöcke A beziehungsweise A' unabhängig voneinander für ein Polymer, gebildet durch Polymerisation mindestens eines Vinylaromaten wie beispielweise Styrol oder $\alpha$-Methylstyrol;

- die Blöcke B beziehungsweise B' unabhängig voneinander für ein Polymer, gebildet durch Polymerisation von konjugierten Dienen mit 4 bis 18 C-Atomen und/oder ein Polymer aus einem Isopren, Butadien, einem Farnesen-Isomer oder einem Gemisch aus Butadien und Isopren oder einem Gemisch aus Butadien und Styrol, oder enthaltend vollständig oder teilweise Ethylen, Propylen, Butylen und/oder Isobutylen und/oder für ein teil- oder vollhydriertes Derivat eines solchen Polymers;

- X für den Rest eines Kopplungsreagenzes oder Initiators und

- n für eine ganze Zahl $\geq 2$ stehen.

Insbesondere sind alle Synthesekautschuke Blockcopolymere mit einem Aufbau wie vorstehend dargelegt. Der Synthesekautschuk kann somit auch Gemische verschiedener Blockcopolymere mit einem Aufbau wie vorstehend

enthalten. A-B-Diblockcopolymere werden typischerweise nicht allein eingesetzt.

Geeignete Blockcopolymere (Vinylaromatenblockcopolymere) umfassen also einen oder mehrere gummiartige Blöcke B beziehungsweise B' (Weichblöcke) und einen oder mehrere glasartige Blöcke A beziehungsweise A' (Hartblöcke). Besonders bevorzugt ist ein Blockcopolymer mit einem Aufbau A-B, A-B-A, $(A-B)_3X$ oder $(A-B)_4X$, wobei für A, B und X die vorstehenden Bedeutungen gelten. Ganz besonders bevorzugt sind alle Synthesekautschuke Blockcopolymere mit einem Aufbau A-B, A-B-A, $(A-B)_3X$ oder $(A-B)_4X$, wobei für A, B und X die vorstehenden Bedeutungen gelten. Insbesondere ist der Synthesekautschuk ein Gemisch aus Blockcopolymeren mit einem Aufbau A-B, A-B-A, $(AB)_3X$ oder $(A-B)_4X$, das bevorzugt mindestens Diblockcopolymere A-B und/oder Triblockcopolymere A-B-A enthält.

Weiterhin vorteilhaft ist ein Gemisch aus Diblock- und Triblockcopolymeren und $(A-B)_n$- oder $(AB)_nX$-Blockcopolymeren mit n größer gleich 3.

In einigen vorteilhaften Ausführungsformen wird zusätzlich oder ausschließlich ein Blockcopolymer verwendet, welches ein Multiarm-Blockcopolymer ist. Dieses wird durch die allgemeine Formel

$$Q_m\text{-}Y$$

beschrieben, worin Q einen Arm des Multiarm-Blockcopolymers repräsentiert und m wiederum die Anzahl an Armen darstellt, wobei m eine ganze Zahl von mindestens 3 ist. Y ist der Rest eines Multifunktionsverknüpfungsreagenzes, das zum Beispiel einem Kopplungsreagenz oder einem multifunktionalen Initiator entstammt. Insbesondere hat jeder Arm Q unabhängig die Formel A*-B*, wobei A* und B* jeweils unabhängig zu den übrigen Armen entsprechend der vorstehenden Definitionen für A beziehungsweise A' und B beziehungsweise B' gewählt werden, so dass jeweils A* einen glasartigen Block und B* einen Weichblock repräsentiert. Selbstverständlich ist es auch möglich, für mehrere Arme Q oder alle Arme Q identische A* und/oder identische B* zu wählen. Die Blöcke A, A' und A* werden im Folgenden gemeinsam als A-Blöcke bezeichnet. Die Blöcke B, B' und B* werden im Folgenden entsprechend gemeinsam als B-Blöcke bezeichnet.

A-Blöcke sind generell glasartige Blöcke mit jeweils einer Glasübergangstemperatur, die oberhalb der Raumtemperatur (unter Raumtemperatur sei im Zusammenhang dieser Erfindung 23 °C verstanden) liegt. In einigen vorteilhaften Ausführungsformen liegt die Glasübergangstemperatur des glasartigen Blockes bei mindestens 40 °C, bevorzugt bei mindestens 60 °C, noch bevorzugter bei mindestens 80 °C oder sehr bevorzugt bei mindestens 100 °C.

Das Vinylaromatenblockcopolymer weist weiterhin generell einen oder mehrere gummiartige B-Blöcke mit einer Glasübergangstemperatur von kleiner als Raumtemperatur auf. In einigen Ausführungsformen ist der $T_g$ des Weichblocks kleiner als -30 °C oder sogar kleiner als -60 °C.

Neben den genannten erfindungsgemäßen und besonders bevorzugten Monomeren für die B-Blöcke umfassen weitere vorteilhafte Ausführungsformen ein polymerisiertes konjugiertes Dien, ein hydriertes Derivat eines polymerisierten konjugierten Diens oder eine Kombinationen davon. In einigen Ausführungsformen umfassen die konjugierten Diene 4 bis 18 Kohlenstoffatome.

Bevorzugte konjugierte Diene als Monomere für den Weichblock B sind insbesondere ausgewählt aus der Gruppe bestehend aus Butadien, Isopren, Ethylbutadien, Phenylbutadien, Piperylen, Pentadien, Hexadien, Ethylhexadien und Dimethylbutadien sowie beliebigen Mischungen dieser Monomere. Auch der Block B kann als Homopolymer oder als Copolymer vorliegen.

Beispielhaft seien für weitere vorteilhafte konjugierte Diene für die B-Blöcke zusätzlich Ethylbutadien, Phenylbutadien, Piperylen, Pentadien, Hexadien, Ethylhexadien und Dimethylbutadien genannt, wobei die polymerisierten konjugierten Diene als Homopolymer oder als Copolymer vorliegen können.

Besonders bevorzugt sind die konjugierten Diene als Monomere für den Weichblock B ausgewählt aus Butadien und Isopren. Beispielsweise ist der Weichblock B ein Polyisopren, ein Polybutadien oder ein teil- oder vollhydriertes Derivat eines dieser beiden Polymere wie insbesondere Polybutylenbutadien; oder ein Polymer aus einem Gemisch aus Butadien und Isopren. Ganz besonders bevorzugt ist der Block B ein Polybutadien.

Der Anteil an A-Blöcke bezogen auf die gesamten Blockcopolymere beträgt dabei im Mittel bevorzugt 10 bis 40 Gew.-%, mehr bevorzugt 15 bis 33 Gew.-%.

Bevorzugt als Polymer für A-Blöcke wird Polystyrol. Bevorzugt als Polymere für B-Blöcke wird Polybutadien, Polyisopren, Polyfarnesen und deren teil- oder vollhydrierten Derivate wie Polyethylenbutylen, Polyethylenpropylen, Polyethylenethylenpropylen oder Polybutylenbutadien oder Polyisobutylen. Sehr bevorzugt wird Polybutadien. Gemische verschiedener Blockcopolymere können zum Einsatz kommen. Bevorzugt werden Triblockcopolymere ABA und/oder Diblockcopolymere AB eingesetzt.

Blockcopolymere können linear, radial oder sternförmig (Multiarm) sein.

Die vorstehend genannten Arten von Vinylaromatenblockcopolymeren werden auch bevorzugt in Haftklebemassen auf Basis von Vinylaromatenblockcopolymer eingesetzt.

<u>Weitere Komponenten der Haftklebemassen (insbesondere der speziellen Ausführungsform)</u>

Die erfindungsgemäß eingesetzten Haftklebmassen auf Polyacrylatbasis oder auf Basis enes Blends von Polyacrylat mit Synthesekautschuk wie Vinylaromatenblockcopolymer können insbesondere harzfrei sein, da die Polyacrylatkomponente häufig bereits selbst typischerweise Haftklebrigkeit aufweist und der haftklebrige Charakter auch dann erhalten bleibt, wenn die Elastomerkomponente zugegen ist. Trotzdem kann es von Interesse sein, die klebtechnischen Eigenschaften weiter zu verbessern oder auf spezielle Anwendungen hin zu optimieren, daher können den Klebemassen in vorteilhafter Weiterentwicklung der Erfindung Klebharze beigemischt werden. Haftklebemassen auf Basis von Vinylaromatenblockcopolymer enthalten typischerweise Klebharz.

Der Einsatz von Klebrigmachern, auch als Klebharze bezeichnet, zur Steigerung der Klebkräfte von Haftklebemassen ist grundsätzlich bekannt. Vorzugsweise werden der haftklebenden Acrylatmasse 15 bis 100 Gewichtsteile Klebrigmacher (bezogen auf die Polymere, also Acrylate plus gegebenenfalls Elastomere wie Synthesekautschuke) hinzugefügt, zumeist 20 bis 80 Gewichtsteile, weiter bevorzugt 30 bis 50 Gewichtsteile.

Unter einem "Klebharz" wird entsprechend dem allgemeinem Fachmannverständnis ein oligomeres oder polymeres Harz verstanden, das die Autoadhäsion (den Tack, die Eigenklebrigkeit) der Haftklebemasse im Vergleich zu der keinen Klebharz enthaltenden,ansonsten aber identischen Haftklebemasse erhöht.

Als Klebrigmacher sind prinzipiell alle bekannten Stoffklassen geeignet. Klebrigmacher sind beispielsweise nicht hydrierte, partiell, selektiv oder vollständig hydrierte Kohlenwasserstoffharze (zum Beispiel Polymere auf Basis ungesättigter $C_5$-, $C_5$-/$C_9$- oder $C_9$-Monomere), Terpenphenolharze, Polyterpenharze auf Basis von Rohstoffen wie zum Beispiel $\alpha$-, $\beta$-Pinen und/oder oder $\delta$-Limonen, aromatische Harze wie Cumaron-Inden-Harze oder Harze auf Basis Styrol oder $\alpha$-Methylstyrol wie Kolophonium und seine Folgeprodukte, zum Beispiel disproportioniertes, dimerisiertes oder verestertes Kolophonium, zum Beispiel Umsetzungsprodukte mit Glycol, Glycerin oder Pentaerythrit, um nur einige zu nennen. Bevorzugt werden Harze ohne leicht oxidierbare Doppelbindungen wie Terpenphenolharze, aromatische Harze und besonders bevorzugt Harze, die durch Hydrierung hergestellt sind wie zum Beispiel hydrierte Aromatenharze, hydrierte Polycyclopentadienharze, hydrierte Kolophoniumderivate oder hydrierte Polyterpenharze.

Bevorzugt sind Harze auf Basis von Terpenphenolen und Kolophoniumestern. Ebenfalls bevorzugt sind Klebharze mit einem Erweichungspunkt oberhalb von 80 °C gemäß ASTM E28-99 (2009). Besonders bevorzugt sind Harze auf Basis von Terpenphenolen und Kolophoniumestern mit einem Erweichungspunkt oberhalb von 90 °C gemäß ASTM E28-99 (2009).

Zur weiteren Verbesserung der Eigenschaften kann die Klebmasseformulierung optional mit Lichtschutz- oder primären und/oder sekundären Alterungsschutzmitteln abgemischt sein.

Als Alterungsschutzmittel können Produkte auf Basis sterisch gehinderter Phenole, Phosphite, Thiosynergisten, sterisch gehinderter Amine oder UV-Absorber eingesetzt werden.

Bevorzugt eingesetzt werden primäre Antioxidantien wie zum Beispiel Irganox 1010 oder Irganox 254, allein oder in Kombination mit sekundären Antioxidantien wie zum Beispiel Irgafos TNPP oder Irgafos 168.

Die Alterungsschutzmittel können dabei in beliebiger Kombination miteinander verwendet werden, wobei Mischungen aus primären und sekundären Antioxidantien in Kombination mit Lichtschutzmitteln wie zum Beispiel Tinuvin 213 besonders gute Alterungsschutzwirkung zeigen.

Ganz besonders vorteilhaft haben sich Alterungsschutzmittel erwiesen, in denen ein primäres Antioxidans mit einem sekundären Antioxidans in einem Molekül vereint ist. Bei diesen Alterungsschutzmitteln handelt es sich um Kresolderivate, deren aromatischer Ring an zwei beliebigen unterschiedlichen Stellen, bevorzugt in ortho- und meta-Stellung zur OH-Gruppe mit Thioalkylketten substituiert ist, wobei das Schwefelatom auch über eine oder mehrere Alkylketten an dem aromatischen Ring des Kresolbausteins verbunden sein kann. Die Anzahl der Kohlenstoffatome zwischen dem Aromaten und dem Schwefelatom kann zwischen 1 und 10, bevorzugt zwischen 1 und 4 liegen. Die Anzahl der Kohlenstoffatome der Alkylseitenkette kann zwischen 1 und 25, bevorzugt zwischen 6 und 16 liegen. Besonders bevorzugt sind hierbei Verbindungen des Typs 4,6-Bis(dodecylthiomethyl)-ocresol, 4,6-Bis(undecylthiomethyl)-o-cresol, 4,6-Bis(decylthiomethyl)-o-cresol 4,6-Bis(nonylthiomethyl)-o-cresol oder 4,6-Bis(octylthiomethyl)-o-cresol. Derartige Alterungsschutzmittel werden zum Beispiel von der Firm Ciba Geigy unter dem Namen Irganox 1726 oder Irganox 1520 angeboten.

Die Menge des zugesetzten Alterungsschutzmittels beziehungsweise Alterungsschutzmittelpaketes sollte in einem Bereich zwischen 0,1 und 10 Gew.-Teilen, bevorzugt in einem Bereich zwischen 0,2 und 5 Gew.-Teilen, besonders bevorzugt in einem Bereich zwischen 0,5 und 3 Gew.-Teilen bezogen auf den Polymergehalt (Acrylate plus gegebenenfalls Elastomere wie Synthesekautschuke) liegen.

Zur Verbesserung der Verarbeitungseigenschaften kann die Formulierung weiterhin mit üblichen Prozesshilfsmitteln wie Rheologieadditiven (Verdicker), Entschäumern, Entlüftern, Netzmitteln oder Verlaufsmitteln abgemischt sein. Geeignete Konzentrationen liegen im Bereich von 0,1 bis zu 5 Gewichtsteilen bezogen auf den Polymergeghalt (Acrylate plus gegebenenfalls Elastomere wie Synthesekautschuke).

Füllstoffe (verstärkend oder nicht verstärkend) wie Siliziumdioxide (sphärisch, nadelförmig, plättchenförmig oder unregelmäßig wie die pyrogenen Silicas), Kalziumcarbonate, Zinkoxide, Titandioxide, Aluminiumoxide oder Aluminiumoxidhydroxide können sowohl der Justierung der Verarbeitbarkeit als auch der klebtechnischen Eigenschaften dienen. Geeignete Konzentrationen liegen im Bereich von 0,1 bis zu 20 Gewichtsteilen bezogen auf den Polymergeghalt

(Acrylate plus gegebenenfalls Elastomere wie Synthesekautschuke).

Die haftklebende Acrylatmasse der Haftklebemasseschichten umfasst gemäß einer bevorzugten Ausführungsform der Erfindung eine Polymermischung aus Acrylaten und Synthesekautschuken, wobei der Polymermischung ein oder mehrere Vernetzer sowie Klebrigmacher zugemischt sind.

Gemäß einer weiteren bevorzugten Ausführungsform enthalten die Haftklebemasseschichten Schwarzpigment wie Ruß. Besonders bevorzugt liegt der Anteil bei zwischen 0,1 Gew.-Teilen und 10 Gew.-Teilen bezogen auf die Gesamtzusammensetzung der jeweiligen Schicht.

Schäumung und Ausgestaltung der Haftklebemasseschichten

In einer bevorzugten Ausführungsform sind die Haftklebemasseschichten geschäumt. Bevorzugt wird der Schaum durch das Einbringen und nachfolgende Expandieren von Mikroballons erhalten.

Unter "Mikroballons" werden elastische und somit in ihrem Grundzustand expandierbare Mikrohohlkugeln verstanden, die eine thermoplastische Polymerhülle aufweisen. Diese Kugeln sind mit niedrigsiedenden Flüssigkeiten oder verflüssigtem Gas gefüllt. Als Hüllenmaterial finden insbesondere Polyacrylnitril, PVDC, PVC oder Polyacrylate Verwendung. Als niedrigsiedende Flüssigkeit sind insbesondere Kohlenwasserstoffe der niederen Alkane, beispielsweise Isobutan oder Isopentan geeignet, die als verflüssigtes Gas unter Druck in der Polymerhülle eingeschlossen sind.

Durch ein Einwirken auf die Mikroballons, insbesondere durch eine Wärmeeinwirkung, erweicht die äußere Polymerhülle. Gleichzeitig geht das in der Hülle befindliche flüssige Treibgas in seinen gasförmigen Zustand über. Dabei dehnen sich die Mikroballons irreversibel aus und expandieren dreidimensional. Die Expansion ist beendet, wenn sich der Innen- und der Außendruck ausgleichen. Da die polymere Hülle erhalten bleibt, erzielt man so einen geschlossenzelligen Schaum.

Es ist eine Vielzahl an Mikroballontypen kommerziell erhältlich, welche sich im Wesentlichen über ihre Größe (6 bis 45 μm Durchmesser im unexpandierten Zustand) und ihre zur Expansion benötigten Starttemperaturen (75 bis 220 °C) differenzieren. Ein Beispiel für kommerziell erhältliche Mikroballons sind die Expancel® DU-Typen (DU = dry unexpanded) von der Firma Akzo Nobel.

Unexpandierte Mikroballontypen sind auch als wässrige Dispersion mit einem Feststoffbeziehungsweise Mikroballonanteil von ca. 40 bis 45 Gew.-% erhältlich, weiterhin auch als polymergebundene Mikroballons (Masterbatche), zum Beispiel in Ethylvinylacetat mit einer Mikroballonkonzentration von ca. 65 Gew.-%. Sowohl die Mikroballon-Dispersionen als auch die Masterbatche sind wie die DU-Typen zur Herstellung einer geschäumten erfindungsgemäßen Haftklebemasse geeignet.

Geschäumte Haftklebemasseschichten können auch mit sogenannten vorexpandierten Mikroballons erzeugt werden. Bei vorexpandierten Mikroballons findet eine Expansion schon vor der Einmischung in die Polymermatrix statt. Vorexpandierte Mikroballons sind beispielsweise unter der Bezeichnung Dualite® oder mit der Typenbezeichnung Expancel xxx DE yy (Dry Expanded) von der Firma Akzo Nobel kommerziell erhältlich."xxx" steht die Zusammensetzung der Mikroballonsabmischung. "yy" steht für die Größe der Mikroballons im expandierten Zustand.

Bei der Verarbeitung von bereits expandierten Mikroballontypen kann es passieren, dass die Mikroballons aufgrund ihrer geringen Dichte in der Polymermatrix, in die diese eingearbeitet werden sollen, zur Flotation neigen, also in der Polymermatrix während des Verarbeitungsprozesses "nach oben" aufschwimmen. Dies führt zu einer ungleichmäßigen Verteilung der Mikroballons in der Schicht. Im oberen Bereich der Schicht (z-Richtung) sind mehr Mikroballons anzutreffen als im unteren Bereich der Schicht, so dass sich ein Dichtegradient über die Schichtdicke einstellt.

Um einen solchen Dichtegradienten weitgehend oder nahezu vollständig zu verhindern, werden erfindungsgemäß bevorzugt nicht oder nur wenig vorexpandierte Mikroballons in die Polymermatrix der Haftklebemasseschichten eingearbeitet. Erst nach dem Einarbeiten in die Schicht werden die Mikroballons expandiert. Auf diese Weise ergibt sich eine gleichmäßigere Verteilung der Mikroballons in der Polymermatrix.

Vorzugsweise werden die Mikroballons so gewählt, dass das Verhältnis der Dichte der Polymermatrix zu der Dichte der in die Polymermatrix einzuarbeitenden (nicht oder nur wenig vorexpandierten) Mikroballons zwischen 1 und 1:6, also:

$$\frac{\text{Dichte der Polymermatrix}}{\text{Dichte der einzuarbeitenden Mikroballons}} = 1\ bis\ 1{,}6$$

liegt. Erst nach oder unmittelbar bei der Einarbeitung erfolgt dann die Expansion. Bei Lösungsmittelhaltigen Massen werden die Mikroballons bevorzugt erst nach dem Einarbeiten, Beschichten, Trocknen (Lösungsmittelabdampfen) expandiert. Erfindungsgemäß bevorzugt werden daher DU-Typen verwendet.

Erfindungsgemäß beträgt der mittlere Durchmesser der von den Mikroballons gebildeten Hohlräume in den geschäumten Haftklebemasseschichten vorzugsweise 10 bis 200 μm, stärker bevorzugt von 15 bis 200 μm. Da hierbei

die Durchmesser der von den Mikroballons gebildeten Hohlräume in den geschäumten Haftklebemasseschichten vermessen werden, handelt es sich bei den Durchmessern um jene Durchmesser der von den expandierten Mikroballons gebildeten Hohlräume. Mit dem mittleren Durchmesser ist dabei das arithmetische Mittel der Durchmesser der von den Mikroballons gebildeten Hohlräume in der Haftklebemasseschicht gemeint. Die Bestimmung des mittleren Durchmessers der von den Mikroballons gebildeten Hohlräume in einer Haftklebemasseschicht erfolgt anhand von 5 verschiedenen Kryobruchkanten des Klebebands im Rasterelektronenmikroskop (REM) bei 500-facher Vergrößerung. Die Durchmesser der auf den Aufnahmen zu sehenden Mikroballons werden graphisch derart ermittelt, dass aus den REM-Aufnahmen für jeden einzelnen Mikroballon der zu untersuchenden Haftklebemasseschicht dessen maximale Ausdehnung in beliebiger (zweidimensionaler) Richtung entnommen wird und als dessen Durchmesser angesehen wird.

Sofern es sich bei der erfindungsgemäß verwendeten Haftklebemasse um eine mit einer Elastomerkomponente geblendete Acrylatmasse handelt, liegt die Größe der Elastomer-Domänen in ihrer größten Ausdehnung typischerweise zwischen 0,5 µm und 150 µm, insbesondere zwischen 1 µm und 30 µm, siehe oben. In besonders bevorzugter Weise liegen dann der mittlere Durchmesser der von den Mikroballons gebildeten Hohlräume und der mittlere Durchmesser der Domänen der Elastomerkomponente im selben Größenbereich unterhalb von 100 µm, insbesondere jeweils im Bereich zwischen 10 µm und 30 µm. Der mittlere Durchmesser der Domänen der Elastomerkomponente wird analog dem mittleren Durchmesser der von den expandierten Mikroballons gebildeten Hohlräume bestimmt.

Wird mittels Mikroballons geschäumt, dann können die Mikroballons als Batch, Paste oder als unverschnittenes oder verschnittenes Pulver der Formulierung zugeführt werden. Des Weiteren können sie in Lösungsmittel suspendiert vorliegen.

Der Anteil der Mikroballons in den Haftklebemasseschichten liegt gemäß einer bevorzugten Ausführungsform der Erfindung zwischen größer 0 Gew.-% und 12 Gew.-%, insbesondere zwischen 0,25 Gew.-% und 5 Gew.-%, noch bevorzugter zwischen 0,5 und 3 Gew.-%, jeweils bezogen auf die Gesamtzusammensetzung (einschließlich eingemischter Mikroballons) der entsprechenden Schicht. Die Angaben beziehen sich jeweils auf unexpandierte Mikroballons.

Eine expandierbare Mikrohohlkugeln enthaltende Polymermasse der Haftklebemasseschichten darf zusätzlich auch nicht-expandierbare Mikrohohlkugeln enthalten. Entscheidend ist nur, dass nahezu alle Gas beinhaltenden Kavernen geschlossen sind durch eine dauerhaft dichte Membran, egal ob diese Membran nun aus einer elastischen und thermoplastisch dehnbaren Polymermischung besteht oder etwa aus elastischem und - im Spektrum der in der Kunststoffverarbeitung möglichen Temperaturen - nicht-thermoplastischem Glas.

Geeignet für die Haftklebemasseschichten sind außerdem - unabhängig gewählt von anderen Additiven - Polymervollkugeln wie PMMA-Kugeln, Glashohlkugeln, Glasvollkugeln, Phenolharzkugeln, keramische Hohlkugeln, keramische Vollkugeln und/oder Kohlenstoffvollkugeln ("Carbon Micro Balloons").

Die absolute Dichte der geschäumten Haftklebemasseschichten beträgt bevorzugt 350 bis 950 kg/m$^3$, stärker bevorzugt 450 bis 930 kg/m$^3$, insbesondere 570 bis 880 kg/m$^3$. Die relative Dichte beschreibt das Verhältnis der Dichte der jeweils geschäumten Schicht zur Dichte der entsprechenden rezepturidentischen, ungeschäumten Schicht. Die relative Dichte der Haftklebemasseschichten beträgt vorzugsweise 0,35 bis 0,99, stärker bevorzugt 0,45 bis 0,97, insbesondere 0,50 bis 0,90.

In einer Ausführungsform der Erfindung sind eine oder beide Oberflächen der Haftklebemasseschichten physikalisch und/oder chemisch vorbehandelt. Eine solche Vorbehandlung kann beispielweise durch Plasmavorbehandlung und/oder Primerung erfolgen. Sofern beide Oberflächen der Haftklebemasseschichten vorbehandelt sind, kann die Vorbehandlung jeder Oberfläche unterschiedlich erfolgen oder insbesondere können beide Oberflächen gleich vorbehandelt sein.

Die Plasma-Behandlung - insbesondere Niederdruck-Plasmabehandlung - ist ein bekanntes Verfahren zur Oberflächenvorbehandlung von Klebemassen. Das Plasma führt zu einer Aktivierung der Oberfläche im Sinne einer höheren Reaktivität. Dabei kommt es zu chemischen Veränderungen der Oberfläche, wodurch zum Beispiel das Verhalten der Klebemasse gegenüber polaren und unpolaren Oberflächen beeinflusst werden kann. Bei dieser Vorbehandlung handelt es sich im Wesentlichen um Oberflächenphänomene.

Als Primer werden allgemein Beschichtungen oder Grundierungen bezeichnet, die insbesondere haftvermittelnde und/oder passivierende und/oder korrosionshemmende Wirkung besitzen. Im Rahmen der vorliegenden Erfindung kommt es insbesondere auf die haftvermittelnde Wirkung an.

Haftvermittelnde Primer, oft auch Haftvermittler oder Adhesion Promoter genannt, sind vielfach in Form von kommerziellen Produkten oder aus der technischen Literatur bekannt.

Die erfindungsgemäßen Haftklebemasseschichten sind typischerweise 20 bis 300 µm dick, vorzugsweise 50 bis 200 µm dick und insbesondere 100 bis 150 µm dick. Die erfindungsgemäßen Klebebänder sind typischerweise 40 bis 850 µm, vorzugsweise 150 bis 600 µm und insbesondere 250 bis 400 µm dick.

Die Herstellung und Verarbeitung der Haftklebemassen kann sowohl aus der Lösung, als auch aus der Schmelze erfolgen. Das Aufbringen der Haftklebemassen kann durch direkte Beschichtung oder durch Laminierung, insbesondere Heißlaminierung erfolgen.

Vernetzung der Haftklebemasseschichten:

Die Haftklebemasseschichten liegen in dem erfindungsgemäßen Haftklebeband bevorzugt vernetzt vor, insbesondere falls es sich um eine Haftklebemasse auf Polyacrylat-Basis oder auf Basis eines Blends von Polyacrylat mit Synthesekautschuk wie Vinylaromatenblockcopoylmer handelt. Die Vernetzung findet dabei bevorzugt an der zur Schicht beziehungsweise zum Film ausgebildeten Haftklebemasse statt.

Die Vernetzungsreaktion kann dabei insbesondere wie folgt ablaufen:
In einer vorteilhaften Vorgehensweise werden die beiden Substanzen als Reinstoff oder in einem geeigneten Lösemittel vorgelöst zu dem in Lösung vorliegenden Polymer gegeben, dann das Polymer mit den Vernetzern gut durchgemischt, auf einen temporären oder permanenten Träger beschichtet und dann unter geeigneten Bedingungen getrocknet, wobei die Vernetzung stattfindet.

In einer optionalen, insbesondere für sehr reaktive Systeme geeigneten Vorgehensweis wird zunächst einer der Vernetzer in Reinform oder vorgelöst zu der Polymerlösung gegeben. Der zweite Vernetzer wird erst kurz vor der Beschichtung zugeführt, zum Beispiel über eine Inline-Dosierung mit nachgeschaltetem aktivem oder statischem Mischer und anschließender Beschichtung und Trocknung.

Die Topfzeit (Verarbeitungszeit) der koordinativen Vernetzer kann durch Zugabe der zuvor beschriebenen Liganden zu der Polymer-Vernetzer-Lösung erhöht werden. Der Ligandenüberschuss wird dann bei der Trocknung entfernt; erst ab dann sind die koordinativen Vernetzer (voll) reaktiv.

Die Trocknungsbedingungen (Temperatur und Verweilzeit) werden sehr bevorzugt so gewählt, dass nicht nur das Lösungsmittel entfernt wird, sondern auch die Vernetzung auch zu einem Großteil abgeschlossen ist, so dass ein stabiles Vernetzungsniveau - insbesondere bei höheren Temperaturen - erreicht wird. Insbesondere wird die Klebemasse vollständig vernetzt.

Unter vollständiger Vernetzung einer Klebemasse wird erfindungsgemäß verstanden, dass deren maximale Scherstrecke "max" im Mikroscherweg-Test bei den dort genannten Bedingungen bei wiederholter (beispielweise täglicher) Mikroscherweg-Messung innerhalb einer Periode von 48 Stunden nur im Rahmen der Genauigkeit der Messmethode (etwa bis zu maximal 5 %) ändert, wenn die Klebmasse bei Raumtemperatur (23 °C) bei ansonsten Normbedingungen gelagert wird.

Der Nachweis der vollständigen Vernetzung kann je nach Anwendungsgebiet der Klebemasse auch für andere Temperaturen (zum Beispiel 40 °C, insbesondere solchen Temperaturen, die den jeweiligen Anwendungstemperaturen entsprechen) durchgeführt werden.

Verwendung des Klebebands:

In vorteilhafter Weise kann das erfindungsgemäße Haftklebeband zum Verkleben von Bauteilen feinmechanischer, optischer, elektrischer und/oder elektronischer Geräte eingesetzt werden, zum Beispiel bei deren Herstellung, Reparatur, Verzierung oder dergleichen. Dabei können beispielsweise Materialien wie Kunststoffe, Gläser, Metalle und dergleichen zur Verklebung kommen.

Das erfindungsgemäße Haftklebeband eignet sich insbesondere auch zur permanenten Verklebung von flexiblen Materialien, insbesondere bei der Herstellung flexibler Displays. Solche Displays nehmen an Bedeutung zu.

In vorteilhafter Weise kann das erfindungsgemäße Haftklebeband zum Verkleben von Fenstern oder Linsen in Gehäusen feinmechanischer, optischer und/oder elektronischer Geräte (sogenanntes "Lens Mounting") eingesetzt werden. Dabei ist zumindest eines der starren oder flexiblen Substrate durchsichtig (transparent) oder durchscheinend (transluzent). Das durchsichtige beziehungsweise durchscheinende Substrat kann beispielweise ein Fenster oder eine optische Linse zum Zwecke des Schutzes darunter angeordneter empfindlicher Komponenten - solche Komponenten können beispielweise Flüssigkristallanzeigen (LCD), Leuchtdioden (LED) oder organische Leuchtdioden (OLED) von Displays, aber auch gedruckte Schaltungen oder andere empfindliche elektronische Bauteile sein; dies spielt beispielweise bei der Anwendung für berührungsempfindliche Displays eine große Rolle - und/oder zur Bewirkung optischer Effekte für die Funktion des Gerätes - zum Beispiel Lichtbrechung, Lichtbündelung, Lichtabschwächung, Lichtverstärkung usw. - sein.

Sehr vorteilhaft wird das transparente Substrat derart gewählt, dass es einen Haze-Wert von höchstens 50 %, bevorzugt von nicht mehr als 10 %, sehr bevorzugt von nicht mehr als 5 % (gemessen nach ASTM D 1003) aufweist.

Das zweite Substrat ist vorzugsweise ebenfalls ein Bauteil eines feinmechanischen, optischen und/oder elektronischen Gerätes. Insbesondere ist hier an Gehäuse solcher Geräte oder an Halterungen für wie vorstehend beschriebene Fenster beziehungsweise Linsen zu denken.

In einer bevorzugten Vorgehensweise ist das durchsichtige beziehungsweisedurchscheinende Substrat ein Substrat aus Glas, Polymethylmethacrylat und/oder Polycarbonat.

Insbesondere kann das zweite Substrat aus Kunststoffen wie Acrylnitril-Butadien-Styrol-Copolymeren (ABS), Polyamid oder Polycarbonat bestehen, die insbesondere auch glasfaserverstärkt sein können; oder aus Metallen, wie

Aluminium - auch anodisiertes (eloxiertes) Aluminium - oder Magnesium und Metalllegierungen.

Auch den Substrat-Materialien können Additive, wie beispielsweise Farbstoffe, Lichtschutzmittel, Alterungsschutzmittel, Weichmacher oder dergleichen beigemischt sein, sofern dies für den beabsichtigten Einsatzzweck vorteilhaft ist; bei durchsichtigen oder durchscheinenden Materialien insbesondere insoweit, als es diese optischen Eigenschaften nicht oder nur in vertretbarem Maße stört.

Erfindungsgemäß ist der erfindungsgemäße Verbund somit ein Bauteil eines elektronischen, optischen oder feinmechanischen Geräts, wie es in der obigen Tabelle angeführt ist.

Verfahren zur Herstellung von TPU-Trägern mittels Extrusion:

Figur 1 zeigt beispielhaft das Verfahren zur Herstellung von TPU-Trägern mittels Extrusion von TPU und bahnförmiger Ausformung. Darin haben die Bezugszeichen die folgende Bedeutung:

A: Ausgangsstoffe: alle zu Herstellung des Gemisches G benötigten Materialien
G: homogenes Gemisch
1: kontinuierliches Mischaggregat oder Förderaggregat mit Mischzonen, zum Beispiel Einschnecken- oder Doppelschneckenextruder, Planetwalzenextruder oder Ähnliches
11: Heizzonen des kontinuierlichen Mischaggregates
12: Auslass des kontinuierlichen Mischaggregates oder Förderaggregates mit Mischteil
13: diverse Dosieröffnungen, unterschiedliche Bauarten
2: optionaler Heizschlauch, Heizzone, nicht in allen Prozessführungen notwendig
3: Düse zur Vorausformung des Extrudats, z.B. Breitschlitzdüse, Koextrusionsdüse, Mehrschichtdüse
4: Beschichtungseinheit, Auftragswerk, Ablagewalze mit oder ohne Gegendruckwalze, Kalander, oder Ähnliches, gekühlt oder beheizbar

Nicht abgebildet sind:

- Systeme zur Oberflächenbehandlung der Trägermaterialien oder gefertigten Schichten, wie z.B. Corona, UV oder Ähnliches
- Abwickelstationen - zur Vorlage von Folien mit oder ohne Releaseeigenschaften, Trägern, Textilträgern oder Ähnliches
- Aufwickelstationen - zur Aufwicklung des Endproduktes, Hilfsträgern oder Ähnlichem
- Dosieraggragate, -systeme

a) Extrusion und Beschichtung von kompaktem TPU:

Alle Bestandteile der herzustellenden Rezeptur basierend auf TPU werden zunächst in einem Granulattrockner (T = 90°C, 3h) getrocknet und anschließend einem kontinuierlichen Misch- oder Förderaggregat mit Mischteil 1 über Dosieröffnungen 13 und Dosier- oder Fördersysteme zugeführt. Die Temperaturführung erfolgt entsprechend der benötigten optimalen Bedingungen für die Herstellung einer homogenen Mischung G.

Der Auslass 12 des kontinuierlichen Förderaggregates mit Mischteil oder Mischaggregates bzw. die weiteren Bauteile zur Förderung des Extrudats zur Vorausformung über eine Düse oder Verteilerkanals oder direkt zur Beschichtungseinheit 4 können unterschiedlich gestaltet sein. Um eine Flachfolie zu beschichten, eignet sich eine Breitschlitzdüse zur Vorausformung des Exdrudats bzw. eines Schmelzefilms. Dieser wird entweder direkt auf eine rotierende, in der Regel gekühlte Walze abgelegt (sogenannte Chillroll), wobei zusätzlich über die Abzugsgeschwindigkeit die Schichtdicke reguliert werden kann. Oder es wird direkt auf ein Vormaterial, wie z.B. (temporären) Träger oder Funktionsschicht, wie insbesondere eine Haftklebemasseschicht, beschichtet.

In einem besonders vorteilshaften, erfindungsgemäßen Verfahren wird das zuvor homogenisierte Gemisch, Extrudat über eine Breitschlitzdüse zu einem Schmelzefilm ausgeformt und direkt auf eine erste Klebmassenschicht beschichtet, die auf einem temporären Träger, wie insbesondere einem (silikonisiertem) Liner, angeordnet ist. Diese vorgefertigte Funktionsschicht wird zuvor über eine Abwickelstation über die Kühlwalze zugeführt.

Dieser Verbund aus temporärem Träger (Liner), Klebmassen- und PU-Schicht wird vor der Aufwicklung zum Ballen mit einer zweiten vorgefertigten Klebmassenschicht auf einem temporären Träger (wie insbesondere Releaseliner) kaschiert. Das Endprodukt besteht nun aus drei Schichten (Klebmasse-PU-Träger-Klebmasse), eingedeckt zwischen zwei temporären Trägern (wie insbesondere Linern). Ein temporärer Träger (wie insbesondere ein Liner) kann vor der Aufwicklung zum Ballen ausgedeckt werden.

Diese Verfahrensweise hat viele Vorteile: ein mehrlagiges Produkt kann besonders effizient hergestellt werden, die Verbundfestigkeit/ Verankerung zwischen Klebmasse (oder Funktions-/ Trägerschicht jeglicher Art) und TPU-Schicht

wird verbessert, der oft problematische Zwischenschritt der Transferbeschichtung (TPU auf Release-Träger) wird einfach vermieden. So werden auch besonders weiche TPU-Typen für die Produktion zugänglich und Prozesshilfsmittel, wie Wachse und/oder Gleitmittel, koextrudierte Stützträger oder zusätzliche Hilfsliner wie sie üblicherweise bei der Herstellung von TPU-Trägern benötigt werden, entfallen.

b) Extrusion und Beschichtung von geschäumtem TPU:

Alle Bestandteile der herzustellenden Rezeptur, basierend auf TPU (nach Trocknung), inklusive der unexpandierten Mikroballons, werden einem kontinuierlichen Misch- oder Förderaggregat mit Mischteil 1 über Dosieröffnungen 13 und Dosier- oder Fördersysteme zugeführt. Die Temperaturführung erfolgt entsprechend der benötigten optimalen Bedingungen für die Herstellung einer homogenen Mischung G und der Schäumung der Mikroballons. Bis zum Auslass 12 besteht ein kontinuierlicher Gegendruck, um eine vorzeitige Expansion der Mikroballons zu vermeiden.

Der Auslass 12 des kontinuierlichen Förderaggregates mit Mischteil oder Mischaggregates bzw. die weiteren Bauteile zur Förderung des Extrudats zur Vorausformung über eine Düse oder Verteilerkanals oder direkt zur Beschichtungseinheit 4 können unterschiedlich gestaltet sein. Um eine Flachfolie zu beschichten, eignet sich eine Breitschlitzdüse zur Vorausformung des Exdrudats bzw. eines Schmelzefilms. Um die expandierenden Mikroballons daran zu hindern, die beschichtete Oberfläche zu durchbrechen und somit eine raue Oberfläche zu erzeugen, welche wiederum eine schlechte Verankerung zur Funktionsschicht hervorruft, wird ein Gegendruck während des Beschichtungsvorgangs benötigt. Dies kann z.B. eine Gegendruckwalze, Presseur auf der Beschichtungswalze sein oder die Beschichtung wird direkt in einem Kalander durchgeführt. Auch hier kann direkt auf ein Vormaterial, wie z.B. einen (temporären) Träger oder eine Funktionsschicht, wie insbesondere eine Haftklebemasseschicht, beschichtet werden.

Dieser Verbund aus temporärem Träger (Liner), Klebmassen- und PU-Schicht wird vor der Aufwicklung zum Ballen mit einer zweiten vorgefertigten Klebmassenschicht auf einem temporären Träger (wie insbesondere Releaseliner) oder jeglicher anderen Art von Funktionsschicht auf die gegenüberliegende Seite kaschiert.

Das Endprodukt besteht nun aus drei Schichten (Klebmasse- geschäumtem PU Träger-Klebmasse), eingedeckt zwischen zwei temporären Trägern (wie Linern). Ein temporärer Träger (Liner) kann vor der Aufwicklung zum Ballen ausgedeckt werden. Die Direktbeschichtung auf zusätzliche Funktionsschichten hat viele Vorteile: ein mehrlagiges Produkt kann besonders effizient hergestellt werden; die Verbundfestigkeit/ Verankerung zwischen Klebmasse oder Funktions-/ Trägerschicht jeglicher Art und TPU-Schicht wird verbessert; der oft problematische Zwischenschritt der Transferbeschichtung (TPU auf Release-Träger) wird einfach vermieden. So werden auch besonders weiche TPU Typen für die Produktion zugänglich und Prozesshilfsmittel, wie Wachse und/oder Gleitmittel, koextrudierte Stützträger oder zusätzliche Hilfsliner wie sie üblicherweise bei der Herstellung von TPU-Trägern benötigt werden, entfallen.

Geschlossenzellige, Mikroballons enthaltende TPU-Schäume sind kommerziell nicht erhältlich, so dass dieses erfindungsgemäße Verfahren und die daraus resultierenden Trägerschichten die Basis für innovative Produkte bilden.

Weitere Optionen zur Herstellung offenzelliger TPU-Schäume stehen zur Verfügung: die Zugabe von chemischen Treibmitteln oder die gezielte Injektion von Gas, d.h. physikalischem Treibmittel.

Das chemische Treibmittel wird direkt mit den Ausgangsstoffen in das kontinuierliche Förderaggregat mit Mischteil oder über eine der zusätzlichen Dosieröffnungen hinzugegeben. Die Verarbeitung und Beschichtung erfolgen wie oben beschrieben.

Die Injektion von Gas erfolgt über eine zusätzliche Dosieröffnung in den Extruder, in die Schmelzemischung. Die Zuführung des Gases erfolgt geregelt, so dass der Gasanteil in der Mischung und die resultierende Dichte eingestellt werden kann. Die Verarbeitung und Beschichtung erfolgt wie oben beschrieben.

<u>Verfahren zur Herstellung von PU-Trägern aus Dispersion:</u>

a) Herstellung und Beschichtung von PU-Dispersionen:

Für die Herstellung einer homogenen, blasenfreien Dispersionsmischung ist ein für Dispersionen geeignetes Rührequipment notwendig. Verdicker und / oder andere Additive werden zumeist mit Wasser vordispergiert und anschließend unter stetigem vorsichtigem Rühren portionsweise der PU-Dispersion zugeführt.

Beim Rührprozess sollten Tromben oder zu schnelle Drehzahlen vermieden werden, um ein ungewolltes Einrühren von Luft zu verhindern. Es ist ratsam, die Abmischung einige Stunden vor der Beschichtung anzufertigen, um ein Entweichen von eingerührten Luftbläschen zu begünstigen.

Die Beschichtung kann über unterschiedliche Auftragswerke, wie z.B. Rakel, Düse oder Verteilerkanäle usw. erfolgen. Die Trocknung der beschichteten PU-Dispersion erfolgt über Wärmezufuhr in einem Trockenkanal mit unterschiedlichen Heizzonen. Die Beschichtung der PU-Dispersion kann entweder auf einen (temporären) Träger oder direkt auf eine Funktionsschicht, wie insbesondere eine Haftklebemasseschicht, erfolgen. Nach der Trocknung und vor der Aufwicklung kann eine zweite Funktionsschicht auf die gegenüberliegende Seite dazu kaschiert werden, so dass ein

mehrlagiges Produkt in einem Schritt hergestellt werden kann. Der so hergestellte Mehrschichtverbund wird zu einem Ballen aufgewickelt. Ein Liner oder anderer Hilfsträger können zuvor ausgedeckt werden.

Diese Verfahrensweise hat viele Vorteile: ein mehrlagiges Produkt kann besonders effizient hergestellt werden, die Verbundfestigkeit/ Verankerung zwischen Klebmasse oder Funktions-/ Trägerschicht jeglicher Art und PU-Schicht wird verbessert, der oft problematische Zwischenschritt der Transferbeschichtung (PU auf Release-Träger) wird einfach vermieden.

Die PU-basierte Trägerschicht aus Dispersion oder das Klebeband, das diese Schicht enthält, wird zudem üblicherweise einer Temperierung bei mindestens 150 °C unterzogen, um die Zugfestigkeit zu optimieren.

b) Herstellung und Beschichtung von schäumbaren PU-Dispersionen:

Für die Herstellung einer homogenen, blasenfreien, mit Mikroballons schäumbaren Dispersionsmischung ist ein für Dispersionen geeignetes Rührequipment notwendig. Verdicker und, oder andere Additive, wie auch die unexpandierten Mikroballons werden zumeist mit Wasser vordispergiert und anschließend unter stetigem, vorsichtigem Rühren portionsweise der PU-Dispersion zugeführt. Beim Rührprozess sollten Tromben oder zu schnelle Drehzahlen vermieden werden, um ein ungewolltes Einrühren von Luft zu verhindern. Es ist ratsam, die Abmischung einige Stunden vor der Beschichtung anzufertigen, um ein Entweichen von eingerührten Luftbläschen zu begünstigen.

Die Beschichtung kann über unterschiedliche Auftragswerke, wie z.B. Rakel, Düse oder Verteilerkanäle usw. erfolgen. Die Trocknung der beschichteten PU-Dispersion erfolgt über Wärmezufuhr unterhalb der Schäumungstemperatur in einem Trockenkanal mit unterschiedlichen Heizzonen. Die Beschichtung der PU-Dispersion kann entweder auf einen (temporären) Träger oder direkt auf eine Funktionsschicht wie insbesondere eine Haftklebemasseschicht erfolgen. Nach der Trocknung und vor der Aufwicklung kann eine zweite Funktionsschicht auf die gegenüberliegende Seite dazu kaschiert werden, so dass ein mehrlagiges Produkt in einem Schritt hergestellt werden kann.

Der so hergestellte Mehrschichtverbund wird zu einem Ballen aufgewickelt. Ein Liner oder anderer Hilfsträger können zuvor ausgedeckt werden. Diese Verfahrensweise hat viele Vorteile: ein mehrlagiges Produkt kann besonders effizient hergestellt werden, die Verbundfestigkeit/ Verankerung zwischen Klebmasse oder Funktions-/ Trägerschicht jeglicher Art und PU-Schicht wird verbessert, der oft problematische Zwischenschritt der Transferbeschichtung (PU auf Release-Träger) wird einfach vermieden.

In einem weiteren Arbeitsschritt wird der Gesamtverbund oder eine einzelne Schicht des schäumbaren PU-Trägers, doppelt mit temporärem Träger, wie insbesondere Hilfsliner, eingedeckt, durch weitere Zufuhr von Wärme durch einen Heizkanal oder heizbare Kontaktwalzen teilweise oder vollständig geschäumt bzw. die Mikroballons expandiert. Durch die doppelte Eindeckung des schäumbaren PU-Trägers mit Träger, Hilfsliner oder Funktionsschicht wird ein Durchbrechen der Oberfläche der expandierenden Mikroballons verhindert, so dass eine gute Verbundfestigkeit zwischen den einzelnen Schichten erreicht wird. Durch die Schäumung mit Mikroballons wird ein geschlossenzelliger PU-Schaum erzeugt. Üblicherweise wird die PU-basierte Trägerschicht aus Dispersion oder das Klebeband, das diese Schicht enthält, einer Temperierung bei mindestens 150 °C unterzogen, um die Zugfestigkeit zu optimieren.

Durch gezieltes Einrühren von Luft, dem sogenannten "Frothing" kann zudem ein offenzelliger PU-Schaum hergestellt werden. Hier wird durch dafür geeignetes Rührequipment und besonderen Rührbedingungen der Lufteinschlag kontrolliert provoziert. Der weitere Herstellprozess erfolgt analog dem oben beschriebenen Verfahren.

<u>Schematischer Aufbau eines erfindungsgemäßen dreischichtigen Haftklebebands:</u>

In Figur 2 ist der schematische Aufbau eines erfindungsgemäße dreischichtigen Haftklebebands aus drei Schichten 5, 6, 7 als Querschnitt dargestellt. Das Klebeband umfasst einen einschichtigen Träger 5 auf Basis von Polyurethan. Auf der Oberseite und auf der Unterseite des Trägers sind zwei Haftklebemasseschichten 6, 7 auf Polyacrylatbasis vorhanden. Die Haftklebemasseschichten 6, 7 sind in der dargestellten beispielhaften Ausführung ihrerseits jeweils mit einem Liner 8, 9 eingedeckt.

In einem erfindungsgemäßen Herstellungsverfahren eines (beispielhaft) mit Mikroballons geschäumten Haftklebebands werden alle Bestandteile der Haftlebemasse auf Polyacrylatbasis in einem Lösemittelgemisch (Benzin/Toluol/Aceton) aufgelöst. Die Mikroballons wurden in Benzin angeschlämmt und in die gelöste Klebemasse eingerührt. Hierzu können grundsätzlich die bekannten Compoundier- und Rühreinheiten eingesetzt werden, wobei darauf zu achten ist, dass die Mikroballons bei der Vermischung noch nicht expandieren. Sobald die Mikroballons homogen in der Lösung verteilt sind, kann die Klebemasse beschichtet werden, wobei wiederum Beschichtungssysteme gemäß dem Stand der Technik eingesetzt werden können. Beispielsweise kann die Beschichtung durch eine Rakel auf einen konventionellen PET-Liner geschehen. Im nächsten Schritt wird die so hergestellte Klebmassenschicht bei 100 °C für 15 min getrocknet. In keinem der vorgenannten Schritte kommt es zu einer Expansion der Mikroballons.

Auf die freie Oberfläche der so hergestellten und getrockneten Klebmassenschicht wird die Trägerschicht auf Polyurethanbasis kaschiert. Auf deren zweite Oberfläche wird die freie Oberfläche einer zweiten derart hergestellten,

ebenfalls getrockneten Klebmassenschicht kaschiert, so dass ein ungeschäumter Dreischichtverbund aus der innenliegenden Trägerschicht und zwei mit Linern versehenen Klebemassenschichten resultiert.

Alternativ kann die Trägerschicht auf Basis von Polyurethan direkt mit den mit Mikroballons versehenen, ungeschäumten Klebemassen gleichzeitig oder nacheinander beschichtet werden, woraufhin diese noch offenliegenden Klebmassenschichten bei 100 °C für 15 min getrocknet und dann mit Linern abgedeckt werden, so dass der ungeschäumte Dreischichtverbund resultiert.

Nach dem Trocknen werden die Klebeschichten in einem passenden Temperatur-Zeit-Fenster, etwa für 5 min bei 150 °C oder für 1 min bei 170 °C, im Ofen geschäumt, und zwar abgedeckt zwischen den zwei Linern, um eine besonders glatte Oberfläche zu erzeugen.

Die so erzeugte Oberfläche weist typischerweise eine Rauigkeit $R_a$ kleiner 15 µm, besonders bevorzugt kleiner 10 µm auf, ganz besonders bevorzugt von kleiner 3 µm auf. Die Oberflächenrauigkeit ist vorzugsweise $R_a$ ist eine Einheit für den Industriestandard für die Qualität der Oberflächenendbearbeitung und stellt die durchschnittliche Höhe der Rauheit dar, insbesondere die durchschnittliche Absolutentfernung von der Mittellinie des Rauheitsprofils innerhalb des Auswertungsbereichs. Gemessen wird diese mittels Lasertriangulation.

Die Expansionstemperatur wird insbesondere höher als Trocknungstemperatur gewählt, um die Expansion der Mikroballons bei der Trocknung zu vermeiden.

Nachfolgend wird die Erfindung durch einige beispielhafte Klebebänder näher erläutert. Anhand der nachfolgend beschriebenen Beispiele werden besonders vorteilhafte Ausführungen der Erfindung näher erläutert, ohne damit die Erfindung unnötig einschränken zu wollen.

**Beispiele:**

Tabelle 1 zeigt die in den (Vergleichs-)Beispielen eingesetzten Rohstoffe bzw. Materialien.

Tabelle 1: in den (Vergleichs-)Beispielen eingesetzte Rohstoffe bzw. Materialien.

| Rohstoff | Hersteller/ Lieferant | Beschreibung |
|---|---|---|
| Ortegol PV 301 | Evonik | Polyurethanlösung (Verdicker) |
| Borchi Gel 0625 | Borchers GmbH | Nichtionischer, Polyurethan-basierter Verdicker für wasserbasierte Beschichtungssysteme |
| Expancel 920 DU 20 | Nouryon | Unexpandierte, expandierbare, trockene Mikroballons mit einem mittleren Durchmesser nach Expansion von 20 µm |
| Kemafoil HPH 100 | Coveme S.P.A | Beidseitig geätzte PET-Folie einer Dicke von 50 µm, farblos |
| Elastollan C85A10 (zur Herstellung des hier "TPU1" genannten Trägers) | BASF Polyurethanes GmbH | thermoplastisches Polyurethan (Granulat), Shore-Härte A = 87 |
| Elastollan S60A15 (zur Herstellung des hier "TPU2" genannten Trägers) | BASF Polyurethanes GmbH | thermoplastisches Polyurethan (Granulat), Shore-Härte A = 60 |
| Impranil DL 1116 (zur Herstellung der hier "PUD1", "PUD2", "PUD3", "PUD4" bzw. "PUD5" genannten Träger) | Covestro | anionisch stabilisierte Polyester-Polyurethandispersion, 100% Modul (Film aus mit 1 Gew.-% Borchigel ALA verdickter Dispersion) = 1,4 MPa nach DIN 53504 |
| Impranil DL 1068 (zur Herstellung des hier "PUD6" genannten Trägers) | Covestro | Anionisch stabilisierte Polyether-Polyurethan-dispersion, 100% Modul (Film aus mit 1 Gew.-% Borchigel ALA verdickter Dispersion) = 1,5 MPa nach DIN 53504 |
| Kraton D 1118 | Kraton Performance Polymers, Inc. | Elastomer: Styrol-Butadien-Styrol-Triblockcopolymer mit 78 Gew.-% Diblock, Blockpolystyrolgehalt: 33 Gew.-% |
| Dertophene T | DRT resins | Terpenphenolharz (Erweichungspunkt 110 °C; $M_w$ = 500 bis 800 g/mol; D = 1,50) |

(fortgesetzt)

| Rohstoff | Hersteller/ Lieferant | Beschreibung |
|---|---|---|
| Erysis GA 240 | Emerald Performance Materials, | N,N,N',N'-tetrakis(2,3-epoxypropyl)-m-xylen-a,a'-diamin |

Herstellung der in den Klebebändern eingesetzten Haftklebemasseschicht:

Die in den (Vergleichs-)Beispielen jeweils eingesetzte Haftklebemasseschicht enthält ein Ausgangspolymer auf Acrylatbasis, das im Folgenden Basispolymer P1 genannt wird, sowie ein Vinylaromatenblockcopolymer (Kraton D 1118). Das Basispolymer P1 wird folgendermaßen hergestellt:
Ein für radikalische Polymerisationen konventioneller Reaktor wurde mit 47,5 kg 2-Ethylhexylacrylat, 47,5 kg n-Butylacrylat, 5 kg Acrylsäure und 66 kg Benzin/Aceton (70/30) befüllt. Nach 45minütiger Durchleitung von Stickstoffgas unter Rühren wurde der Reaktor auf 58 °C hochgeheizt und 50 g AIBN hinzugegeben. Anschließend wurde das äußere Heizbad auf 75 °C erwärmt und die Reaktion konstant bei dieser Außentemperatur durchgeführt. Nach 1 h wurden erneut 50 g AIBN zugegeben und nach 4 h wurde mit 20 kg Benzin/Aceton Gemisch verdünnt. Nach 5,5 sowie nach 7 h wurde jeweils mit 150 g Bis-(4-tert-butylcyclohexyl)peroxydicarbonat nachinitiiert. Nach 22 h Reaktionszeit wurde die Polymerisation abgebrochen und auf Raumtemperatur abgekühlt. Das Polyacrylat hat ein mittleres Molekulargewicht von $M_w$ = 386.000 g/mol, Polydispersität PD ($M_w/M_n$) = 7,6.

Die in den (Vergleichs-)Beispielen jeweils eingesetzte Haftklebemasseschicht wird folgendermaßen hergestellt: Es wird eine Mischung hergestellt, umfassend 42,425 Gew.-%, bezogen auf das Trockengewicht des Polymers, das Basispolymer P1, 37,5 Gew.-% Klebharz Dertophene T sowie 20 Gew.-% Kraton D 1118. Durch die Zugabe von Benzin wird ein Feststoffgehalt von 38 Gew.-% eingestellt. Die Mischung aus Polymer und Klebharz wird solange gerührt, bis sich das Klebharz sichtbar vollständig gelöst hat. Im Anschluss werden 0,075 Gew. % des kovalenten Vernetzers Erysis GA 240 zugegeben. Die Mischung wird für 15 Minuten bei Raumtemperatur gerührt. Die Gewichtsanteile der gelösten Bestandteile beziehen sich dabei jeweils auf das Trockengewicht der resultierenden Lösung. Währenddessen werden 0,8 Gew.-% unexpandierte Mikroballons (Expancel 920 DU20) hinzufügt, wobei die Mikroballons als Anschlämmung in Benzin eingesetzt werden. Die Gewichtsanteile der Mikroballons beziehen sich auf das Trockengewicht der eingesetzten Lösung, zu der sie gegeben werden (d.h. das Trockengewicht der eingesetzten Lösung wird als 100% festgesetzt). Die erhaltene Mischung wird dann mit einem Streichbalken auf einen PET-Liner, ausgerüstet mit einem trennenden Silikon, in der jeweils gewünschten Schichtdicke ausgestrichen. Anschließend wird bei 100 °C für 15 min das Lösungsmittel abgedampft und so die Masseschicht getrocknet. Die Mikroballons liegen darin noch unexpandiert vor, d.h. die Haftklebemasseschicht ist noch nicht geschäumt.

Herstellung der Klebebänder der (Vergleichs-)Beispiele:

Tabelle 2 zeigt die Rezepturen der in den erfindungsgemäßen Beispielen 1 bis 8 hergestellten Träger auf Polyurethanbasis.

Tabelle 2: Rezepturen der in den (Vergleichs-)Beispielen hergestellten Träger.

| Träger-Bezeichnung | Komponente | Rohstoff | Anteil |
|---|---|---|---|
| Kernschicht TPU 1 | TPU-Granulat | Elastollan C85A10 | 100,0 Gew.-% |
| Kernschicht TPU 2 | TPU-Granulat | Elastollan S60A15 | 100,0 Gew.-% |
| Kernschicht PUD 1 | PU-Dispersion | Impranil DL 1116 | 99,4 Gew.-% |
| | Verdicker | Orteqol PV 301 | 0,6 Gew.-% |
| Kernschicht PUD2 | PU-Dispersion | Impranil DL 1116 | 99,5 Gew.-% |
| | Verdicker | Borchi Gel 0625 | 0,5 Gew.-% |
| Kernschicht PUD 3 | PU-Dispersion | Impranil DL 1116 | 99,0 Gew.-% |
| | Verdicker | Borchi Gel 0625 | 0,5 Gew.-% |
| | Mikroballons | Expancel 920DU20 | 0,5 Gew.-% |

(fortgesetzt)

| Träger-Bezeichnung | Komponente | Rohstoff | Anteil |
|---|---|---|---|
| Kernschicht PUD 4 | PU-Dispersion | Impranil DL 1116 | 98,5 Gew.-% |
| | Verdicker | Borchi Gel 0625 | 0,5 Gew.-% |
| | Mikroballons | Expancel 920DU20 | 1 Gew.-% |
| Kernschicht PUD5 | PU-Dispersion | Impranil DL 1116 | 98,0 Gew.-% |
| | Verdicker | Borchi Gel 0625 | 0,5 Gew.-% |
| | Mikroballons | Expancel 920DU20 | 1,5 Gew.-% |
| Kernschicht PUD6 | PU-Dispersion | Impranil DL 1086 | 98,0 Gew.-% |
| | Verdicker | Borchi Gel 0625 | 0,5 Gew.-% |
| | Mikroballons | Expancel 920DU20 | 1,5 Gew.-% |

In Vergleichsbeispiel 9 wurde die zugekaufte Folie Kemafoil HPH 100 der Firma Coveme S.P.A eingesetzt, wobei es sich um eine farblose beidseitig geätzte PET-Trägerfolie einer Dicke von 50 $\mu$m handelt.

Die Herstellung der einzelnen Klebebänder wurde folgendermaßen durchgeführt:

Herstellung der Klebebänder mit TPU-Kernschichten TPU 1 (Beispiel 1) und TPU 2 (Beispiel 2):

Die Granulate von thermoplastischem Polyurethan, d.h. TPU-Granulate 1 und 2 zur Herstellung der TPU 1 und TPU 2 genannten Träger (d.h. Kerne bzw. Kernschichten), werden vor der Verarbeitung bei 80 °C für mindestens 3 Stunden in einem Granulattrockner (Somos) vorgetrocknet. Die Granulate werden über einen einfachen Vorlagebehälter/Trichter über die Einzugszone dem Einschneckenextruder (Collin, 25D), nachfolgend ESE genannt, zugeführt. Die Temperierung des ESE erfolgt entsprechend der optimalen Verarbeitungstemperatur des jeweiligen TPU-Granulates. Nach Aufschmelzen des Granulats wird das Extrudat über einen Schlauch in einen Feedblock und anschließend in die Breitschlitzdüse überführt. Tabelle 3 zeigt die Temperierung des ESE inklusive der Breitschlitzdüse.

Tabelle 3: Temperierung des ESE inklusive der Breitschlitzdüse.

| | Extruder und Breitschlitzdüse | | | | | | | | | | |
|---|---|---|---|---|---|---|---|---|---|---|---|
| | Einzug | Heizzonen Einschneckenextruder | | | | | | Drehzahl | Schlauch | Feedblock | Düse |
| | Zone 1 | 2 | 3 | 4 | 5 | 6 | 7 | n | 8 | 9 | 10 |
| | [°C] | [°C] | [°C] | [°C] | [°C] | [°C] | [°C] | [U/min]* | [°C] | [°C] | [°C] |
| TPU 1 | 30 | 165 | 175 | 180 | 180 | 190 | 190 | 15 | 200 | 210 | 210 |
| TPU 2 | 30 | 165 | 175 | 180 | 180 | 190 | 190 | 15 | 190 | 200 | 200 |
| *U/min = Umdrehungen pro Minute. | | | | | | | | | | | |

Der vorausgeformte Schmelzefilm wird nun auf eine Stahlwalze abgelegt. Da die TPU-Varianten mit geringerer Shore-Härte etwas haftklebriger sind und sich somit schlechter von der Stahlwalze wieder ablösen lassen, hat es sich bewährt, direkt auf einen PET-Träger mit Releasefunktion, d.h. temporären Träger bzw. Liner, zu beschichten, welcher über einen Abwickler und über die damit halb umschlungene Abnahmewalze zugeführt und anschließend aufgewickelt wird. Die hergestellten TPU-Träger (TPU-Kernschichten) 1 (Beispiel 1) und 2 (Beispiel 2) sind frei von Prozesshilfsmitteln und weisen keine kristalline Überstruktur auf.

Nach Einstellen der gewünschten Schichtdicke wird am Abwickler der Ballen mit dem PET-Träger mit Releasefunktion gegen die vorgefertigte Funktionsschicht, d.h. die Haftklebemasseschicht enthaltend unexpandierte Mikroballons wie vorstehend beschrieben, ausgetauscht. Auf diese Weise wird direkt auf die Funktionsschicht beschichtet. Über einen weiteren Abwickler wird die zweite vorgefertigte Haftklebemasseschicht (enthaltend unexpandierte Mikroballons wie vorstehend beschrieben), die die gleiche Dicke aufweist wie die erste Haftklebemasseschicht, über die Führungswalze bzw. Andruckwalze auf die offene, oben liegende TPU-Schicht kaschiert. Dieses dreischichtige Produkt wird nun aufgewickelt. Der Gesamtverbund aus Träger und Haftklebemasseschichten wird zur besseren Verankerung und Schäumung der Haftklebemasseschichten einem weiteren Temperierungsschritt unterzogen. Das aufgewickelte Material wird dazu bei einem Temperaturprofil mit drei Zonen von 120°C/135°C/170°C, bei einer Bahngeschwindigkeit von 6m/min,

durch eine Kanalanlage gefahren und anschließend wieder aufgewickelt. Es ergeben sich die geschäumten doppelseitigen Klebebänder mit TPU-Kernschichten TPU 1 (Beispiel 1) und TPU 2 (Beispiel 2).

Herstellung des Klebebands mit PET-Trägerfolie (Vergleichsbeispiel 9):

Die zugekaufte Folie Kemafoil HPH 100 der Firma Coveme S.P.A wird beidseitig mit der wie vorstehend beschriebenen Haftklebemasseschicht enthaltend unexpandierte Mikroballons kaschiert. Die beiden Haftklebemasseschichten weisen die gleiche Dicke auf. Der Gesamtverbund aus Träger und Haftklebemasseschichten wird zur besseren Verankerung und Schäumung der Haftklebemasseschichten einem weiteren Temperierungsschritt unterzogen. Das aufgewickelte Material wird dazu bei einem Temperaturprofil mit drei Zonen von 120°C/135°C/170°C, bei einer Bahngeschwindigkeit von 6m/min, durch eine Kanalanlage gefahren und anschließend wieder aufgewickelt. Es ergibt sich ein geschäumtes doppelseitiges Klebeband mit einer PET-Trägerschicht (Vergleichsbeispiel 9).

Herstellung der Klebebänder mit PUD-Kernschichten PUD 1 bis PUD 6 (Beispiele 3 bis 8):

Die Abmischung der entsprechenden Polyurethan-Dispersion (PU-Dispersion, PUD) 1 bis 6 mit dem Verdicker und optional den Mikroballons (falls eingesetzt) erfolgt jeweils über eine herkömmliche vertikale Rührapparatur mit einem Visco Jet-Rührer. Die Polyurethan-Dispersion wird in einem ausreichend großen Behälter vorgelegt und vorsichtig gerührt. Eine Bildung von Tromben oder jegliches Einrühren von Luft soll im gesamten Abmischprozess vermieden werden. Sofern Mikroballons zugesetzt werden sollen, werden diese im Verhältnis 1:1 mit Wasser vorverdünnt und anschließend der vorgelegten Polyurethan-Dispersion unter stetigem Rühren portionsweise zugeführt. Anschließend wird der Verdicker Ortegol PV301 (25 Gew.-% Feststoffgehalt) bzw. der Verdicker BorchiGel 0625 (33 Gew.-% Feststoffgehalt) im Verhältnis 1:2 mit Wasser vorverdünnt und unter stetigem Rühren portionsweise zugeführt. Um eine homogene Mischung zu erhalten, wird eine Rührdauer von mindestens 30 Minuten eingehalten. Die so angesetzte angedickte Polyurethan-Dispersion wird optimalerweise einen Tag vor der Beschichtung hergestellt. Eingerührte Luftbläschen können somit noch entweichen. Nun können die abgemischten Polyurethan-Dispersionen über eine Beschichtungsanlage, d.h. ein Auftragswerk, mit Trockenkanal beschichtet werden. Tabelle 4 zeigt relevante Parameter der Beschichtungsanlage und des Trockenkanals. Die hergestellten PUD-Kernschichten (d.h. PUD-Kerne) 1 bis 6 (der Beispiele 3 bis 8) sind frei von Prozesshilfsmitteln und weisen keine kristalline Überstruktur auf. Falls vorhanden, liegen die Mikroballons darin noch unexpandiert vor, d.h. die entsprechenden PUD-Kernschichten sind noch nicht geschäumt.

Tabelle 4 zeigt relevante Parameter der Beschichtungsanlage und des Trockenkanals.

| | Auftragswerk | | | | | Trockenkanal | | |
|---|---|---|---|---|---|---|---|---|
| | Schlauch [°C] | Beschichtungswalze [°C] | Rakel | Spalt [μm] | V [m/min] | Heizzone 1 [°C] | 2 [°C] | 3 [°C] |
| PUD 1 | 20 | 20 | Komma | 60 | 2,5 | 80 | 100 | 110 |
| PUD 2 | 20 | 20 | Komma | 130 | 1,3 | 80 | 100 | 110 |
| PUD 3 | 20 | 20 | Komma | 120 | 1,5 | 80 | 100 | 110 |
| PUD 4 | 20 | 20 | Komma | 100 | 2,0 | 80 | 100 | 110 |
| PUD 5 | 20 | 20 | Komma | 80 | 2,2 | 80 | 100 | 110 |
| PUD 6 | 20 | 20 | Komma | 90 | 2,0 | 80 | 100 | 110 |

Über 2 Abwickler wird entweder ein PET-Träger mit Releasefunktion oder eine vorgefertigte Funktionsschicht, d.h. Haftklebemasseschicht, auf PET-Träger mit Releasefunktion bereitgestellt. Es hat sich bewährt, die gewünschte Schichtdicke auf PET-Träger einzustellen und dann auf die vorgefertigte Funktionsschicht (d.h. die Haftklebemasseschicht enthaltend unexpandierte Mikroballons wie vorstehend definiert) zu wechseln und direkt zu beschichten. Vor der Aufwicklung wird dann über eine regelbare Andruckwalze die zweite vorgefertigte Haftklebemasseschicht (enthaltend unexpandierte Mikroballons wie vorstehend beschrieben), die die gleiche Dicke aufweist wie die erste Haftklebemasseschicht, dazu kaschiert. Das so hergestellte Dreischicht-Produkt wird nun aufgewickelt. Der Gesamtverbund aus Träger und Haftklebemasseschichten wird zur Optimierung der Zugfestigkeit des Trägers, zur besseren Verankerung und zur Schäumung der Mikroballons enthaltenden Schichten einem weiteren Temperierungsschritt unterzogen. Das aufgewickelte Material wird dazu bei einem Temperaturprofil mit drei Zonen von 120°C/135°C/170°C, bei einer Bahngeschwindigkeit von 6m/min, durch die gleiche Kanalanlage gefahren und anschließend wieder aufgewickelt. Es ergeben sich die geschäumten doppelseitigen Klebebänder mit PUD-Kernschichten PUD 1 (Beispiel 3) bis PUD 6 (Beispiel 8).

Ergebnisse:

Tabelle 5 zeigt den Aufbau der Klebebänder der (Vergleichs-)Beispiele, die durch Kombination der vorstehend genannten Träger aus Tabelle 2 und Haftklebemasseschicht auf Basis von Polymer P1 und Kraton D 1118 gebildet werden. Die Klebebänder sind jeweils doppelseitig, d.h. auf dem Träger ist jeweils beidseitig eine Haftklebemasseschicht (gleicher Dicke) angeordnet. Die Tabelle zeigt außerdem mechanische und klebtechnische Eigenschaften der Klebebänder.

Tabelle 5: Aufbau der Klebebänder der (Vergleichs-)Beispiele und deren mechanische und klebtechnische Eigenschaften.

| Beispiel | Trägervariante | Trägerdicke [µm] | Klebebanddicke [µm] | DuPont z E [J]* | Droptower-Test E [J]* | Wiederablösbarkeit [1 - 5]* | Stretching-Distanz [mm]* |
|---|---|---|---|---|---|---|---|
| 9 (Vgl.) | PET | 50 | 330 | 1,10 | 1,49 | 5 | 0,45 |
| 3 | PUD 1 | 50 | 330 | 1,20 | 1,82 | 5 | 0,13 |
| 1 | TPU 1 | 50 | 330 | 1,30 | 1,58 | 5 | 0,06 |
| 4 | PUD 2 | 100 | 330 | 1,02 | 1,62 | 5 | 0,11 |
| 5 | PUD 3 | 100 | 330 | 1,04 | 1,69 | 5 | 0,02 |
| 6 | PUD 4 | 100 | 330 | 1,07 | 1,68 | 4 | 0,00 |
| 7 | PUD 5 | 100 | 330 | 1,08 | 1,53 | 4 | 0,08 |
| 8 | PUD 6 | 100 | 330 | 1,10 | 1,28 | 5 | 0,09 |
| 2 | TPU 2 | 100 | 330 | 1,03 | 1,35 | 4 | 0,05 |

* jeweils bestimmt wie im Prüfmethodenteil der Anmeldung beschrieben.

Die Klebebänder sämtlicher erfindungsgemäßer Beispiele 1 bis 8 erfüllen die gesetzten Anforderungen an die Schlagzähigkeit in z-Richtung gemäß dem DuPont-Test in z-Richtung und dem Droptower-Test von jeweils mindestens 1,00 J. Ebenso weisen sie jeweils eine gute Wiederablösbarkeit auf (d.h. (a) im Wesentlichen keine Reißer und höchstens leichte Klebstoffrückstände, die mit Ethanol leicht entfernbar sind, was in unserem Test einem Werte von mindestens 4 entspricht, oder sogar keine Reißer und keine Rückstände und keine Abziehwinkel-Abhängigkeit, was in unserem Test einem Werte von mindestens 5 entspricht). Außerdem sind sie jeweils durch eine Stretching-Distanz von höchstens 0,15 mm im Stretching-Test charakterisiert.

Ein Vergleich der Klebebänder der Beispiele 5 bis 7 zeigt zudem, dass sich insbesondere die Stretching-Distanz durch geeignete Gehalte an expandierten Mikroballons im PUD-Träger optimieren lässt.

Das Klebeband aus Vergleichsbeispiel 9 enthaltend die beidseitig geätzte PET-Trägerfolie einer Dicke von 50 µm verfehlt im Stretching-Test die angestrebte Stretching-Distanz von höchstens 0,15 mm.

*Prüfmethoden*

Alle Messungen wurden, sofern nichts anderes angegeben ist, bei 23 °C und 50 % rel. Luftfeuchtigkeit durchgeführt. Die mechanischen und klebtechnischen Daten wurden wie folgt ermittelt:

*Durchschlagzähigkeit: DuPont-Test in z-Ebene*

Aus dem zu untersuchenden Klebeband wird eine quadratische, rahmenförmige Probe ausgeschnitten (Außenmaße 33 mm x 33 mm, Stegbreite 2,0 mm, Innenmaße (Fensterausschnitt) 29 mm x 29 mm). Diese Probe wird auf einen Polycarbonat-(PC)-Rahmen (Außenmaße 45 mm x 45 mm, Stegbreite 10 mm, Innenmaße (Fensterausschnitt) 25 mm x 25 mm; Dicke 3 mm) geklebt. Auf der anderen Seite des doppelseitigen Klebebands wird ein PC-Fenster von 35 mm x 35 mm geklebt. Die Verklebung von PC-Rahmen, Klebebandrahmen und PC-Fenster erfolgt derart, dass die geometrischen Zentren und die Diagonalen jeweils übereinanderliegen (Eck-auf-Eck). Die Verklebungsfläche beträgt 248 $mm^2$. Die Verklebung wird für 5 s mit 248 N gepresst und für 24 Stunden konditioniert bei 23 °C / 50 % relativer Feuchte gelagert.

Unmittelbar nach der Lagerung wird der Klebeverbund aus PC-Rahmen, Klebeband und PC-Fenster mit den überstehenden Kanten des PC-Rahmens derart in eine Probenhalterung gespannt, dass der Verbund waagerecht ausgerichtet ist. Dabei liegt der PC-Rahmen an den überstehenden Kanten auf der Probenhalterungen plan auf, so dass das PC-Fenster unterhalb des PC-Rahmens frei schwebend (durch das Klebebandmuster gehalten) vorliegt. Die Probenhalterung wird anschließend in die vorgesehene Aufnahme des "DuPont Impact Tester" zentrisch eingesetzt. Der 150 g schwere Schlagkopf wird so eingesetzt, dass die kreisförmige Aufschlaggeometrie mit dem Durchmesser 24 mm auf die von oben frei zugängliche Fläche des PC-Fensters zentrisch und bündig aufliegt.

Auf den so angeordneten Verbund aus Probenhalterung, Probe und Schlagkopf wird senkrecht ein an zwei Führungsstangen geführtes Gewicht mit einer Masse von 150 g aus einer Höhe von 5 cm fallengelassen (Messbedingungen 23 °C, 50 % relative Feuchte). Die Höhe des Fallgewichtes wird in 5 cm Schritten so lange erhöht, bis die eingebrachte Stoßenergie die Probe durch die Durchschlagbelastung zerstört und das PC-Fenster sich vom PC-Rahmen löst.

Um Versuche mit unterschiedlichen Proben vergleichen zu können, wird die Energie wie folgt berechnet:

$$\text{Energie E [J]} = \text{Höhe [m]} * \text{Masse Gewicht [kg]} * 9{,}81 \text{ kg/m} * \text{s}^2$$

Es werden fünf Proben pro Produkt getestet und der Energiemittelwert als Kennzahl für die Durchschlagzähigkeit angegeben.

*Droptower-Testmethode (instrumentierter Fallwerktest zur Messung der Schlagzähigkeit)*

Aus dem zu untersuchenden Klebeband wird eine quadratische, rahmenförmige Probe ausgeschnitten (Außenmaße 33mm x 33mm; Stegbreite 2,0mm; Innenmaße (Fensterausschnitt) 29mm x 29mm). Diese Probe wird auf einen mit Aceton gereinigten Stahl-Rahmen (Außenmaße 45mm x 45mm; Stegbreite 10mm; Innenmaße (Fensterausschnitt) 25mm x 25mm) geklebt. Auf der anderen Seite des doppelseitigen Klebebandes wird ein mit Aceton gereinigtes Stahl-Fenster (Außenmaße 35mm x 35mm) verklebt. Die Verklebung von Stahl-Rahmen, Klebebandrahmen und Stahl-Fenster erfolgt derart, dass die geometrischen Zentren und die Diagonalen jeweils übereinanderliegen (Eck-auf-Eck). Die Verklebungsfläche beträgt 248 $mm^2$. Die Verklebung wird für 5 s mit 248 N gepresst und für 24 Stunden konditioniert bei 23 °C / 50 % relativer Feuchte gelagert.

Unmittelbar nach der Lagerung wird der Prüfkörper derart in der Probenhalterung des instrumentierten Fallwerkes eingesetzt, dass der Verbund waagerecht, mit nach unten ausgerichtetem Stahlfenster vorliegt. Die Messung erfolgt instrumentell und automatisch unter Nutzung eines Belastungsgewichtes von 5 kg und einer Fallhöhe von 10 cm. Durch die eingebrachte kinetische Energie des Belastungsgewichtes wird die Verklebung zerstört, wobei die Kraft von einem piezoelektrischen Sensor im μs Takt aufgezeichnet wird. Kurz vor dem Aufprall der rechteckigen Aufschlaggeometrie auf das Fenster, wird die Geschwindigkeit des Fallgewichtes mit zwei Lichtschranken bestimmt. Unter der Annahme, dass die eingebrachte Energie groß gegenüber der Schlagzähigkeit der Verklebung ist, wird aus dem Kraftverlauf, der benötigten Dauer bis zur Ablösung und der Geschwindigkeit des Fallgewichtes die geleistete Arbeit der Verklebung bis zur vollständigen Ablösung ermittelt (d.h. die Energie E). Es werden von jeder Probe fünf Prüfkörper untersucht, das Endergebnis der Schlagzähigkeit besteht aus dem Mittelwert der Ablösearbeit und der Maximalkraft dieser fünf Proben.

*Stretching Test Methode (Stretching-Distanz)*

Auf der Außenseite eines Stahl-Fensters (Außenmaße 35mm x 35mm) wird ein T-förmiger Alu-Block (Außenmaße 25 x 25 mm) vollflächig zentrisch verklebt. Aus dem zu untersuchenden Klebeband wird eine quadratische, rahmenförmige Probe ausgeschnitten (Außenmaße 33mm x 33mm; Stegbreite 2,0mm; Innenmaße (Fensterausschnitt) 29mm x 29mm). Diese Probe wird auf einen mit Aceton gereinigten Stahl-Rahmen (Außenmaße 45mm x 45mm; Stegbreite 10mm; Innenmaße (Fensterausschnitt) 25mm x 25mm) geklebt. Auf der anderen Seite des doppelseitigen Klebebandes wird das mit Aceton gereinigtes Stahl-Fenster auf der Vorderseite - gegenüber des T-förmigen Alu-Blocks - verklebt. Die Verklebung von Stahl-Rahmen, Klebebandrahmen und Stahl-Fenster erfolgt derart, dass die geometrischen Zentren und die Diagonalen jeweils übereinanderliegen (Eck-auf-Eck). Die Verklebungsfläche beträgt 248 $mm^2$. Die Verklebung wird für 5 s mit 248 N gepresst und für 24 Stunden konditioniert bei 23 °C / 50 % relativer Feuchte gelagert.
Unmittelbar nach der Lagerung wird der Prüfkörper derart in eine Probenhalterung eingesetzt, dass der Verbund waagerecht, mit nach unten ausgerichtetem T-förmigen Alu-Blocks des Stahlfensters vorliegt. Mit einem Messschieber wird der Abstand in allen vier Ecken $A_{1\text{-}4\ initial}$ des Stahl-Rahmen Fensterausschnitts zum Stahl Fenster bestimmt. Dieser entspricht der Dicke des Stahl Rahmens und der Dicke des Klebebandes. In die Bohrung des T-Blocks wird das Gewicht gehängt, wobei es sich um ein Belastungsgewicht von 250 g handelt. Die Probenhalterung wird in eine Klimakammer mit 55°C und 95% r.h. gestellt und die Klimalagerungszeit beginnt.
Alle 24 h wird die Probenhalterung aus der Klimakammer entnommen und der Abstand in allen vier Ecken des Stahlrahmens in Abhängigkeit der Lagerzeit bestimmt. Wenn sich die Verklebung löst, wird der Zeitraum und das Fehlerbild notiert.
Die Messung ist nach 144 h Klimalagerung beendet. Der Mittelwert der Abstände von $A_{1\text{-}4}$ nach 144 h Lagerung wird errechnet und der mittlere Initialabstand $A_{1\text{-}4\ initial}$ abgezogen. Diese Länge wird als Stretching-Distanz bezeichnet und entspricht der Längenänderung des Klebebandes in orthogonaler Richtung zur Auflagefläche über die Klimalagerungszeit des Prüfkörpers.
Der Mittelwert der Stretching-Distanz von drei untersuchten Probekörpern pro Klebeband gibt den Ergebniswert unter Angabe des Belastungsgewichts, der Klimabedingung und Klimalagerungszeit an.

*Wiederablösbarkeit*

Aus dem zu untersuchenden doppelseitigem Klebeband wird eine streifenförmige Probe ausgeschnitten (Außenmaße 8 mm x 40 mm). Diese Probe wird auf eine mit Ethanol gereinigte Polycarbonat platte (Lexan® 9030, Außenmaße 200 mm x 50 mm x 3 mm) geklebt. Es sind drei einzelne Streifen parallel im Abstand von mindestens 1 cm zu verkleben. Die Abdeckung der der doppelseitigen Tapes soll dabei nicht entfernt werden. Das Klebeband endet an der Substratkante.
Die Verklebungen werden mit einer 4kg Stahlrolle mit mind 3. Doppelhüben (ca. 100 mm / s) aktiviert und für 48 Stunden bei 80°C / 80 % relativer Feuchte konditioniert.
Nach der Lagerung wird der Prüfkörper zwei Stunden bei RT abgekühlt und die Verklebung ebenfalls bei RT händisch entfernt. Während der Entfernung nimmt der Prüfer eine Bewertung vor.
Es werden von jeder Probe 3 Prüfkörper untersucht, die Bewertung der Wiederablösbarkeit erfolgt in Schulnoten von 1 bis 5. Die Ziffer 5 stellt dabei das beste Ergebnis dar.

| Bewertung | Performance |
|---|---|
| 5 (Bestes Ergebnis) | Keine Reißer und keine Rückstände und keine Abziehwinkel-Abhängigkeit |
| 4 | Keine Reißer und leichte Rückstände, die mit EtOH leicht entfernbar sind und es liegt keine Abziehwinkel-Abhängigkeit vor. |

(fortgesetzt)

| Bewertung | Performance |
|---|---|
| 3 | Moderates Risiko eines Reißers und es liegt keine Abziehwinkel-Abhängigkeit vor und Rückstände sind mit Ethanol leicht entfernbar |
| 2 | Hohes Risiko eines Reißers und Rückstände sind mit Ethanol entfernbar |
| 1 | Hohe Anzahl von Reißern und/oder es ist unmöglich das Tape von dem Substrat zu entfernen und/oder kohäsives Versagen der Klebemasse, die nicht mit Ethanol entfernbar ist |

*Shore-Härte A*

Die Shore-Härte A einer Probe wird gemäß ASTM D2240 ermittelt.

*Modul bei 100% Dehnung*

Das Modul bei 100% Dehnung einer Probe wird gemäß DIN 53504 ermittelt.

*Dicke*

Die Dicke einer Klebemasseschicht kann durch Bestimmung der Dicke eines bezüglich seiner Länge und seiner Breite definierten Abschnitts einer solchen auf einen Liner aufgetragenen Klebemassenschicht bestimmt werden, abzüglich der (bekannten oder separat ermittelbaren) Dicke eines Abschnitts gleicher Dimensionen des verwendeten Liners. Die Dicke der Klebemasseschicht lässt sich über handelsübliche Dickenmessgeräte (Taster-Prüfgeräte) mit Genauigkeiten von weniger als 1 μm Abweichung ermitteln. Sofern Dickenschwankungen festgestellt werden, wird der Mittelwert von Messungen an mindestens drei repräsentativen Stellen angegeben, also insbesondere nicht gemessen an Kniffen, Falten, Stippen und dergleichen.

Wie bereits die Dicke einer Klebemasseschicht lässt sich auch die Dicke eines Klebebands (Klebestreifens) bzw. eines Trägers analog über handelsübliche Dickenmessgeräte (Taster-Prüfgeräte) mit Genauigkeiten von weniger als 1 μm Abweichung ermitteln. Sofern Dickenschwankungen festgestellt werden, wird der Mittelwert von Messungen an mindestens drei repräsentativen Stellen angegeben, also insbesondere nicht gemessen an Kniffen, Falten, Stippen und dergleichen.

*Dichte*

Die Dichte von Klebemasseschichten wird ermittelt durch Quotientenbildung aus Masseauftrag und Dicke der auf einen Liner aufgetragenen Klebemassenschicht.

Der Masseauftrag kann durch Bestimmung der Masse eines bezüglich seiner Länge und seiner Breite definierten Abschnitts einer solchen auf einen Liner aufgetragenen Klebemassenschicht bestimmt werden, abzüglich der (bekannten oder separat ermittelbaren) Masse eines Abschnitts gleicher Dimensionen des verwendeten Liners.

Die Dicke einer Klebemasseschicht kann durch Bestimmung der Dicke eines bezüglich seiner Länge und seiner Breite definierten Abschnitts einer solchen auf einen Liner aufgetragenen Klebemassenschicht bestimmt werden, abzüglich der (bekannten oder separat ermittelbaren) Dicke eines Abschnitts gleicher Dimensionen des verwendeten Liners. Die Dicke der Klebemasseschicht lässt sich über handelsübliche Dickenmessgeräte (Taster-Prüfgeräte) mit Genauigkeiten von weniger als 1 μm Abweichung ermitteln. Sofern Dickenschwankungen festgestellt werden, wird der Mittelwert von Messungen an mindestens drei repräsentativen Stellen angegeben, also insbesondere nicht gemessen an Kniffen, Falten, Stippen und dergleichen.

Die Dichte eines Trägers lässt sich analog bestimmen.

*Statische Glasübergangstemperatur $T_g$*

Glasübergangspunkte - synonym als Glasübergangstemperaturen bezeichnet - werden angegeben als Ergebnis von Messungen mittels Dynamischer Differenzkalorimetrie DDK (englisch Dynamic Scanning Calorimetry; DSC) gemäß der DIN 53 765, insbesondere Abschnitte 7.1 und 8.1, jedoch mit einheitlichen Heiz- und Kühlraten von 10 K/min in allen Heiz- und Kühlschritten (vergleiche DIN 53 765; Abschnitt 7.1; Anmerkung 1). Die Probeneinwaage beträgt 20 mg.

*Molekulargewicht $M_n$, $M_w$*

Die Angaben des zahlenmittleren Molekulargewichts $M_n$ bzw. gewichtsmittleren Molekulargewichts $M_w$ in dieser Schrift beziehen sich auf die Bestimmung per Gelpermeationschromatographie (GPC). Die Bestimmung erfolgt an 100 µl klarfiltrierter Probe (Probenkonzentration 4 g/l). Als Eluent wird Tetrahydrofuran mit 0,1 Vol.-% Trifluoressigsäure eingesetzt. Die Messung erfolgt bei 25 °C. Als Vorsäule wird eine Säule Typ PSS-SDV, 5 µm, $10^3$ Å, 8,0 mm * 50 mm (Angaben hier und im Folgenden in der Reihenfolge: Typ, Partikelgrösse, Porosität, mInnendurchmesser * Länge; 1 Å = $10^{-10}$ m) verwendet. Zur Auftrennung wird eine Kombination der Säulen des Typs PSS-SDV, 5 µm, $10^3$ Å sowie $10^5$ Å und $10^6$ Å mit jeweils 8,0 mm * 300 mm eingesetzt (Säulen der Firma Polymer Standards Service; Detektion mittels Differentialrefraktometer Shodex RI71). Die Durchflussmenge beträgt 1,0 ml pro Minute. Die Kalibrierung erfolgt bei polaren Molekülen wie zum Beispiel den Ausgangsstoffen des Polyurethans oder bei Polyacrylaten gegen PMMA-Standards (Polymethylmethacrylat-Kalibrierung) und sonst gegen PS-Standards (Polystyrol-Kalibrierung).

*Klebharzerweichungstemperatur*

Die Klebharzerweichungstemperatur wird nach der einschlägigen Methodik durchgeführt, die als Ring & Ball bekannt ist und nach ASTM E28 standardisiert ist.

## Patentansprüche

1. Klebeband umfassend
mindestens einen Träger einer Dicke von 20 bis 250 µm, vorzugsweise 50 bis 150 µm, der mindestens eine Schicht

    (i) auf Basis von, vorzugsweise unvernetztem, thermoplastischem Polyurethan enthält, die mittels Extrusion hergestellt worden ist, wobei das Polyurethan auf aromatischem Polyisocyanat, wie insbesondere aromatischem Diisocyanat, basiert, oder
    (ii) auf Basis von, vorzugsweise unvernetztem, Polyurethan enthält, die aus einer Dispersion hergestellt worden ist,

    wobei auf dem Träger mindestens einseitig, vorzugsweise beidseitig, eine Haftklebemasseschicht angeordnet ist.

2. Klebeband nach Anspruch 1, wobei die Schicht auf Basis von thermoplastischem Polyurethan eine Shore-Härte A von höchstens 87 und insbesondere von weniger als 70 aufweist.

3. Klebeband nach Anspruch 1 oder 2, wobei das thermoplastische Polyurethan ein Reaktionsprodukt eines Gemisches ist, das mindestens ein Diisocyanat, mindestens ein Polyesterpolyol und gegebenenfalls mindestens einen Kettenverlängerer wie zum Beispiel Butandiol enthält.

4. Klebeband nach einem der Ansprüche 1 bis 3, wobei der Träger auf Basis von thermoplastischem Polyurethan weniger als 0,3 Gew.-% Prozesshilfsmittel, wie zum Beispiel Gleitmittel, Wachse und/oder Antiblockmittel, enthält, vorzugsweise weniger als 0,1 Gew.-% Prozesshilfsmittel enthält, und insbesondere frei von Prozesshilfsmitteln ist.

5. Klebeband nach Anspruch 1, wobei die Schicht auf Basis von Polyurethan, die aus einer Dispersion hergestellt worden ist, ein Modul bei 100% Dehnung von höchstens 1,8 MPa, vorzugsweise höchstens 1,5 MPa aufweist.

6. Klebeband nach Anspruch 5, wobei das Polyurethan aliphatisches Polyester-Polyurethan oder aliphatisches Polyether-Polyurethan ist.

7. Klebeband nach einem der vorhergehenden Ansprüche, wobei der Träger aus der mindestens einen Schicht auf Basis von (thermoplastischem) Polyurethan besteht, und insbesondere aus genau einer solchen Schicht besteht.

8. Klebeband nach einem der vorhergehenden Ansprüche, wobei der Träger keine kristalline Überstruktur hat.

9. Klebeband nach einem der vorhergehenden Ansprüche, wobei der Träger geschäumt ist, vorzugsweise durch Frothing, physikalisches Treibmittel, chemisches Treibmittel, Mikroballons oder eine Kombination davon, und insbesondere durch Mikroballons.

**10.** Klebeband nach einem der vorhergehenden Ansprüche, wobei die Haftklebemasseschicht aus einer Haftklebemasse auf Basis von Vinylaromatenblockcopolymer, wie insbesondere Styrolblockcopolymer, besteht.

**11.** Klebeband nach einem der Ansprüche 1 bis 9, wobei die Haftklebemasseschicht aus einer Haftklebemasse auf Polyacrylat-Basis besteht.

**12.** Klebeband nach einem der Ansprüche 1 bis 9, wobei die Haftklebemasseschicht aus einer Haftklebemasse besteht, die auf einem Blend aus (i) Polyacrylat und (ii) mit dem Polyacrylat im Wesentlichen nicht mischbarem Vinylaromatenblockcopolymer, wie insbesondere Styrolblockcopolymer, basiert, wobei vorzugsweise der Blend zu 50 bis 90 Gew.-%, bevorzugt 65 bis 80 Gew.-%, aus dem Polyacrylat besteht und zu 10 bis 50 Gew.-%, bevorzugt 20 bis 35 Gew.-%, Vinylaromatenblockcopolymer besteht.

**13.** Klebeband nach Anspruch 11 oder 12, wobei das Polyacrylat auf die folgende Monomerzusammensetzung zurückgeführt werden kann:

(i) Acrylsäure(ester) und/oder Methacrylsäure(ester) der Formel $CH_2{=}C(R_1)(COOR_2)$, wobei $R_1$ = H oder $CH_3$ und $R_2$ = H oder lineare, verzweigte oder ringförmige, gesättigte oder ungesättigte Alkylreste mit 1 bis 30, insbesondere mit 4 bis 18 Kohlenstoffatomen darstellt,
(ii) optional olefinisch ungesättigte Comonomere mit funktionellen Gruppen, die mit Epoxidgruppen vernetzbar sind,
(iii) optional weitere Acrylate und/oder Methacrylate und/oder olefinisch ungesättigte Monomere, die mit der Komponente (i) copolymerisierbar sind.

**14.** Klebeband nach einem der Ansprüche 11 bis 13, wobei die mindestens eine Haftklebemasseschicht mindestens einen Vernetzer enthält, wobei vorzugsweise mindestens ein kovalenter Vernetzer, beispielsweise auf Epoxidbasis, eingesetzt wird, gegebenenfalls zusammen mit mindestens einem koordinativen Vernetzer.

**15.** Klebeband nach einem der vorhergehenden Ansprüche, wobei die mindestens eine Haftklebemasseschicht geschäumt ist, insbesondere durch Mikroballons.

**16.** Verfahren zur Herstellung eines Klebebands gemäß einem der Ansprüche 1 bis 4 oder 7 bis 15, bei dem ein Träger auf Basis von, vorzugsweise unvernetztem, thermoplastischem Polyurethan, der wie in einem der Ansprüche 1 bis 4 oder 7 bis 9 definiert ist,

(a) auf einen temporären Träger extrudiert wird und mindestens einseitig, vorzugsweise beidseitig, mit einer Haftklebemasse kombiniert wird, oder
(b) auf eine Haftklebemasseschicht extrudiert wird, wobei vorzugsweise der Träger auf der der Haftklebemasseschicht gegenüber liegenden Seite mit einer weiteren Haftklebemasse kombiniert wird,

so dass sich ein Klebeband ergibt.

**17.** Verfahren zur Herstellung eines Klebebands gemäß einem der Ansprüche 1 oder 5 bis 15, bei dem eine Dispersion auf Basis von, vorzugsweise unvernetztem, Polyurethan

(a) auf einen temporären Träger beschichtet und getrocknet wird und der sich ergebende wie in einem der Ansprüche 1 oder 5 bis 9 definierte Träger mindestens einseitig, vorzugsweise beidseitig, mit einer Haftklebemasse kombiniert wird, oder
(b) auf eine Haftklebemasseschicht beschichtet und getrocknet wird, so dass sich ein Träger ergibt, der wie in einem der Ansprüche 1 oder 5 bis 9 definiert ist, wobei vorzugsweise der Träger auf der der Haftklebemasseschicht gegenüber liegenden Seite mit einer weiteren Haftklebemasse kombiniert wird,

so dass sich ein Klebeband ergibt.

**18.** Verfahren nach Anspruch 16 oder 17, bei dem der Träger mit der Haftklebemasse kombiniert wird, indem der Träger mit einer Haftklebemasseschicht bestehend aus der Haftklebemasse kaschiert wird.

**19.** Verfahren nach einem der Ansprüche 16 bis 18, bei dem der Träger auf einen temporären Träger aufgebracht wird und anschließend mindestens einseitig, vorzugsweise beidseitig, mit einer Haftklebemasseschicht kaschiert wird.

**20.** Verfahren nach einem der Ansprüche 16 bis 18, bei dem der Träger auf eine Haftklebemasseschicht aufgebracht wird und gleichzeitig der Träger auf der der Haftklebemasseschicht gegenüber liegenden Seite mit einer weiteren Haftklebemasseschicht kombiniert wird.

**21.** Verfahren nach Anspruch 16 oder 17, bei dem der Träger mit der Haftklebemasse kombiniert wird, indem die Haftklebemasse direkt auf den Träger beschichtet wird, wobei die Haftklebemasse typischerweise

(a) als Lösung auf den Träger beschichtet und getrocknet wird, oder
(b) als plastische Schmelze auf den Träger extrudiert wird.

**22.** Verwendung eines Klebebands gemäß einem der Ansprüche 1 bis 15 zur Verklebung von Bauteilen in elektrischen, elektronischen, optischen oder feinmechanischen Geräten, wie insbesondere von Fenstern oder Linsen in Gehäusen feinmechanischer, optischer und/oder elektronischer Geräte.

Figur 1:

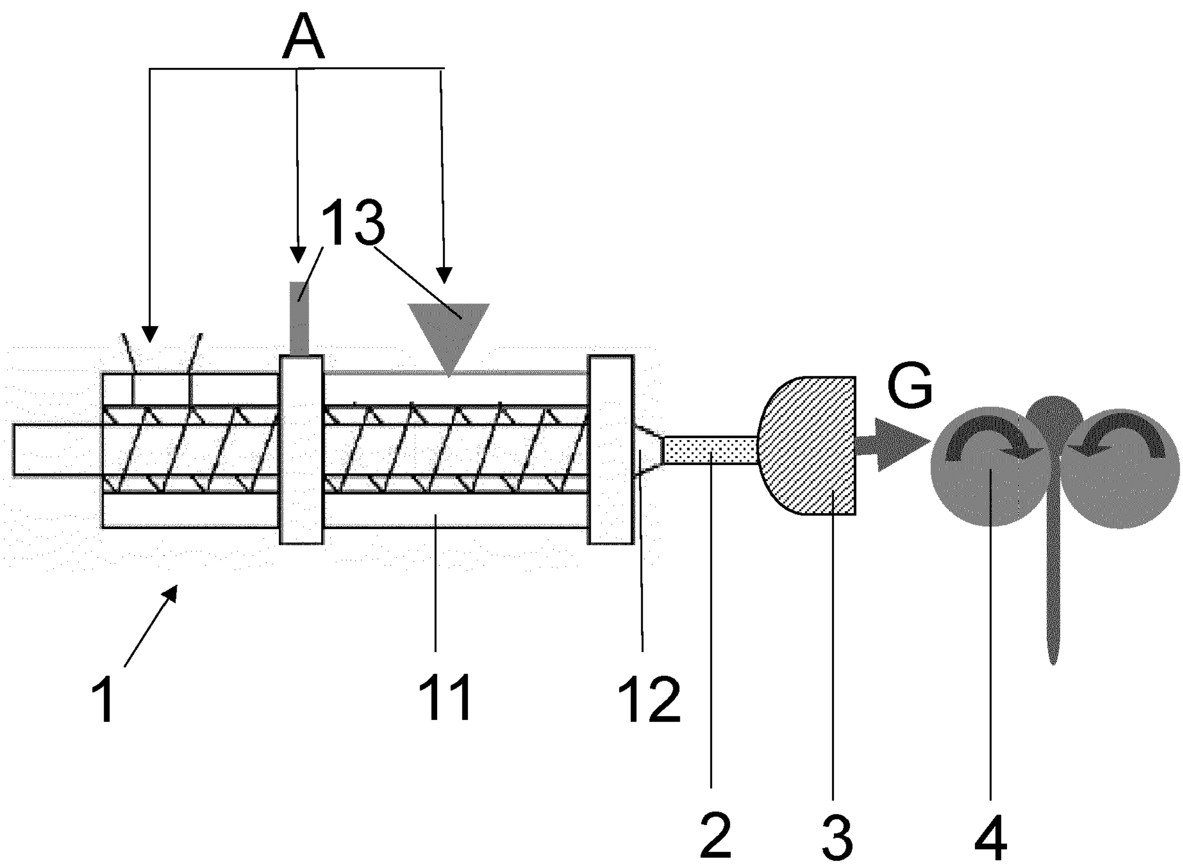


Figur 2:

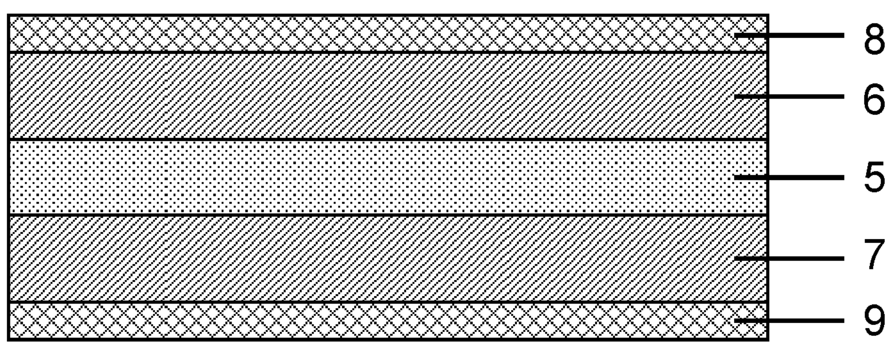

Europäisches Patentamt
European Patent Office
Office européen des brevets

# EUROPÄISCHER RECHERCHENBERICHT

Nummer der Anmeldung
EP 21 19 2047

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 20 2013 012788 U1 (TESA SE [DE]) 29. August 2019 (2019-08-29) * Absatz [0054]; Ansprüche 1-37; Beispiel 4 * | 1-10, 16-22 | INV. C09J7/25 C09J7/26 C09J7/38 |
| A | COVESTRO: "Product Information Platilon® UHighly Elastic Polyurethane Films", , 8. Dezember 2016 (2016-12-08), Seiten 1-4, XP002805067, Gefunden im Internet: URL:file:///C:/Users/PS22203/Downloads/1561582168%20(7).pdf [gefunden am 2021-12-15] * Seite 1 * | 1-22 | |
| X,D | EP 3 623 400 A1 (TESA SE [DE]) 18. März 2020 (2020-03-18) * Absätze [0017] - [0019], [0080], [0096]; Ansprüche 1-20; Beispiele 3,4 * | 1-22 | |

| RECHERCHIERTE SACHGEBIETE (IPC) |
|---|
| C09J |

1 Der vorliegende Recherchenbericht wurde für alle Patentansprüche erstellt

| Recherchenort | Abschlußdatum der Recherche | Prüfer |
|---|---|---|
| München | 15. Dezember 2021 | Sperry, Pascal |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 21 19 2047

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-12-2021

| Im Recherchenbericht angeführtes Patentdokument | Datum der Veröffentlichung | Mitglied(er) der Patentfamilie | Datum der Veröffentlichung |
|---|---|---|---|
| DE 202013012788 U1 | 29-08-2019 | KEINE | |
| EP 3623400 A1 | 18-03-2020 | CN 110903453 A | 24-03-2020 |
| | | DE 102018215651 A1 | 19-03-2020 |
| | | EP 3623400 A1 | 18-03-2020 |
| | | US 2020091472 A1 | 19-03-2020 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102012223670 A1
- DE 102015206076 A1
- EP 3075772 A1
- EP 3623400 A1
- WO 2015135134 A1
- WO 2020035761 A1
- KR 101680827 B1
- US 2017121573 A1
- DE 102016209707 A1
- DE 4313008 A1


### In der Beschreibung aufgeführte Nicht-Patentliteratur


- **T.G. FOX.** *Bull. Am. Phys. Soc.,* 1956, vol. 1, 123
- *CHEMICAL ABSTRACTS,* 63738-22-7